(19) Europäisches Patentamt
European Patent Office
Office européen des brevets

(11) EP 4 633 145 A1

(12) **EUROPEAN PATENT APPLICATION**

(43) Date of publication:
**15.10.2025 Bulletin 2025/42**

(21) Application number: **24305570.4**

(22) Date of filing: **09.04.2024**

(51) International Patent Classification (IPC):
***H04N 19/11** (2014.01)* ***H04N 19/119** (2014.01)*
***H04N 19/176** (2014.01)* ***H04N 19/593** (2014.01)*
***H04N 19/70** (2014.01)*

(52) Cooperative Patent Classification (CPC):
**H04N 19/11; H04N 19/119; H04N 19/176; H04N 19/593; H04N 19/70**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
- **DUMAS, Thierry**
  **35700 RENNES (FR)**
- **GALPIN, Franck**
  **35235 THORIGNE-FOUILLARD (FR)**
- **BORDES, Philippe**
  **35890 LAILLE (FR)**
- **LE GUYADEC, Pascal**
  **35760 SAINT GREGOIRE (FR)**

(74) Representative: **Interdigital**
**Immeuble ZEN 2**
**845 A, avenue des Champs Blancs**
**35510 Cesson-Sévigné (FR)**

(54) **METHOD AND APPARATUS ADAPTING INTRA-SUB-PARTITIONS TO NEURAL NETWORK BASED INTRA PREDICTION**

(57) In various implementations, method and devices are disclosed that adapts the Intra Sub-Partition (ISP) process to Neural Network (NN) based intra prediction. For instance, restrictions are defined depending on some parameters of the current block, such as the size, and the design of the NN-based intra prediction when combining ISP and NN-based intra prediction. For instance, in a first embodiment, for a signaled NN-based intra prediction mode, the signaling of the split mode of ISP may include these restrictions. For instance, in a second embodiment, for conventional intra prediction modes replaced by NN-based intra prediction, the rules for replacing a conventional intra prediction mode by a NN-based intra prediction may include these restrictions.

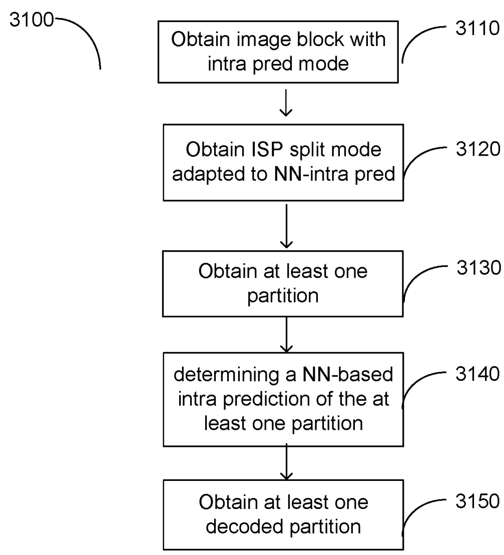


FIG. 31



Processed by Luminess, 75001 PARIS (FR)

## Description

### TECHNICAL FIELD

The present embodiments generally relate to a method and an apparatus for video encoding/decoding that adapts the Intra Sub-Partition (ISP) process to Neural Network (NN) based intra prediction.

### BACKGROUND

To achieve high compression efficiency, image and video coding schemes usually employ prediction and transform to leverage spatial and temporal redundancy in the video content. Generally, intra or inter prediction is used to exploit the intra or inter picture correlation, then the differences between the original block and the predicted block, often denoted as prediction errors or prediction residuals, are transformed, quantized, and entropy coded. To reconstruct the video, the compressed data are decoded by inverse processes corresponding to the entropy coding, quantization, transform, and prediction.

### SUMMARY

In various implementations, methods and devices are disclosed that adapts the Intra Sub-Partition (ISP) process to Neural Network (NN) based intra prediction.

According to a first aspect, a method of video encoding is disclosed that comprises determining an image block associated to an intra prediction mode; obtaining an ISP split mode to apply for encoding the image block, the ISP split mode being adapted to a neural network-based intra prediction mode; partitioning the image block into at least one partition according to the ISP mode; determining a NN-based intra prediction of the at least one partition using at least one neural network applied to a context comprising pixels adjacent to the at least one partition; obtaining a residue of the at least one partition based on the at least one partition and the intra prediction of the at least one partition; and encoding the image block based on the residue of the at least one partition.

According to a second aspect, a method of video decoding is disclosed that comprises determining an image block associated to an intra prediction mode; obtaining an ISP split mode to apply for decoding the image block, the ISP split mode being adapted to a neural network-based intra prediction mode; partitioning the image block into at least one partition according to the ISP mode; determining a NN-based intra prediction of the at least one partition using at least one neural network applied to a context comprising pixels adjacent to the at least one partition; obtaining a residue of the at least one partition; and obtaining at least one decoded partition based on the intra prediction of the at least one partition and the residue of the at least one partition; wherein the at least one decoded partition is part of a decoded image block.

According to a first embodiment, the intra prediction mode is signaled with a flag (NN_flag) indicating that the image block is coded with a NN-based intra prediction.

According to a second embodiment, one or more the conventional intra prediction modes is substitutable with a NN-based intra prediction mode and an index is signaled indicating a current intra prediction mode substituted with a NN-based intra prediction mode among a plurality of intra prediction modes.

One or more embodiments also provide an apparatus for encoding/decoding video comprising one or more processors and at least one memory coupled to said one or more processors, wherein said one or more processors are configured to perform the encoding method according to any of the embodiments described herein.

One or more embodiments also provide a computer program comprising instructions which when executed by one or more processors cause the one or more processors to perform the encoding method according to any of the embodiments described herein. One or more of the present embodiments also provide a computer readable storage medium having stored thereon instructions for encoding or decoding a video according to the methods described herein.

One or more embodiments also provide a computer readable storage medium having stored thereon video data generated according to the methods described above. One or more embodiments also provide a method and apparatus for transmitting or receiving the video data generated according to the methods described herein.

### BRIEF DESCRIPTION OF THE DRAWINGS

FIG. 1 illustrates a block diagram of a system within which aspects of the present embodiments may be implemented.
FIG. 2 illustrates a block diagram of an embodiment of a video encoder.
FIG. 3 illustrates a block diagram of an embodiment of a video decoder.
FIG. 4 illustrates an example of split of a luma block via ISP.

FIG. 5 illustrates the signaling of splitMode for a $w \times h$ luma CB at a VVC decoder.
FIG. 6 illustrates an example of neural network-based intra prediction process according to a particular embodiment.
FIG. 7 illustrates an example of NN based-intra prediction mode signaling in luma according to a particular embodiment.
FIG. 8A and 8B illustrate an example of ISP and intra prediction mode signaling and processing according to a first embodiment.
FIG. 9 and 10 illustrate examples of the reading of the ISP split mode according to the first embodiment.
FIG. 11 illustrates an example of a Generalized Quadtree ISP Split according to a particular embodiment.
FIG. 12A and 12B illustrate other example of the reading of the ISP split mode according to the first embodiment.
FIG. 13 illustrates an example of a downsampling and/or transposing the context of a block with an NN intra prediction mode according to a particular embodiment.
FIG. 14 illustrates an example of a transposing and/or downsampling the context of a block with an NN intra prediction mode according to a particular embodiment.
FIG. 15 illustrate an example of ISP and intra prediction mode processing according to a second embodiment.
FIG. 16 illustrates the derivation of the substitution of an intra prediction mode by a NN-based prediction mode according to an embodiment.
FIG 17 and 18 illustrate an example of transform indices and/or representation mode indices set at the sub-partition level according to an embodiment.
FIG. 19 illustrates an example of the neighboring position for derivation of a MPM according to an embodiment.
FIG. 20 and FIG. 21 illustrate the derivation of the list of MPMs of a given block according to an embodiment.
FIG. 22, FIG. 23, and FIG. 24 illustrate a block and its neighboring blocks for the derivation of the list of MPMs of a given block according to variant embodiments.
FIG. 25 illustrates the derivation of DM of a given block according to an embodiment.
FIG. 26 and FIG. 27 illustrate luma and chroma blocks for the derivation of the DM according to variant embodiments.
FIG. 28 illustrates a method for NN-based intra prediction with truncation of some operations according to an embodiment.
FIG. 29 and FIG. 30 illustrate examples of neural network-based intra prediction process with truncation of some operations according to a particular embodiment.
FIG. 31 illustrates a method for decoding a video according to an embodiment.
FIG. 32 illustrates a method for encoding a video according to an embodiment.

## DETAILED DESCRIPTION

FIG. 1 illustrates a block diagram of an example of a system in which various aspects and embodiments can be implemented. System 100 may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 100, singly or in combination, may be embodied in a single integrated circuit, multiple ICs, and/or discrete components. For example, in at least one embodiment, the processing and encoder/decoder elements of system 100 are distributed across multiple ICs and/or discrete components. In various embodiments, the system 100 is communicatively coupled to other systems, or to other electronic devices, via, for example, a communications bus or through dedicated input and/or output ports. In various embodiments, the system 100 is configured to implement one or more of the aspects described in this application.

The system 100 includes at least one processor 110 configured to execute instructions loaded therein for implementing, for example, the various aspects described in this application. Processor 110 may include embedded memory, input output interface, and various other circuitries as known in the art. The system 100 includes at least one memory 120 (e.g., a volatile memory device, and/or a non-volatile memory device). System 100 includes a storage device 140, which may include non-volatile memory and/or volatile memory, including, but not limited to, EEPROM, ROM, PROM, RAM, DRAM, SRAM, flash, magnetic disk drive, and/or optical disk drive. The storage device 140 may include an internal storage device, an attached storage device, and/or a network accessible storage device, as non-limiting examples.

System 100 includes an encoder/decoder module 130 configured, for example, to process data to provide an encoded video or decoded video, and the encoder/decoder module 130 may include its own processor and memory. The encoder/decoder module 130 represents module(s) that may be included in a device to perform the encoding and/or decoding functions. As is known, a device may include one or both of the encoding and decoding modules. Additionally, encoder/decoder module 130 may be implemented as a separate element of system 100 or may be incorporated within processor 110 as a combination of hardware and software as known to those skilled in the art.

Program code to be loaded onto processor 110 or encoder/decoder 130 to perform the various aspects described in this application may be stored in storage device 140 and subsequently loaded onto memory 120 for execution by processor 110. In accordance with various embodiments, one or more of processor 110, memory 120, storage device 140, and encoder/decoder module 130 may store one or more of various items during the performance of the processes described in this application. Such stored items may include, but are not limited to, the input video, the decoded video or portions of the decoded video, the bitstream, matrices, variables, and intermediate or final results from the processing of equations, formulas, operations, and operational logic.

In several embodiments, memory inside of the processor 110 and/or the encoder/decoder module 130 is used to store instructions and to provide working memory for processing that is needed during encoding or decoding. In other embodiments, however, a memory external to the processing device (for example, the processing device may be either the processor 110 or the encoder/decoder module 130) is used for one or more of these functions. The external memory may be the memory 120 and/or the storage device 140, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for video coding and decoding operations, such as for MPEG-2, HEVC, or VVC.

The input to the elements of system 100 may be provided through various input devices as indicated in block 105. Such input devices include, but are not limited to, (i) an RF portion that receives an RF signal transmitted, for example, over the air by a broadcaster, (ii) a Composite input terminal, (iii) a USB input terminal, and/or (iv) an HDMI input terminal.

In various embodiments, the input devices of block 105 have associated respective input processing elements as known in the art. For example, the RF portion may be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which may be referred to as a channel in certain embodiments, (iv) demodulating the down converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements may include inserting elements in between existing elements, for example, inserting amplifiers and an analog-to-digital converter. In various embodiments, the RF portion includes an antenna.

Additionally, the USB and/or HDMI terminals may include respective interface processors for connecting system 100 to other electronic devices across USB and/or HDMI connections. It is to be understood that various aspects of input processing, for example, Reed-Solomon error correction, may be implemented, for example, within a separate input processing IC or within processor 110 as necessary. Similarly, aspects of USB or HDMI interface processing may be implemented within separate interface ICs or within processor 110 as necessary. The demodulated, error corrected, and demultiplexed stream is provided to various processing elements, including, for example, processor 110, and encoder/-decoder 130 operating in combination with the memory and storage elements to process the datastream as necessary for presentation on an output device.

Various elements of system 100 may be provided within an integrated housing, Within the integrated housing, the various elements may be interconnected and transmit data therebetween using suitable connection arrangement 115, for example, an internal bus as known in the art, including the I2C bus, wiring, and printed circuit boards.

The system 100 includes communication interface 150 that enables communication with other devices via communication channel 190. The communication interface 150 may include, but is not limited to, a transceiver configured to transmit and to receive data over communication channel 190. The communication interface 150 may include, but is not limited to, a modem or network card and the communication channel 190 may be implemented, for example, within a wired and/or a wireless medium.

Data is streamed to the system 100, in various embodiments, using a Wi-Fi network such as IEEE 802. 11. The Wi-Fi signal of these embodiments is received over the communications channel 190 and the communications interface 150 which are adapted for Wi-Fi communications. The communications channel 190 of these embodiments is typically connected to an access point or router that provides access to outside networks including the Internet for allowing streaming applications and other over-the-top communications. Other embodiments provide streamed data to the system 100 using a set-top box that delivers the data over the HDMI connection of the input block 105. Still other embodiments provide streamed data to the system 100 using the RF connection of the input block 105.

The system 100 may provide an output signal to various output devices, including a display 165, speakers 175, and other peripheral devices 185. The other peripheral devices 185 include, in various examples of embodiments, one or more of a stand-alone DVR, a disk player, a stereo system, a lighting system, and other devices that provide a function based on the output of the system 100. In various embodiments, control signals are communicated between the system 100 and the display 165, speakers 175, or other peripheral devices 185 using signaling such as AV. Link, CEC, or other communications protocols that enable device-to-device control with or without user intervention. The output devices may be communicatively coupled to system 100 via dedicated connections through respective interfaces 160, 170, and 180. Alternatively, the output devices may be connected to system 100 using the communications channel 190 via the communications interface 150. The display 165 and speakers 175 may be integrated in a single unit with the other components of system 100 in an electronic device, for example, a television. In various embodiments, the display interface 160 includes a display driver, for example, a timing controller (T Con) chip.

The display 165 and speaker 175 may alternatively be separate from one or more of the other components, for example, if the RF portion of input 105 is part of a separate set-top box. In various embodiments in which the display 165 and speakers 175 are external components, the output signal may be provided via dedicated output connections, including, for example, HDMI ports, USB ports, or COMP outputs.

FIG. 2 illustrates an example video encoder 200, such as a VVC (Versatile Video Coding) encoder. FIG. 2 may also illustrate an encoder in which improvements are made to the VVC standard or an encoder employing technologies similar to VVC.

In the present application, the terms "reconstructed" and "decoded" may be used interchangeably, the terms "encoded" or "coded" may be used interchangeably, and the terms "image," "picture" and "frame" may be used interchangeably. Usually, but not necessarily, the term "reconstructed" is used at the encoder side while "decoded" is used at the decoder side.

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression. Metadata can be associated with the pre-processing, and attached to the bitstream (for example in the form of supplemental enhancement information (SEI) messages, for AVC, HEVC, and VVC standards).

In the encoder 200, a picture is encoded by the encoder elements as described below. The picture to be encoded is partitioned (202) and processed in units of, for example, CUs. Each unit is encoded using, for example, either an intra or inter mode. When a unit is encoded in an intra mode, it performs intra prediction (260). In an inter mode, motion estimation (275) and compensation (270) are performed. The encoder decides (205) which one of the intra mode or inter mode to use for encoding the unit, and indicates the intra/inter decision by, for example, a prediction mode flag. After prediction, prediction enhancement (285) is applied to the prediction block. Prediction residuals are calculated, for example, by subtracting (210) the predicted block from the original image block.

The prediction residuals are then transformed (225) and quantized (230). The quantized transform coefficients, as well as motion vectors and other syntax elements, are entropy coded (245) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (240) and inverse transformed (250) to decode prediction residuals. Combining (255) the decoded prediction residuals and the predicted block, an image block is reconstructed. In-loop filters (265) are applied to the reconstructed picture to perform, for example, deblocking/SAO (Sample Adaptive Offset) filtering to reduce encoding artifacts. The filtered image is stored at a reference picture buffer (280).

FIG. 3 illustrates a block diagram of an example video decoder 300. In the decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder includes a video bitstream, which can be generated by video encoder 200. The bitstream is first entropy decoded (330) to obtain transform coefficients, motion vectors, and other coded information. The picture partition information indicates how the picture is partitioned. The decoder may therefore divide (335) the picture according to the decoded picture partitioning information. The transform coefficients are de-quantized (340) and inverse transformed (350) to decode the prediction residuals. Combining (355) the decoded prediction residuals and the predicted block, an image block is reconstructed. The predicted block can be obtained (370) from intra prediction (360) or motion-compensated prediction (i.e., inter prediction) (375). After prediction, prediction enhancement (390) is applied to the prediction block. In-loop filters (365) are applied to the reconstructed image. The filtered image is stored at a reference picture buffer (380).

The decoded picture can further go through post-decoding processing (385), for example, an inverse color transform (e.g., conversion from YCbCr 4:2:0 to RGB 4:4:4) or an inverse remapping performing the inverse of the remapping process performed in the pre-encoding processing (201). The post-decoding processing can use metadata derived in the pre-encoding processing and signaled in the bitstream.

Recent additions to video compression technology include various industry standards, versions of the reference software and/or documentations such as Enhanced Compression Model (ECM) being developed by the JVET (Joint Video Exploration Team) group. The aim is to make further improvements to the existing VVC (Versatile Video Coding) standard and VSEI specification.

For instance, VVC introduces the Intra Sub-Partition (ISP) intra prediction mode that splits luma intra-predicted blocks either horizontally or vertically into equal size sub-partitions containing at least 16 samples. FIG. 4 illustrates an example of split of a luma block via ISP, for instance implemented in VVC. For a given $w \times h$ luma block, for the horizontal split, the dimensions of the sub-partitions will be $w \times (h/t)$. For the vertical split, the dimensions of the sub-partitions will be $(w/t) \times h,\ t \in \mathbb{N}^*$ denoting the number of sub-partitions. $t$ is equal to 4, except in the following two cases. In the first case, since all sub-partitions must contain at least 16 samples, a $8 \times 4$ luma block can only be split vertically into 2 sub-partitions. For the same reason, a $4 \times 8$ luma block can only be split horizontally into 2 sub-partitions. For the same reason, $4 \times 4$ luma blocks cannot be split. In the second case, as the maximum transform size is 64 in VVC, $128 \times 128$ luma blocks cannot be split. For similar reason, $128 \times h$ luma blocks cannot be split horizontally, $h \leq 64$. For similar reason, $w \times 128$ luma blocks cannot be split vertically, $w \leq 64$.

When ISP splits a given luma block, each resulting sub-partition is processed in a similar way as any intra-predicted block in VVC. This means that, at the encoder side, for a given sub-partition in a given luma block using ISP, first, a prediction and a residual signal are created. Then, the residual is transformed, quantized, and entropy coded. Finally, the non-zero coefficients are sent to the decoder. Following the processing of each sub-partition, its reconstructed samples can be used to calculate the prediction signal of the next sub-partition. All sub-partitions within a luma block split via ISP share the same intra prediction mode. Therefore, for a given luma block using ISP, the intra prediction mode is signaled once.

Note that, because of throughput issue, the intra prediction applied to a sub-partition of width strictly smaller than 4 is not allowed in VVC. Thus, if a luma block is split via ISP into sub-partitions having widths strictly smaller than 4, the intra prediction is run on a luma block of width 4 corresponding to merged sub-partitions. For instance, if a $4 \times 16$ luma block is split vertically into 4 $1 \times 16$ sub-partitions, the intra prediction is run once on the $4 \times 16$ luma block.

In VVC, ISP cannot be combined with Multiple Reference Line (MRL). Besides, ISP cannot be combined with Matrix-based Intra prediction (MIP). For a given luma Coding Block (CB), the split mode of ISP belongs to:

$$\text{splitMode} \in \left\{\begin{array}{l}\text{NOT_INTRA_SUBPARTITIONS,}\\ \text{HOR_INTRA_SUBPARTITIONS,}\\ \text{VER_INTRA_SUBPARTITIONS}\end{array}\right\}$$

and the split mode of ISP is signaled after MRL and before the index of the intra prediction mode selected to predict this CB. NOT_INTRA_SUBPARTITIONS indicates this luma CB is not split as shown in example (a) of FIG. 4. HOR_INTRA_SUBPARTITIONS tells that this luma CB is split horizontally as shown in example (b) of FIG. 4. VER_INTRA_SUBPARTITIONS tells that this luma CB is split vertically as shown in example (c) of FIG. 4.

FIG. 5 illustrates the signaling of splitMode for a $w \times h$ luma CB at a VVC decoder. In FIG. 5, it is assumed that it is already known that MIP is not selected to predict this luma CB. $\text{multiRefIdx} \in [\![0, 2]\!]$ is the MRL index, multiRefIdx = 0 indicates that MRL is not used for this luma CB. maxTbSize denotes the maximum transform size, being 64 in VVC. decodeBin reads a bin from the bitstream. Ctx :: ISPMode(0) and Ctx :: ISPMode(1) show that the two presented calls to decodeBin involve two different CABAC context indices.

In the hybrid block-based video codec testing conventional video coding tools on top of VVC, i.e. the Enhanced Compression Model (ECM), ISP works similarly as in VVC. The only minor difference lies in its signaling as new intra prediction tools have appeared from VVC to ECM. For a given luma CB, ISP can be combined with neither Template Matching Prediction (TMP) nor Decoder side Intra Mode Derivation (DIMD) nor Spatial Geometric Partition Mode (SGPM) nor Template-based Multiple Reference Line intra prediction (TMRL) nor Extrapolation-based Intra Prediction (EIP). However, ISP can be used together with Template-based Intra Mode Derivation (TIMD). The TIMD flag is signaled before the split mode of ISP. The signaling of the split mode of ISP for a $w \times h$ luma CB at the ECM decoder corresponds to that in FIG. 5 except that the CABAC context indices depend on the value of the already read TIMD flag.

Recent additions to video compression technology include neural network-based intra prediction. In the present document, the broadest definition of the neural network-based intra prediction is used. That is "neural network-based intra prediction" refers to an intra prediction tool in which a series of one or several layers, a layer containing an affine (or linear) transformation optionally followed by a non-linear function, computes a prediction of the current block from already reconstructed pixels around the current block. Under this definition, the neural network-based intra prediction and the matrix-based intra prediction as described hereafter are two examples of "neural network-based intra prediction".

In the hybrid block-based video codec testing neural networks for video coding on top of VVC, called Neural Network Video Coding (NNVC), a first example of the neural network (NN)-based intra prediction is inferred. FIG. 6 illustrates an example of neural network-based intra prediction process according to a particular embodiment. The NN-based intra prediction mode contains 7 neural networks, each predicting blocks of a different size in {4 × 4, 8 × 4,16 × 4,32 × 4,8 × 8,16 × 8,16 × 16}. The neural network predicting blocks of size $w \times h$ is denoted $f_{h,w}(.;\theta_{h,w})$ where $\theta_{h,w}$ gathers its parameters. For a given $w \times h$ block $\boldsymbol{Y}$, $f_{h,w}(.;\theta_{h,w})$ takes a preprocessed version $\tilde{\boldsymbol{X}}$ of the context $\boldsymbol{X}$ made of $n_a$ rows of $n_l + 2w + e_w$ reference samples located above this block and $n_l$ columns of $2h + e_h$ reference samples on its left side to provide $\tilde{\boldsymbol{Y}}$. The application of a postprocessing to $\tilde{\boldsymbol{Y}}$ yields a prediction $\hat{\boldsymbol{Y}}$ of $\boldsymbol{Y}$ as shown in FIG. 6. Besides, $f_{h,w}(.;\theta_{h,w})$ returns two indices $grpIdx_1$ and $grpIdx_2$. $grpIdx_i$ denotes the index characterizing the Low Frequency Non-Separable Transform (LFNST) set index and whether the primary transform coefficients resulting from the application of the Discrete Cosine Transform (DCT)-2 horizontally and the DCT-2 vertically to the residue of the neural network prediction are transposed when lfnstIdx = $i$, $i \in \{1, 2\}$ as also shown in FIG. 6. lfnstIdx denotes the LFNST index. lfnstIdx = 0 indicates that LFNST is not used for coding **Y.** lfnstIdx $\in \{1, 2\}$ means that LFNST is used for coding **Y,** involving the kernel of index lfnstIdx - 1 inside the LFNST set of given index. Furthermore, $f_{h,w}(.;\theta_{h,w})$ gives the index $\text{repIdx} \in [\![0, 66]\!]$ of the VVC intra prediction mode (PLANAR or DC or directional intra prediction mode) whose prediction of $\boldsymbol{Y}$ from the reference samples surrounding $\boldsymbol{Y}$ best represents $\hat{\boldsymbol{Y}}$.

For the current $w \times h$ luma CB whose top-left pixel is at position (x,y) in the current luma channel, the intra prediction mode signaling in luma is split into two cases. FIG. 7 illustrates an example of NN-based intra prediction mode signaling in luma according to a particular embodiment. In the case where $w \times h \in T$, $T$ being the set of block sizes for which a NN in the NN-based intra prediction mode exists for prediction, nnFlag appears in the intra prediction mode signaling in luma. For instance, T = {4×4, 4×8, 8×4, 4×16, 16×4, 4×32, 32×4, 8×8, 8×16, 16×8, 8×32, 32×8, 16×16, 16×32, 32×16, 32×32, 64×64}. nnFlag =1 means that the NN-based intra prediction mode is selected to predict the current luma CB and END. nnFlag =0 means that the NN-based intra prediction mode is not selected to predict the current luma CB, then the regular intra prediction mode signaling in luma, denoted $S_{\subset}$, applies. In the other case where $w \times h \notin T$, the regular intra prediction mode signaling in luma $S_{\subset}$ applies. Note that, in the case "w×h∈T && nnFlag =1", if the context of the current luma CB goes out of the bounds of the current luma channel, i.e $x < n_l \,||\, y < n_a$, the NN-based intra prediction is replaced by PLANAR.

For the current pair of $w \times h$ chroma CBs having top-left pixel at position (x,y) in the current pair of chroma channels, the intra prediction mode signaling in chroma is split into two cases. In the case where the luma CB collocated with this pair of chroma CBs is predicted by the NN-based intra prediction mode, then if $w \times h \in T$, the Direct Mode (DM) becomes the NN-based intra prediction mode, otherwise, the DM is set to PLANAR. In the other case where the luma CB collocated with this pair of chroma CBs is not predicted by the NN-based intra prediction mode, then if $w \times h \in T$, nnFlagChroma appears in the intra prediction mode signaling in chroma. nnFlagChroma is placed before the DM flag in the decision tree of the intra prediction mode signaling in chroma. nnFlagChroma =1 means that the NN-based intra prediction mode is selected to predict the current pair of chroma CBs and END. nnFlagChroma =0 means that the NN-based intra prediction mode is not selected to predict the current pair of chroma CBs, then the regular intra prediction mode signaling in chroma resumes from the DM flag. Otherwise, if $w \times h \notin T$, the regular intra prediction mode signaling in chroma applies.

As for Luma, note that, in the case where "w×h∈Tand the DM becomes the NN based intra prediction mode" and the case where "w×h∈T && nnFlagChroma =1", if the context of the current chroma CB goes out of the bounds of the current chroma channel, i.e. $x < n_l \,||\, y < n_a$ the NN-based intra prediction is replaced by PLANAR.

Besides, neural network prediction may involve transformation of the context. For instance, for a given $w \times h$ block, if $w \times h \in T$, it is possible that the NN-based intra prediction mode must predict this block, but the NN-based intra prediction mode does not contain $f_{h,w}(.;\theta_{h,w})$. In this case, the context of the current block can be down-sampled vertically by a factor $\delta$ and/or down-sampled horizontally by a factor $\gamma$ and/or transposed before the step called "preprocessing" in FIG. 6. Then, the prediction of the current block can be transposed and/or up-sampled vertically by the factor $\delta$ and/or up-sampled horizontally by the factor $\gamma$ after the step called "postprocessing" in FIG. 6. The transposition of the context of the current block and the prediction, $\delta$, and $\gamma$ are chosen so that a neural network belonging to the NN-based intra prediction mode is used for prediction, see Table 1.

*Table 1: decision of transposing the context of the current **w** × **h** block to be predicted and the prediction of this block, the value of $\gamma$, and the value of $\delta$, and the neural network belonging to the NN-based intra prediction mode used for prediction for each **w** × **h** ∈ **T.***

| $w \times h$ | transposition | $\gamma$ | $\delta$ | NN used for prediction |
|---|---|---|---|---|
| 4 × 4 | no | 1 | 1 | $f_{4,4}(.,\theta_{4,4})$ |
| 8 × 4 | no | 1 | 1 | $f_{4,8}(.,\theta_{4,8})$ |

(continued)

| $w \times h$ | transposition | $\gamma$ | $\delta$ | NN used for prediction |
|---|---|---|---|---|
| 4 × 8 | yes | 1 | 1 | $f_{4,8}(.,\theta_{4,8})$ |
| 16 × 4 | no | 1 | 1 | $f_{4,16}(.,\theta_{4,16})$ |
| 4 × 16 | yes | 1 | 1 | $f_{4,16}(.,\theta_{4,16})$ |
| 32 × 4 | no | 1 | 1 | $f_{4,32}(.,\theta_{4,32})$ |
| 4 × 32 | yes | 1 | 1 | $f_{4,32}(.,\theta_{4,32})$ |
| 8 × 8 | no | 1 | 1 | $f_{8,8}(.,\theta_{8,8})$ |
| 16 × 8 | no | 1 | 1 | $f_{8,16}(.,\theta_{8,16})$ |
| 8 × 16 | yes | 1 | 1 | $f_{8,16}(.,\theta_{8,16})$ |
| 32 × 8 | no | 2 | 1 | $f_{8,16}(.,\theta_{8,16})$ |
| 8 × 32 | yes | 1 | 2 | $f_{8,16}(.,\theta_{8,16})$ |
| 16 × 16 | no | 1 | 1 | $f_{16,16}(.,\theta_{16,16})$ |
| 32 × 16 | no | 2 | 1 | $f_{16,16}(.,\theta_{16,16})$ |
| 16 × 32 | no | 1 | 2 | $f_{16,16}(.,\theta_{16,16})$ |
| 32 × 32 | no | 2 | 2 | $f_{16,16}(.,\theta_{16,16})$ |
| 64 × 64 | no | 4 | 4 | $f_{16,16}(.,\theta_{16,16})$ |

In the hybrid block-based video codec testing conventional video coding tools on top of VVC, i.e. the Enhanced Compression Model (ECM), a second example of the neural network (NN)-based intra prediction is matrix-based intra prediction. For a given block to be predicted, weights are multiplied by the reference samples inside L-shape causal neighborhood template around this given block to compute the prediction samples, replacing conventional intra prediction. This L-shape causal neighborhood template is identical to the one on the left-hand side of FIG. 6 when $n_a = n_l = 4$ and $e_h = e_w = 0$. For a given $w \times h$ block to be predicted, denoting the vector of $k \in \mathbb{N}^*$ reference samples in the L-shape causal neighborhood template as $\tilde{\boldsymbol{X}}$ and the matrix of $khw$ weights as $\theta$, the vector $\tilde{\boldsymbol{Y}}$ of $hw$ predicted samples can be computed via the following vector-matrix multiplication:

$$\tilde{\boldsymbol{Y}} = \tilde{\boldsymbol{X}}\boldsymbol{\theta}$$

The replacement of conventional intra prediction modes by matrix-based intra prediction is only enabled for block sizes of $w \leq 16$ and $h \leq 16$, and for modes of indices 0,1, and 2 + 4 * $i$ where $i$ = {0, 1, 2, ..., 16}, i.e., every 4 modes.

Note that, when enabled, as conventional intra prediction modes are replaced by matrix-based intra prediction, no extra signaling is needed.

In ISP in VVC/ECM, as any conventional intra prediction mode (PLANAR, DC, and directional intra prediction modes) can predict any kind of block, during the signaling of the split mode of ISP, no dependency between the parameters of the current luma CB (e.g. position and shape) and the index of the selected intra prediction mode exist. However, in the case of a NN-based intra prediction, some blocks may not be predicted via this NN-based intra prediction. Therefore, when combining ISP and NN-based intra prediction, in the case of a NN-based intra prediction mode signaled similarly to the one in NNVC, the signaling of the split mode of ISP must consider restrictions depending on some parameters of the current block and the design of the NN-based intra prediction mode. When combining ISP and NN-based intra prediction, in the case of conventional intra prediction modes replaced by NN-based intra prediction, as for matrix-based intra prediction in ECM, the rules for replacing a conventional intra prediction mode by a NN-based intra prediction must take into account restrictions depending on some parameters of the current block and the design of the NN-based intra prediction.

Accordingly, the present document proposes to define restrictions depending on some parameters of the current block and the design of the NN-based intra prediction when combining ISP and NN-based intra prediction.

According to a first embodiment, for a NN-based intra prediction mode signaled similarly to the example of NNVC, the signaling of the split mode of ISP may include these restrictions.

According to a second embodiment, for conventional intra prediction modes replaced by NN-based intra prediction, the rules for replacing a conventional intra prediction mode by a NN-based intra prediction may include these restrictions.

In a third embodiment it is proposed to adapt the described ISP split to NN based inference of transform indices and/or representation indices at the sub-partition level.

In a fourth embodiment it is proposed to implement a NN-based intra prediction featuring truncated operation.

## Signaled NN-based intra prediction mode

FIG. 8A and 8B illustrate an example of ISP and intra prediction mode signaling and processing according to a first embodiment. In the first embodiment, in the case of a NN-based intra prediction mode signaled via at least one flag, the signaling of the split mode of ISP may depend on the at least one flag. For instance, at the decoder side of a hybrid block-based video codec, for a given block, first, the flag nnFlag indicating whether the NN-based intra prediction mode is selected to predict this block may be read from the bitstream. Then, if nnFlag = 1, i.e. the NN-based intra prediction mode is selected to predict this block, the split mode of ISP may be read from the bitstream conditioned on restrictions specific to the NN-based intra prediction mode. If nnFlag = 0, i.e. the NN-based intra prediction mode is not selected to predict this block, the split mode of ISP may be read from the bitstream without any of the restrictions specific to the NN-based intra prediction mode.

In a variant of the first embodiment, a restriction is defined for each type of split. For instance, if nnFlag = 1, for each type of split in ISP, it may be determined whether this type of split is allowed for the current block predicted via the NN-based intra prediction mode before reading the split mode of ISP from the bitstream. The reading from the bitstream of the split mode may be conditioned on the determinations of whether these types of splits are allowed for the current block predicted via the NN-based intra prediction mode.

For instance, at the decoder side of a hybrid block-based video codec, for a given widthY $\times$ heightY block $\boldsymbol{Y}$, FIG. 8A depicts the reading from the bitstream of the split mode of ISP whereas FIG. 8B depicts the generation of the reconstruction $\tilde{\boldsymbol{Y}}$ of $\boldsymbol{Y}$.

At step 800, nnFlag indicating whether the NN-based intra prediction mode is selected to predict $\boldsymbol{Y}$ may be read from the bitstream.

At 801, if nnFlag is equal to 1, the process may move on to {802, 803}. Otherwise, the process may advance to 804.

At 802, the set $T$ of block sizes for which a NN in the NN-based intra prediction mode exists for prediction, heightY, and widthY may be taken, among other parameters, to compute isSplitAllowed$_i$, $i \in [\![0, l-1]\!]$. isSplitAllowed$_i$ may tell whether the split mode of index $i$ is allowed for $\boldsymbol{Y}$ predicted by the NN-based intra prediction mode. $l \in \mathbb{N}$ may denote the number of split modes.

At 803, conditioned on $\{\text{isSplitAllowed}_i\}_{i\in[\![0,l-1]\!]}$, the split mode splitMode may be read from the bitstream.

At 804, the index idxPred of the intra prediction mode selected to predict $\boldsymbol{Y}$ and the split mode splitMode may be read from the bitstream.

After several steps linked to the hybrid block-based video codec, the process may move to 805 on FIG. 8B.

At 805, if splitMode is equal to NOT_INTRA_SUBPARTITIONS, the process may get to {806, 807, 808, 809}. Otherwise, the process may go to {810, 811}.

At 806, if nnFlag is equal to 1, the process may move on to 808. Otherwise, the process may get to 807.

At 807, $\boldsymbol{Y}$ may be predicted by the intra prediction mode of index idxPred, yielding $\hat{\boldsymbol{Y}}$.

At 808, $\boldsymbol{Y}$ may be predicted by the NN dedicated to the prediction of blocks of size widthY $\times$ heightY, yielding $\hat{\boldsymbol{Y}}$.

At 809, the decoded residue $\tilde{\boldsymbol{R}}_Y$ may be obtained via entropy decoding and inverse transform(s). Then, $\tilde{\boldsymbol{Y}} = \hat{\boldsymbol{Y}} + \tilde{\boldsymbol{R}}_Y$.

At 810, the area of $\boldsymbol{Y}$ may be split using splitMode, yielding the areas of the sub-partitions $\{\mathbf{Z}_i\}_{i\in[\![0,t-1]\!]}$, $\mathbf{Z}_i$ being of size width$Z_i$ $\times$ height$Z_i$, $i \in [\![0, t-1]\!]$.

At 811, the reconstructed sub-partitions $\{\tilde{\mathbf{Z}}_i\}_{i\in[\![0,t-1]\!]}$ may be successively obtained by looping over {850, 851, 852, 853, 854, 855}.

At 850, the index of sub-partition $i$ may be initialized to 0.

At 851, if nnFlag is equal to 1, the process may move on to 853. Otherwise, the process may go to 852.

At 852, $\mathbf{Z}_i$ may be predicted by the intra prediction mode of index idxPred, yielding $\hat{\boldsymbol{Z}}_i$.

At 853, $\mathbf{Z}_i$ may be predicted by the NN dedicated to the prediction of blocks of size width$Z_i$ $\times$ height$Z_i$, yielding $\hat{\boldsymbol{Z}}_i$.

At 854, the decoded residue $\tilde{\boldsymbol{R}}_{Zi}$ may be obtained via entropy decoding and inverse transform(s). Then, $\mathbf{Z}_i = \hat{\boldsymbol{Z}}_i + \tilde{\boldsymbol{R}}_{Zi}$.

At 855, the process may move on to the decoding of the next sub-partition by going back to 850, incrementing $i$ by 1, and repeating {850, 851, 852, 853, 854, 855}. This loop may end when the last sub-partition is decoded. $\tilde{\boldsymbol{Y}}$ may

correspond to the concatenation of $\{\tilde{\mathbf{Z}}_i\}_{i\in[\![0,t-1]\!]}$.

At 812, the decoding of $\tilde{\boldsymbol{Y}}$ may end.

The skilled in the art will note, that in FIG. 8A and 8B, when nnFlag = 0, a non NN-based intra prediction mode may be defined via its index idxPred. Alternatively, when nnFlag = 0, a non NN-based intra prediction mode may be defined via at least one flag. Alternatively, when nnFlag = 0, a non NN-based intra prediction mode may be defined via a combination of at least one flag and at least one index. In FIG. 8A, the definition of a non NN-based intra prediction mode via its index idxPred is chosen for readability.

The steps 802, 803, 804, 808, and 853 may be specified by subsequent variants.

In another variant of the first embodiment, the signaling is adapted to the types of ISP splits in the latest development of VVC/ECM. For instance, the reading of the split mode splitMode in 804 may correspond to FIG. 9 and 803 may correspond to FIG. 10.

FIG. 9 illustrates a first example of the reading of the ISP split mode according to the first embodiment. In the first example of FIG. 9, the reading 804 from the bitstream of splitMode is shown knowing that **Y** is not predicted by the NN-based intra prediction mode at the decoder side of VVC/ECM.

At 900, for a given widthY × heightY block ***Y*,** the reading from the bitstream of the split mode splitMode knowing that ***Y*** is not predicting by the NN-based intra prediction mode may begin.

At 901, if MRL is used, i.e. multiRefIdx! = 0, or ***Y*** contains less than 16 samples or a dimension of ***Y*** is strictly larger than the maximum transform size, splitMode = NOT_INTRA_SUBPARTITIONS and the process ends END. Otherwise, the process may move on to 902.

At 902, if the decoded bin is 1, the process may go to 903. Otherwise, splitMode = NOT_INTRA_SUBPARTITIONS and the process ends END.

At 903, if the decoded bin is 1, splitMode = VER_INTRA_SUBPARTITIONS and the process ends END. Otherwise, splitMode = HOR_INTRA_SUBPARTITIONS and the process ends END.

FIG. 10 illustrates a second example of the reading of the ISP split mode according to the first embodiment. In the first example of FIG. 10, the reading 803 from the bitstream of the splitMode knowing that **Y** is predicted by the NN-based intra prediction mode at the decoder side of VVC/ECM.

At 1000, for a given widthY × heightY block ***Y*,** the reading from the bitstream of the split mode splitMode knowing that ***Y*** is predicting by the NN-based intra prediction mode may start.

At 1001, if **Y** contains less than 16 samples or a dimension of **Y** is strictly larger than the maximum transform size, splitMode = NOT_INTRA_SUBPARTITIONS and the process ends END. Otherwise, the process may move on to 1002.

At 1002, if horizontal ISP split ($\text{isSplitAllowed}_0$ is false) is not allowed and vertical ISP split ($\text{isSplitAllowed}_1$ is false) is not allowed, splitMode = NOT_INTRA_SUBPARTITIONS and the process ends END. Otherwise, the process may advance to 1003. $\text{isSplitAllowed}_0$ may indicate whether the horizontal ISP split can apply for ***Y*.** $\text{isSplitAllowed}_1$ may indicate whether the vertical ISP split can apply for ***Y*.**

At 1003, if the decoded bin is 1, the process may go to 1004. Otherwise, splitMode = NOT_INTRA_SUBPARTITIONS and the process ends END.

At 1004, if $\text{isSplitAllowed}_0$ is true and $\text{isSplitAllowed}_1$ is true, the process may go to 1005. Otherwise, the process may move to 1006.

At 1005, if the decoded bin is 1, splitMode = VER_INTRA_SUBPARTITIONS and the process ends END. Otherwise, splitMode = HOR_INTRA_SUBPARTITIONS and the process ends END.

At 1006, if $\text{isSplitAllowed}_0$ is true, splitMode = HOR_INTRA_SUBPARTITIONS and the process ends END. Otherwise, splitMode = VER_INTRA_SUBPARTITIONS and the process ends END.

In another variant of the first embodiment, the signaling is adapted to any number of ISP splits and any types of ISP splits. For instance, the generalized quadtree (GQT) split may be added to the list of splits in ISP. Then, the split mode splitMode may belong to { NOT _INTRA_SUBPARTITIONS, HOR_INTRA_SUBPARTITIONS, VER_INTRA_SUBPARTITIONS, GQT_INTRA_SUBPARTITIONS}.

splitMode = GQT_INTRA_SUBPARTITIONS may mean that the generalized quadtree split may apply to the current block. The generalized quadtree split may divide the current block into 4 equal-sized sub-partitions, for instance as shown in FIG. 11.

FIG. 12A and 12B illustrate other examples of the reading of the ISP split mode according to this variant of the first embodiment. For instance, by applying the above split scheme to the embodiment of FIG. 8A and 8B to and disabling the generalized quadtree split when Y is not predicted by the NN-based intra prediction mode, the reading of the split mode splitMode in 804 may correspond to FIG. 9 and 803 may correspond to FIG. 12A and 12B.

On FIG. 12A, at 1200, for a given widthY × heightY block ***Y*,** the reading from the bitstream of the split mode splitMode knowing that ***Y*** is predicting by the NN-based intra prediction mode may begin.

At 1201, if **Y** contains less than 16 samples or a dimension of **Y** is strictly larger than the maximum transform size, splitMode = NOT_INTRA_SUBPARTITIONS and the process ends END. Otherwise, the process may move on to 1202.

At 1202, if $isSplitAllowed_0$ is false and $isSplitAllowed_1$ is false, splitMode = NOT _INTRA_SUBPARTITIONS and END. Otherwise, the process may advance to 1203. $isSplitAllowed_0$ may indicate whether the horizontal ISP split can apply for ***Y.*** $isSplitAllowed_1$ may indicate whether the vertical ISP split can apply for ***Y.*** $isSplitAllowed_2$ may indicate whether the generalized quadtree ISP split can apply for ***Y.*** In a variant, $isSplitAllowed_2$ is forced to false if $isSplitAllowed_0$ is false or $isSplitAllowed_1$ is false.

At 1203, if the decoded bin is 1, the process may go to 1204. Otherwise, splitMode = NOT_INTRA_SUBPARTITIONS and the process ends END.

At 1204, if $isSplitAllowed_0$ is true and $isSplitAllowed_1$ is true, the process may go to 1206 on FIG. 12B. Otherwise, the process may move to 1205.

At 1205, if $isSplitAllowed_0$ is true, splitMode = HOR_INTRA_SUBPARTITIONS and the process ends END. Otherwise, splitMode = VER_INTRA_SUBPARTITIONS and the process ends END.

On Fig. 12B, at 1206, if $isSplitAllowed_2$ is true, the process may move to 1208. Otherwise, the process may go to 1207.

At 1207, if the decoded bin is 1, splitMode = VER_INTRA_SUBPARTITIONS and the process ends END. Otherwise, splitMode = HOR_INTRA_SUBPARTITIONS and the process ends END.

At 1208, if the decoded bin is 1, the process may advance to 1209. Otherwise, splitMode = GQT_INTRA_SUBPARTITIONS and the process ends END.

At 1209, if the decoded bin is 1, splitMode = VER_INTRA_SUBPARTITIONS and the process ends END. Otherwise, splitMode = HOR_INTRA_SUBPARTITIONS and the process ends END.

In yet other variants of the first embodiment detailed hereafter, for a given block predicted by the NN-based intra prediction mode, some parameters of the current block and/or the design of the NN-based intra prediction mode may be involved in the signaling of the split mode of ISP. Moreover, for a given block predicted by the NN-based intra prediction mode, some parameters of the current block and/or the design of the NN-based intra prediction mode may be involved in the selection of the NN for prediction.

For instance, in a variant of the first embodiment, for a given block predicted by the NN-based intra prediction mode, the size of the current block and/or the ISP split types and/or the design of the NN-based intra prediction mode may be involved in the signaling of the split mode of ISP. Moreover, for a given block predicted by the NN-based intra prediction mode, the size of the current block and/or the ISP split types and/or the design of the NN-based intra prediction mode may be involved in the selection of the NN for prediction.

For instance, let $T$ be the set of block sizes for which there exists a NN inside the NN-based intra prediction mode for prediction. Then, by adapting the FIG. 8A and 8B for this variant, for a given widthY $\times$ heightY block ***Y,*** 802 may become as follows. For $i \in [\![0, l-1]\!]$, from heightY, widthY, and the characteristic of the ISP split of index $i$, the height $heightZ_j^{(i)}$ and the width $widthZ_j^{(i)}$ of the sub-partition of index $j$ for the ISP split of index $i$ may be determined, $j \in [\![0, t-1]\!]$. For instance, for $i \in [\![0, l-1]\!]$, $isSplitAllowed_i = heightZ_j^{(i)} \times widthZ_j^{(i)} \in T, \ \forall j \in [\![0, t-1]\!]$, meaning that the type of split of index $i$ may be allowed for ***Y*** predicted by the NN-based intra prediction mode if each sub-partition of **Y** can be predicted by a NN inside the NN-based intra prediction mode. Still in this example, for instance by assuming that the NN $f_{h,w}(. \, ; \theta_{h,w})$ can only predict blocks of size $w \times h$, at 808 of FIG. 8B, the NN used for prediction may be $f_{heightY,widthY}(. \, ; \theta_{heightY,widthY})$. Then, at 853, the NN used for prediction may be $f_{heightZi,widthZi}(. \, ; \theta_{heightZi,widthZi})$.

In another variant of the first embodiment, the signaling is adapted to the types of ISP splits in the latest development of VVC/ECM. For instance, as all the sub-partitions of a block divided via ISP have the same size, for a given widthY $\times$ heightY block ***Y,*** 802 may become as follows where either the height or the width is split by 4.For instance, $heightZ_i^{(0)} = heightY/4$ and $widthZ_i^{(0)} = widthY$, $\forall i \in [\![0,3]\!]$; or $heightZ_i^{(1)} = heightY$ and $widthZ_i^{(1)} = widthY/4$, $\forall i \in [\![0,3]\!]$, ignoring the exceptions detailed with the examples of ISP split in VVC of FIG. 4. Then, $isSplitAllowed_0 = heightZ_i^{(0)} \times widthZ_i^{(0)} \in T$ and $isSplitAllowed_1 = heightZ_i^{(1)} \times widthZ_i^{(1)} \in T$ for any $i \in [\![0,3]\!]$.

Still in this example, for instance by assuming that the NN $f_{h,w}(. \, ; \theta_{h,w})$ can only predict blocks of size $w \times h$, at 808, the NN used for prediction may be $f_{heightY,widthY}(. \, ; \theta_{heightY,widthY})$. Then, at 853, the same NN $f_{heightZi,widthZi}(. \, ; \theta_{heightZi,widthZi})$ may be used for predicting all the sub-partitions of ***Y.*** Note that, for a given widthY $\times$ heightY block ***Y,*** even though 802, 808, and 853 are ruled-based defined hereabove, they may also be defined via a table.

As an example, 802, 808, and 853 may be defined as illustrated in Table 2, using the non-limiting example value $T = \{4 \times 4, 8 \times 4, 16 \times 4, 32 \times 4, 8 \times 8, 16 \times 8, 16 \times 16\}$ In Table

*Table 2: An example of definition of the parameters involved in the signaling of the split mode of ISP and those involved the selection of the NN for prediction according to a variant embodiment.*

| 2, $isSplitAllowed_0$ and $isSplitAllowed_1$ may be associated to the horizontal and vertical splits respectively. | | | | | |
|---|---|---|---|---|---|
| widthY × heightY | NN predicting **Y** | isSplit $Allowed_0$ | NN predicting $\boldsymbol{Z}_i^{(0)}$ | isSplit $Allowed_1$ | NN predicting $\boldsymbol{Z}_i^{(1)}$ |
| 4 × 4 | $f_{4,4}(.\,;\theta_{4,4})$ | false | | false | |
| 4 × 8 | | | | | |
| 8 × 4 | $f_{4,8}(.\,;\theta_{4,8})$ | false | | false | |
| 4 × 16 | | | | | |
| 16 × 4 | $f_{4,16}(.\,;\theta_{4,16})$ | false | | true | $f_{4,4}(.\,;\theta_{4,4})$ |
| 4 × 32 | | | | | |
| 32 × 4 | $f_{4,32}(.\,;\theta_{4,32})$ | false | | true | $f_{4,8}(.\,;\theta_{4,8})$ |
| 4 × 64 | | | | | |
| 64 × 4 | | | | | |
| 8 × 8 | $f_{8,8}(.\,;\theta_{8,8})$ | false | | false | |
| 8 × 16 | | | | | |
| 16 × 8 | $f_{8,16}(.\,;\theta_{8,16})$ | false | | false | |
| 8 × 32 | | | | | |
| 32 × 8 | | | | | |
| 8 × 64 | | | | | |
| 64 × 8 | | | | | |
| 16 × 16 | $f_{16,16}(.\,;\theta_{16,16})$ | true | 14,16 $(.\,;\theta_{4,16})$ | false | |

As another example, 802, 808, 853 may be defined as illustrated in Table 3 with ISP allowed for more block size allowed (i.e 4x8, 4x16, 4X32, 8X16) using the example value $T = \{4 \times 4, 4 \times 8, 8 \times 4, 4 \times 16, 16 \times 4, 4 \times 32, 32 \times 4, 8 \times 8, 8 \times 16, 16 \times 8, 16 \times 16\}$.

*Table 3: An example of definition of the parameters involved in the signaling of the split mode of ISP and those involved the selection of the NN for prediction according to a variant embodiment.*

| widthY × heightY | NN predicting **Y** | isSplit $Allowed_0$ | NN predicting $\boldsymbol{Z}_i^{(0)}$ | isSplit $Allowed_1$ | NN predicting $\boldsymbol{Z}_i^{(1)}$ |
|---|---|---|---|---|---|
| 4 × 4 | $f_{4,4}(.\,;\theta_{4,4})$ | false | | false | |
| 4 × 8 | $f_{8,4}(.\,;\theta_{8,4})$ | false | | false | |
| 8 × 4 | $f_{4,8}(.\,;\theta_{4,8})$ | false | | false | |
| 4 × 16 | $f_{16,4}(.\,;\theta_{16,4})$ | true | $f_{4,4}(.\,;\theta_{4,4})$ | false | |
| 16 × 4 | $f_{4,16}(.\,;\theta_{4,16})$ | false | | true | $f_{4,4}(.\,;\theta_{4,4})$ |
| 4 × 32 | $f_{32,4}(.\,;\theta_{32,4})$ | true | $f_{8,4}(.\,;\theta_{8,4})$ | false | |
| 32 × 4 | $f_{4,32}(.\,;\theta_{4,32})$ | false | | true | $f_{4,8}(.\,;\theta_{4,8})$ |
| 4 × 64 | | | | | |
| 64 × 4 | | | | | |
| 8 × 8 | $f_{8,8}(.\,;\theta_{8,8})$ | false | | false | |
| 8 × 16 | $f_{16,8}(.\,;\theta_{16,8})$ | true | $f_{4,8}(.\,;\theta_{4,8})$ | false | |
| 16 × 8 | $f_{8,16}(.\,;\theta_{8,16})$ | false | | true | $f_{8,4}(.\,;\theta_{8,4})$ |
| 8 × 32 | | | | | |
| 32 × 8 | | | | | |

(continued)

| widthY × heightY | NN predicting **Y** | isSplit Allowed$_0$ | NN predicting $Z_i^{(0)}$ | isSplit Allowed$_1$ | NN predicting $Z_i^{(1)}$ |
|---|---|---|---|---|---|
| 8 × 64 | | | | | |
| 64 × 8 | | | | | |
| 16 × 16 | $f_{16,16}(. ; \theta_{16,16})$ | true | $f_{4,16}(. ; \theta_{4,16})$ | true | $f_{16,4}(. ; \theta_{16,4})$ |

Note that, in Table 2 and Table 3, several possible values of widthY × heightY are not displayed for the sake of conciseness. Yet, for each of these missing values, all the other cells in the same row would be empty as ***Y*** cannot be predicted by a NN in the NN-based intra prediction mode. For instance, at 800 in FIG. 8A, this case may mean that nnFlag is forcefully inferred at 0 instead of being read from the bitstream.

In another variant of the first embodiment, the signaling may apply while considering the process of down-sampling the context of the current block vertically by a factor $\delta \in \mathbb{N}^*$ and/or down-sampling horizontally by a factor $\gamma \in \mathbb{N}^*$ and/or transposing it before the step called "preprocessing" in FIG.6. Then, the neural network prediction may be transposed and/or up-sampled vertically by the factor $\delta$ and/or upsampled horizontally by the factor $\gamma$ after the step called "postprocessing" in FIG. 6.

FIG. 13 illustrates an example of a downsampling and/or transposing the context of a block with an NN intra prediction mode according to a particular embodiment. In the example of FIG. 13, the downsampling and/or transposing is applied to the context of the current $W \times H$ block, then the transposing and/or upsampling the neural network prediction.

The context 1300 of the $W \times H$ block to be predicted may be downsampled by $\delta$ vertically and downsampled by $\gamma$ horizontally, yielding the downsampled context 1301. 1301 may be transposed, yielding the transposed context 1305. The transposition may move the pixels 1302, 1303, and 1304 to 1306, 1307, and 1308 respectively. $f_{\frac{W}{\gamma},\frac{H}{\delta}}\left(. \; ; \; \boldsymbol{\theta}_{\frac{W}{\gamma},\frac{H}{\delta}}\right)$ may take 1305 to return the neural network prediction 1309. 1309 may be transposed, yielding the transposed neural network prediction 1312. The transposition may move the pixels 1310 and 1311 to 1313 and 1314 respectively. 1312 may be upsampled using the border pixels circled in FIG. 13, yielding the final $W \times H$ prediction 1315.

FIG. 14 illustrates an example of a transposing and/or downsampling the context of a block with an NN intra prediction mode according to a particular embodiment. Indeed, in FIG. 14, the downsampling and the transposition of FIG. 13 are swapped.

For instance, the variant with the downsampling and/or transposing may be combined with the variant with the selection of the NN design. In this combination, the table-based definition of 802, 808, and 853 may be depicted in Table 4 using the non-limiting example value $T$ = {4 × 4, 4 × 8, 8 × 4, 4 × 16, 16 × 4, 4 × 32, 32 × 4, 8 × 8, 8 × 16, 16 × 8,8 × 32,32 × 8,16 × 16,16 × 32,32 × 16,32 × 32,64 × 64}.

*Table 4: An example of definition of the parameters involved in the signaling of the split mode of ISP and those involved* the selection of the NN for prediction according to a variant embodiment.

| widthY × heightY | NN predicting **Y** with {transposition, γ, δ} | isSplit Allowed$_0$ | NN predicting $Z_i^{(0)}$ with {transposition, γ, δ} | isSplit Allowed$_1$ | NN predicting $Z_i^{(1)}$ with {transposition, γ, δ} |
|---|---|---|---|---|---|
| 4 × 4 | $f_{4,4}(. ; \theta_{4,4})$ with {no, 1, 1} | false | | false | |
| 4 × 8 | $f_{4,8}(. ; \theta_{4,8})$ with {yes, 1, 1} | false | | false | |
| 8 × 4 | $f_{4,8}(. ; \theta_{4,8})$ with {no, 1, 1} | false | | false | |
| 4 × 16 | $f_{4,16}(. ; \theta_{4,16})$ with {yes, 1, 1} | true | $f_{4,4}(. ; \theta_{4,4})$ with {no, 1, 1} | false | |
| 16 × 4 | $f_{4,16}(. ; \theta_{4,16})$ with {no, 1, 1} | false | | true | $f_{4,4}(. ; \theta_{4,4})$ with {no, 1, 1} |
| 4 × 32 | $f_{4,32}(. ; \theta_{4,32})$ with {yes, 1, 1} | true | $f_{4,8}(. ; \theta_{4,8})$ with {yes, 1, 1} | false | |

(continued)

| widthY × heightY | NN predicting **Y** with {transposition, $\gamma$, $\delta$} | isSplit Allowed$_0$ | NN predicting $Z_l^{(0)}$ with {transposition, $\gamma$, $\delta$} | isSplit Allowed$_1$ | NN predicting $Z_l^{(1)}$ with {transposition, $\gamma$, $\delta$} |
|---|---|---|---|---|---|
| 32 × 4 | $f_{4,32}(.\,;\theta_{4,32})$ with {no, 1, 1} | false | | true | $f_{4,8}(.\,;\theta_{4,8})$ with {no, 1, 1} |
| 4 × 64 | | | | | |
| 64 × 4 | | | | | |
| 8 × 8 | $f_{8,8}(.\,;\theta_{8,8})$ with {no, 1, 1} | false | | false | |
| 8 × 16 | $f_{8,16}(.\,;\theta_{8,16})$ with {yes, 1, 1} | true | $f_{4,8}(.\,;\theta_{4,8})$ with {no, 1, 1} | false | |
| 16 × 8 | $f_{8,16}(.\,;\theta_{8,16})$ with {no, 1, 1} | false | | true | $f_{4,8}(.\,;\theta_{4,8})$ with {yes, 1, 1} |
| 8 × 32 | $f_{8,16}(.\,;\theta_{8,16})$ with {yes, 1, 2} | true | $f_{8,8}(.\,;\theta_{8,8})$ with {no, 1, 1} | false | |
| 32 × 8 | $f_{8,16}(.\,;\theta_{8,16})$ with {no, 2, 1} | false | | true | $f_{8,8}(.\,;\theta_{8,8})$ with {no, 1, 1} |
| 8 × 64 | | | | | |
| 64 × 8 | | | | | |
| 16 × 16 | $f_{16,16}(.\,;\theta_{16,16})$ with {no, 1, 1} | true | $f_{4,16}(.\,;\theta_{4,16})$ with {no, 1, 1} | true | $f_{4,16}(.\,;\theta_{4,16})$ with {yes, 1, 1} |
| ... | | | | | |
| 16 × 32 | $f_{16,16}(.\,;\theta_{16,16})$ with {no, 1, 2} | true | $f_{8,16}(.\,;\theta_{8,16})$ with {no, 1, 1} | true | $f_{4,32}(.\,;\theta_{4,32})$ with {yes, 1, 1} |
| 32 × 16 | $f_{16,16}(.\,;\theta_{16,16})$ with {no, 2, 1} | true | $f_{4,32}(.\,;\theta_{4,32})$ with {no, 1, 1} | true | $f_{8,16}(.\,;\theta_{8,16})$ with {yes, 1, 1} |
| 32 × 32 | $f_{16,16}(.\,;\theta_{16,16})$ with {no, 2, 2} | true | $f_{8,16}(.\,;\theta_{8,16})$ with {no, 2, 1} | true | $f_{8,16}(.\,;\theta_{8,16})$ with {yes, 1, 2} |
| 64 × 64 | $f_{16,16}(.\,;\theta_{16,16})$ with {no, 4, 4} | false | | false | |

As another example of combination the variant with the downsampling and/or transposing combined with the variant with the selection of the NN design, is detailed in Table 5, using the non-limiting example value $T$ = {4 × 4, 4 × 8, 8 × 4, 4 × 16, 16 × 4, 4 × 32, 32 × 4, 4 × 64, 64 × 4, 8 × 8, 8 × 16, 16 × 8, 16 × 16}.

*Table 5: An example of definition of the parameters involved in the signaling of the split mode of ISP and those involved the selection of the NN for prediction according to a variant embodiment.*

| widthY × heightY | NN predicting **Y** with {transposition, $\gamma$, $\delta$} | isSplit Allowed$_0$ | NN predicting $Z_l^{(0)}$ with {transposition, $\gamma$, $\delta$} | isSplit Allowed$_1$ | NN predicting $Z_l^{(1)}$ with {transposition, $\gamma$, $\delta$} |
|---|---|---|---|---|---|
| 4 × 4 | $f_{4,4}(.\,;\theta_{4,4})$ with {no, 1, 1} | false | | false | |
| 4 × 8 | $f_{4,8}(.\,;\theta_{4,8})$ with {yes, 1, 1} | false | | false | |
| 8 × 4 | $f_{4,8}(.\,;\theta_{4,8})$ with {no, 1, 1} | false | | false | |
| 4 × 16 | $f_{4,16}(.\,;\theta_{4,16})$ with {yes, 1, 1} | true | $f_{4,4}(.\,;\theta_{4,4})$ with {no, 1, 1} | false | |

(continued)

| widthY × heightY | NN predicting **Y** with {transposition, γ, δ} | isSplit Allowed$_0$ | NN predicting $\boldsymbol{Z}_j^{(0)}$ with {transposition, γ, δ} | isSplit Allowed$_1$ | NN predicting $\boldsymbol{Z}_j^{(1)}$ with {transposition, γ, δ} |
|---|---|---|---|---|---|
| 16 × 4 | $f_{4,16}(.\,;\theta_{4,16})$ with {no, 1, 1} | false | | true | $f_{4,4}(.\,;\theta_{4,4})$ with {no, 1, 1} |
| 4 × 32 | $f_{4,32}(.\,;\theta_{4,32})$ with {yes, 1, 1} | true | $f_{4,8}(.\,;\theta_{4,8})$ with {yes, 1, 1} | false | |
| 32 × 4 | $f_{4,32}(.\,;\theta_{4,32})$ | false | | true | $f_{4,8}(.\,;\theta_{4,8})$ |
| | with {no, 1, 1} | | | | with {no, 1, 1} |
| 4 × 64 | $f_{4,32}(.\,;\theta_{4,32})$ with {yes, 1, 2} | true | $f_{4,16}(.\,;\theta_{4,16})$ with {yes, 1, 1} | false | |
| 64 × 4 | $f_{4,32}(.\,;\theta_{4,32})$ with {no, 2, 1} | false | | true | $f_{4,16}(.\,;\theta_{4,16})$ with {no, 1, 1} |
| 8 × 8 | $f_{8,8}(.\,;\theta_{8,8})$ with {no, 1, 1} | false | | false | |
| 8 × 16 | $f_{8,16}(.\,;\theta_{8,16})$ with {yes, 1, 1} | true | $f_{4,8}(.\,;\theta_{4,8})$ with {no, 1, 1} | false | |
| 16 × 8 | $f_{8,16}(.\,;\theta_{8,16})$ with {no, 1, 1} | false | | true | $f_{4,8}(.\,;\theta_{4,8})$ with {yes, 1, 1} |
| 8 × 32 | | | | | |
| 32 × 8 | | | | | |
| 8 × 64 | | | | | |
| 64 × 8 | | | | | |
| 16 × 16 | $f_{16,16}(.\,;\theta_{16,16})$ with {no, 1, 1} | true | $f_{4,16}(.\,;\theta_{4,16})$ with {no, 1, 1} | true | $f_{4,16}(.\,;\theta_{4,16})$ with {yes, 1, 1} |

It should be highlighted that in table 4 and table 5, several possible values of widthY × heightY are not displayed for the sake of conciseness. Yet, for each of these missing values, all the other cells in the same row would be empty as ***Y*** cannot be predicted by a NN in the NN-based intra prediction mode. For instance, at 800 in FIG. 8, this case may mean that nnFlag is inferred at 0 instead of being read from the bitstream.

In another variant of the first embodiment, for a given block predicted by the NN-based intra prediction mode, the size of the current block and/or the ISP split types and/or the position of the current block within the current channel of the current frame and/or the design of the NN-based intra prediction mode may be involved in the signaling of the split mode of ISP. Moreover, for a given block predicted by the NN-based intra prediction mode, the size of the current block and/or the ISP split types and/or the position of the current block within the current channel of the current frame and/or the design of the NN-based intra prediction mode may be involved in the selection of the NN for prediction.

For example, this variant may be combined with the variant of the first embodiment described in FIG. 8A and 8B. In this case, 802, 808, and 853 may also be fed with the position (*x, y*) of the pixel at the top-left of ***Y*** within the current channel of the current frame.

For instance, the FIG. 8A and 8B may be adapted for this variant, for a given widthY × heightY block ***Y,*** step 802 may become as follows. For instance, for $i \in [\![0, l-1]\!]$, from heightY, widthY, and the characteristic of the ISP split of index *i*, the height heightZ$_j^{(i)}$ and the width widthZ$_j^{(i)}$ of the sub-partition of index *j* for the ISP split of index *i* may be determined, $j \in [\![0, t-1]\!]$. For instance, for $i \in [\![0, l-1]\!]$, isSplitAllowed$_i$ = heightZ$_j^{(i)}$ × $\text{width}Z_j^{(i)} \in T\ (\forall j \in [\![0, t-1]\!])$ && areContextInBounds, meaning that the type of split of index *i* may be allowed for ***Y*** predicted by the NN-based intra prediction mode if each sub-partition of ***Y*** can be predicted by a NN inside the NN-based intra prediction mode and, for each sub-partition of ***Y***, the context of this sub-partition does not go out of the bounds of the current channel of the current frame. The latter condition may be indicated by areContextInBounds = true. The value of areContextInBounds may depend on the position (*x, y*) of the pixel at the top-left of ***Y*** within the current channel of the current frame. Indeed, the position of the sub-partition defines a context that belongs to an input (channel) of the neural network for intra prediction, the context comprising pixels adjacent to the sub-partition. For a given sub-partition, the context around this sub-partition (I.e. context to be fed into the NN) may go out of the bounds of the current frame channel.

According to an alternative, the FIG. 8A and 8B may be adapted for this variant, for a given widthY × heightY block ***Y***, step 802 may become as follows. For instance, for $i \in [\![0, l-1]\!]$, from heightY, widthY, and the characteristic of the ISP split of index *i*, the height $\text{heightZ}_j^{(i)}$ and the width $\text{widthZ}_j^{(i)}$ of the sub-partition of index *j* for the ISP split of index *i* may be determined, $j \in [\![0, t-1]\!]$. For instance, for $i \in [\![0, l-1]\!]$, $\text{isSplitAllowed}_i$ = $\text{heightZ}_j^{(i)} \times \text{widthZ}_j^{(i)} \in T \;\; (\forall j \in [\![0, t-1]\!])$ && isAtLeastOneContextInBounds, meaning that the type of split of index *i* may be allowed for ***Y*** predicted by the NN-based intra prediction mode if each sub-partition of ***Y*** can be predicted by a NN inside the NN-based intra prediction mode and, for at least one sub-partition of ***Y***, the context of the sub-partition does not go out of the bounds of the current channel of the current frame. The latter condition may be indicated by isAtLeastOneContextInBounds = true. The value of isAtLeastOneContextInBounds may depend on the position (*x*, *y*) of the pixel at the top-left of ***Y*** within the current channel of the current frame.

## Prediction according to a conventional intra prediction mode replaced by NN-based intra prediction

According to a second embodiment, for conventional intra prediction modes replaced by NN-based intra prediction, the rules for replacing a conventional intra prediction by a NN-based intra prediction may include some restrictions similarly to the first embodiment.

FIG. 15 illustrate an example of ISP and intra prediction mode processing according to a second embodiment. In the second embodiment, a prediction according a conventional intra prediction mode, for instance DC, planar or a directional intra prediction mode, may be replaced by a NN-based intra prediction.

In a second embodiment, in the case of conventional intra prediction replaced by NN-based intra prediction, for a given block, some parameters of this block and/or the design of the NN-based intra prediction may be involved in the decision of whether a given conventional intra prediction is replaced by the NN-based intra prediction. Moreover, some parameters of this block and/or the design of the NN-based intra prediction may be involved in the selection of the NN for prediction.

For instance, as shown on FIG. 15, the method for getting the reconstruction $\tilde{\mathbf{Y}}$ of a given widthY × heightY block ***Y*** at the decoder side of a hybrid block-based video codec, comprises decision(s) of whether a given conventional intra prediction mode is replaced by the NN-based intra prediction and selection(s) of NN for prediction. Before beginning the process illustrated in FIG.15, in a preliminary step not represented on FIG. 15, for the given widthY × heightY block ***Y***, the split mode splitMode of ISP and the index idxPred of the intra prediction mode selected to predict ***Y*** have already been read from the bitstream. Besides, it may be assumed that, for each intra prediction mode for which a substitution by the NN-based intra prediction exists, there is a dedicated set of NNs. Said differently, denoting Γ the sets of indices of intra prediction modes for which a substitution by the NN-based intra prediction exists, $S_k$ may denote the set of NNs associated to the intra prediction mode index *k*, $k \in \Gamma$.

At 1500, if splitMode is equal to NOT_INTRA_SUBPARTITIONS, the process may get to {1501, 1502, 1503, 1504, 1505}. Otherwise, the process may go to {1506, 1507}.

At 1501, the decision $\text{isSubstitutedByNN}^{Y}$ of whether the intra prediction mode of index idxPred is substituted by a NN for predicting ***Y*** may be computed.

At 1502, if $\text{isSubstitutedByNN}^{Y}$ is true, the process may go to 1503. Otherwise, the process may move to 1504.

At 1503, ***Y*** may be predicted by the NN in $S_{\text{idxPred}}$ dedicated to the prediction of blocks of size widthY × heightY, yielding $\hat{\mathbf{Y}}$.

At 1504, ***Y*** may be predicted by the intra prediction mode of index idxPred, yielding $\hat{\mathbf{Y}}$.

At 1505, the decoded residue $\tilde{\mathbf{R}}_Y$ may be obtained via entropy decoding and inverse transform(s). Then, $\tilde{\mathbf{Y}} = \hat{\mathbf{Y}} + \tilde{\mathbf{R}}_Y$.

At 1506, the area of ***Y*** may be split using splitMode, yielding the areas of the sub-partitions $\{\mathbf{Z}_i\}_{i \in [\![0, t-1]\!]}$, $\mathbf{Z}_i$ having size $\text{widthZ}_i \times \text{heightZ}_i$, $i \in [\![0, t-1]\!]$.

At 1507, the reconstructed sub-partitions $\{\tilde{\mathbf{Z}}_i\}_{i \in [\![0, t-1]\!]}$ may be successively obtained by looping over {1550, 1551, 1552, 1553, 1554, 1555}.

At 1550, the index of sub-partition *i* may be initialized to 0.

At 1551, the decision $\text{isSubstitutedByNN}_{\text{splitMode}}^{Z}$ of whether the intra prediction mode of index idxPred is substituted by a NN for predicting $\mathbf{Z}_i$ may be computed. $\text{isSubstitutedByNN}^{\text{Z}}_{\text{splitMode}}$ may depend on splitMode and/or some parameters of the current sub-partition of ***Y***. Yet, the index *i* of the current sub-partition of ***Y*** is not written in $\text{isSubstitutedByNN}^{\text{Z}}_{\text{splitMode}}$ for conciseness.

At 1552, if $\text{isSubstitutedByNN}^{\text{Z}}_{\text{splitMode}}$ is true, the process may move on to 1553. Otherwise, the process may move to 1554.

At 1553, $\mathbf{Z}_i$ may be predicted by the NN in $S_{\text{idxPred}}$ dedicated to the prediction of blocks of size width$Z_i \times$ height$Z_i$, yielding $\hat{\mathbf{Z}}_i$.

At 1554, $\mathbf{Z}_i$ may be predicted by the intra prediction mode of index idxPred, yielding $\hat{\mathbf{Z}}_i$.

At 1555, the decoded residue $\tilde{\mathbf{R}}_{\mathbf{Z}i}$ may be obtained via entropy decoding and inverse transform(s). Then, $\tilde{\mathbf{Z}}_i = \hat{\mathbf{Z}}_i + \mathbf{R}_{Zi}$.

At 1556, the process may move on to the decoding of the next sub-partition by going back to 1550, incrementing *i* by 1, and repeating {1550, 1551, 1552, 1553, 1554, 1555}. This loop may end when the last sub-partition is decoded. $\tilde{\mathbf{Y}}$ may correspond to the concatenation of $\{\tilde{\mathbf{Z}}_i\}_{i\in[\![0,t-1]\!]}$.

At 1508, the decoding of $\tilde{\mathbf{Y}}$ may end.

In the variant of FIG. 15, a non NN-based intra prediction mode may be defined via its index idxPred. Alternatively, a non NN-based intra prediction mode may be defined via at least one flag. Alternatively, a non NN-based intra prediction mode may be defined via a combination of at least one flag and at least one index. In FIG. 15, a definition of a non NN-based intra prediction mode via its index idxPred is favored for clarity.

In the following, steps 1501, 1503, 1551, and 1553 are further detailed according to different variants.

In a variant of the second variant embodiment, for a given block, the size of this block and/or the ISP split types and/or the design of the NN-based intra prediction may be used to decide whether a given conventional intra prediction is replaced by the NN-based intra prediction. Moreover, the size of the block and/or the ISP split types and/or the design of the NN-based intra prediction may be involved in the selection of the NN for prediction.

For instance, let *T* be the set of block sizes for which there exists a NN inside the set of NNs for NN-based intra prediction. In this example, $f_{h,w}^{k}(.\,;\theta_{h,w}) \in S_k$ may only predict blocks of size $w \times h$, for any index $k \in \Gamma$ of intra prediction mode for which a substitution by the NN-based intra prediction mode exists. Then, for a given widthY $\times$ heightY block ***Y***, 1501 may correspond to $\text{isSubstitutedByNN}^{\text{Y}} = \text{heightY} \times \text{widthY} \in T$; 1551 may correspond to $\text{isSubstitutedByNN}^{\text{Z}}_{\text{splitMode}} = \text{heightZ}_{\text{i}} \times \text{widthZ}_{\text{i}} \in T$ where $i \in [\![0, t-1]\!]$, meaning that, for the split mode splitMode, the intra prediction mode of index idxPred may be replaced by a NN if the sub-partition $\mathbf{Z}_i$ can be predicted by a NN inside the intra prediction NN. In 1503, the function "$f_{\text{heightY,widthY}}^{\text{idxPred}}(.\,;\theta_{\text{heightY,widthY}})$" may be used for prediction. In 1553, the function "$f_{\text{height}Zi\text{,width}Zi}^{\text{idxPred}}(.\,;\theta_{\text{height}Zi\text{,width}Zi})$" may be used for prediction.

In another variant of the second embodiment, the method of FIG. 15 is adapted to the types of ISP splits in the latest development of VVC/ECM. For example, as all the sub-partitions of a block divided via ISP have the same size, for a given widthY $\times$ heightY block ***Y***, height$Z_i^{(0)}$ = heightY/4 and width$Z_i^{(0)}$ = widthY, $\forall i \in [\![0,3]\!]$, height$Z_i^{(1)}$ = heightY and width$Z_i^{(1)}$ = widthY/4, $\forall i \in [\![0,3]\!]$, ignoring the exceptions detailed with the examples of ISP split in VVC of FIG. 4. Then, the step 1501 may comprise $\text{isSubstitutedByNN}^{\text{Y}} = \text{heightY} \times \text{widthY} \in T$; and step 1551 may comprise $\text{isSubstitutedByNN}^{\text{Z}}_{\text{splitMode}} = \text{heightZ}_{\text{i}} \times \text{widthZ}_{\text{i}} \in T$ where $i \in [\![0, t-1]\!]$. For the split mode splitMode, $\text{isSubstitutedByNN}^{\text{Z}}_{\text{splitMode}}$ may remain unchanged when moving from one sub-partition of ***Y*** to the next one, i.e. when incrementing *i* by 1. Besides, the step 1503 may apply the function "$f_{\text{heightY,widthY}}^{\text{idxPred}}(.\,;\theta_{\text{heightY,widthY}})$ to obtain a prediction $\hat{\mathbf{Y}}$. Similarly, 1553 may apply $f_{\text{height}Zi\text{,width}Zi}^{\text{idxPred}}(.\,;\theta_{\text{height}Zi\text{,width}Zi})$ to obtain a prediction $\hat{\mathbf{Z}}_i$, remaining the same NN for predicting all the sub-partitions of ***Y*** produced by the split mode splitMode.

In yet other variant, for a given widthY $\times$ heightY block ***Y***, even though 1501, 1551, 1503, and 1553 are ruled-based defined hereabove, they may also be defined via a table.

FIG. 16 illustrates the derivation of the substitution of an intra prediction mode by a NN-based prediction mode where the below example of tables may define whether the substitution occurs for the block or for the sub-partitions (respectively horizontal and vertical), as well as the selection of the NN design and the pre-processing.

According to a first example, 1501, 1551, 1503, and 1553 may be defined via the table 6 using the exemplar value $T = \{4 \times 4, 8 \times 4, 16 \times 4, 32 \times 4, 8 \times 8, 16 \times 8, 16 \times 16\}$. In FIG. 16 and table 6, $\text{isSubstitutedByNN}^{\text{Z}}_{0}$ and isSubstitutedByNNf may be associated to the horizontal and vertical splits respectively.

*Table 6: An example of definition of the parameters involved in the selection of the NN for prediction according to a variant embodiment.*

| widthY × heightY | IsSubst ByNN$^Y$ | NN pred Y | IsSubst $\mathrm{ByNN}_0^Z$ | NN pred $Z_i^{(0)}$ | IsSubst $\mathrm{ByNN}_1^Z$ | NN pred $Z_i^{(1)}$ |
|---|---|---|---|---|---|---|
| 4 × 4 | true | $f_{4,4}^{idxPred}(.;\theta_{4,4})$ | false | | false | |
| 4 × 8 | false | | false | | false | |
| 8 × 4 | true | $f_{4,8}^{idxPred}(.;\theta_{4,8})$ | false | | false | |
| 4 × 16 | false | | false | | false | |
| 16 × 4 | true | $f_{4,16}^{idxPred}(.;\theta_{4,16})$ | false | | true | $f_{4,4}^{idxPred}(.;\theta_{4,4})$ |
| 4 × 32 | false | | false | | false | |
| 32 × 4 | true | $f_{4,32}^{idxPred}(.;\theta_{4,32})$ | false | | true | $f_{4,32}^{idxPred}(.;\theta_{4,8})$ |
| 4 × 64 | false | | false | | false | |
| 64 × 4 | false | | false | | false | |
| 8 × 8 | true | $f_{8,8}^{idxPred}(.;\theta_{8\ 8})$ | false | | false | |
| 8 × 16 | false | | false | | false | |
| 16 × 8 | true | $f_{8,16}^{idxPred}(.;\theta_{8,16})$ | false | | false | |
| 8 × 32 | false | | false | | false | |
| 32 × 8 | false | | false | | false | |
| 8 × 64 | false | | false | | false | |
| 64 × 8 | false | | false | | false | |
| 16 × 16 | true | $f_{16,16}^{idxPred}(.;\theta_{16,16})$ | true | $f_{4,16}^{idxPred}(.;\theta_{4,16})$ | false | |

As another example, 1501, 1551, 1503, and 1553 may be defined by FIG. 16 and table 7 using the example value of $T$ = {4 × 4, 4 × 8, 8 × 4, 4 × 16, 16 × 4, 4 × 32, 32 × 4, 8 × 8, 8 × 16, 16 × 8, 16 × 16}.

*Table 7: An example of definition of the parameters involved in the selection of the NN for prediction according to a variant embodiment.*

| widthY × heightY | IsSubst ByNN$^Y$ | NN pred Y | IsSubst $\mathrm{ByNN}_0^Z$ | NN pred $Z_i^{(0)}$ | IsSubst $\mathrm{ByNN}_1^Z$ | NN pred $Z_i^{(1)}$ |
|---|---|---|---|---|---|---|
| 4 × 4 | true | $f_{4,4}^{idxPred}(.;\theta_{4,4})$ | false | | false | |
| 4 × 8 | true | $f_{8,4}^{idxPred}(.;\theta_{8,4})$ | false | | false | |
| 8 × 4 | true | $f_{4,8}^{idxPred}(.;\theta_{4,8})$ | false | | false | |
| 4 × 16 | true | $f_{16,4}^{idxPred}(.;\theta_{16,4})$ | true | $f_{4,4}^{idxPred}(.;\theta_{4,4})$ | false | |
| 16 × 4 | true | $f_{4,16}^{idxPred}(.;\theta_{4,16})$ | false | | true | $f_{4,4}^{idxPred}(.;\theta_{4,4})$ |

(continued)

| widthY × heightY | IsSubst ByNN$^Y$ | NN pred Y | IsSubst $\mathrm{ByNN}_0^Z$ | NN pred $Z_i^{(0)}$ | IsSubst $\mathrm{ByNN}_1^Z$ | NN pred $Z_i^{(1)}$ |
|---|---|---|---|---|---|---|
| 4 × 32 | true | $f_{32,4}^{\mathrm{idxPred}}(.\,;\theta_{32,4})$ | true | $f_{8,4}^{\mathrm{idxPred}}(.\,;\theta_{8,4})$ | false | |
| 32 × 4 | true | $f_{4,32}^{\mathrm{idxPred}}(.\,;\theta_{4,32})$ | false | | true | $f_{4,8}^{\mathrm{idxPred}}(.\,;\theta_{4,8})$ |
| 4 × 64 | false | | false | | false | |
| 64 × 4 | false | | false | | false | |
| 8 × 8 | true | $f_{8,8}^{\mathrm{idxPred}}(.\,;\theta_{8\,8})$ | false | | false | |
| 8 × 16 | true | $f_{16,8}^{\mathrm{ixPred}}(.\,;\theta_{16,8})$ | true | $f_{4,8}^{\mathrm{idxPred}}(.\,;\theta_{4,8})$ | false | |
| 16 × 8 | true | $f_{8,16}^{\mathrm{idxPred}}(.\,;\theta_{8,16})$ | false | | true | $f_{8,4}^{\mathrm{idxPred}}(.\,;\theta_{8,4})$ |
| 8 × 32 | false | | false | | false | |
| 32 × 8 | false | | false | | false | |
| 8 × 64 | false | | false | | false | |
| 64 × 8 | false | | false | | false | |
| 16 × 16 | true | $f_{16,16}^{\mathrm{idxPred}}(.\,;\theta_{16,16})$ | true | $f_{4,16}^{\mathrm{idxPred}}(.\,;\theta_{4,16})$ | true | $f_{16,4}^{\mathrm{idxPred}}(.\,;\theta_{16,4})$ |

Note that, in Table 6 and Table 7, several possible values of widthY × heightY are not shown for the sake of conciseness. Yet, for each of these missing values, isSubstitutedByNN$^Y$, $\mathrm{isSubstitutedByNN}_0^Z$, and $\mathrm{isSubstitutedByNN}_1^Z$ may be false.

As a further example of variant of FIG. 16 and any of table 6 or table 7, for instance, if it is decided that, among {PLANAR, DC, directional intra prediction modes}, there exist NNs in the hybrid block-based video codec of interest (e.g. ECM) for potentially replacing PLANAR, DC, and one directional intra prediction mode out of 4, then, in table 6 and table 7 along with FIG. 16, the condition "$S_{\mathrm{idxPred}}$ exists?" may be expressed as idxPred ∈ {0,1, 2 + 4*i* where *i* = {0,1, 2, ... , 16}}. As another example, if it is decided that, among {PLANAR, DC, directional intra prediction modes}, there exist NNs in the hybrid block-based video codec of interest (e.g. ECM) for potentially replacing PLANAR, DC, and one directional intra prediction mode out of 8, then, in in table 6 and table 7 along with FIG. 16, the condition "$S_{\mathrm{idxPred}}$ exists?" may be written as idxPred ∈ {0,1, 2 + 8*i* where *i* = {0, 1, 2, ... , 8}}.

In another variant of the second embodiment, the method of FIG. 15 is adapted to the feature of downsampling the context of the current block vertically by a factor $\delta \in \mathbb{N}^*$ and/or down-sampling horizontally by a factor $\gamma \in \mathbb{N}^*$ and/or transposing it before the step called "preprocessing" in FIG. 6. Then, the neural network prediction may be transposed and/or upsampled vertically by the factor $\delta$ and/or upsampled horizontally by the factor *y* after the step called "postprocessing" in FIG. 6.

For instance, this variant may be combined with the variant of ISP split mode of VVC. In this combination, the table-based definition of 1501, 1551, 1503, and 1553 may be introduced in FIG. 16 and Table 8 using the example value *T* = {4 × 4, 4 × 8, 8 × 4, 4 × 16, 16 × 4, 4 × 32, 32 × 4, 8 × 8, 8 × 16, 16 × 8,8 × 32,32 × 8,16 × 16,16 × 32,32 × 16,32 × 32, 64 × 64}.

*Table 8: An example of definition of the parameters involved in the selection of the NN for prediction according to a variant embodiment.*

| widthY × heightY | IsSubst ByNN$^Y$ | NN predicting Y with {transpo, $\gamma$, $\delta$} | IsSubst $\mathrm{ByNN}_0^Z$ | NN predicting $Z_i^{(0)}$ with {transpo, $\gamma$, $\delta$} | IsSubst $\mathrm{ByNN}_1^Z$ | NN predicting $Z_i^{(1)}$ with {transpo, $\gamma$, $\delta$} |
|---|---|---|---|---|---|---|
| 4 × 4 | true | $f_{4,4}^{idxPred}(.;\theta_{4,4})$ with {no, 1, 1} | false | | false | |
| 4 × 8 | true | $f_{4,8}^{idxPred}(.;\theta_{4,8})$ with {yes, 1, 1} | false | | false | |
| 8 × 4 | true | $f_{4,8}^{idxPred}(.;\theta_{4,8})$ with {no, 1, 1} | false | | false | |
| 4 × 16 | true | $f_{4,16}^{idxPred}(.;\theta_{4,16})$ with {yes, 1, 1} | true | $f_{4,4}^{idxPred}(.;\theta_{4,4})$ with {no, 1, 1} | false | |
| 16 × 4 | true | $f_{4,16}^{idxPred}(.;\theta_{4,16})$ with {no, 1, 1} | false | | true | $f_{4,4}^{idxPred}(.;\theta_{4,4})$ with {no, 1, 1} |
| 4 × 32 | true | $f_{4,32}^{idxPred}(.;\theta_{4,32})$ with {yes, 1, 1} | true | $f_{4,8}^{idxPred}(.;\theta_{4,8})$ with {yes, 1, 1} | false | |
| 32 × 4 | true | $f_{4,32}^{idxPred}(.;\theta_{4,32})$ with {no, 1, 1} | false | | true | $f_{4,8}^{idxPred}(.;\theta_{4,8})$ with {no, 1, 1} |
| 4 × 64 | false | | false | | false | |
| 64 × 4 | false | | false | | false | |
| 8 × 8 | true | $f_{8,8}^{idxPred}(.;\theta_{8\ 8})$ with {no, 1, 1} | false | | false | |
| 8 × 16 | true | $f_{8,16}^{idxPred}(.;\theta_{8,16})$ with {yes, 1, 1} | true | $f_{4,8}^{idxpred}(.;\theta_{4,8})$ with {no, 1, 1} | false | |
| 16 × 8 | true | $f_{8,16}^{idxPred}(.;\theta_{8,16})$ with {no, 1, 1} | false | | true | $f_{4,8}^{idxPred}f_{4,8}(.;\theta_{4,8})$ wit h {yes, 1, 1} |
| 8 × 32 | true | $f_{8,16}^{idxPred}(.;\theta_{8,16})$ with {yes, 1, 2} | true | $f_{8,8}^{idxPred}(.;\theta_{8,8})$ with {no, 1, 1} | false | |
| 32 × 8 | true | $f_{8,16}^{idxPred}(.;\theta_{8,16})$ with {no, 2, 1} | false | | true | $f_{8,8}^{idxPred}(.;\theta_{8,8})$ wit h {no, 1, 1} |
| 8 × 64 | false | | false | | false | |
| 64 × 8 | false | | false | | false | |
| 16 × 16 | true | $f_{16,16}^{idxPred}(.;\theta_{16,16})$ wit h {no, 1, 1} | true | $f_{4,16}^{idxPred}(.;\theta_{4,16})$ wit h {no, 1, 1} | true | $f_{4,16}^{idxPred}(.;\theta_{4,16})$ w ith {yes, 1, 1} |

(continued)

| widthY × heightY | IsSubst ByNN$^Y$ | NN predicting Y with {transpo, $\gamma$, $\delta$} | IsSubst $\mathrm{ByNN}_0^Z$ | NN predicting $Z_i^{(0)}$ with {transpo, $\gamma$, $\delta$} | IsSubst $\mathrm{ByNN}_1^Z$ | NN predicting $Z_i^{(1)}$ with {transpo, $\gamma$, $\delta$} |
|---|---|---|---|---|---|---|
| 16 × 32 | true | $f_{16,16}^{idxPred}$ (. ; $\theta_{16,16}$) wit h {no, 1, 2} | true | $f_{8,16}^{idxPred}$ (. ; $\theta_{8,16}$) with {no, 1, 1} | true | $f_{4,32}^{idxPred}$ (. ; $\theta_{4,32}$) with {yes, 1, 1} |
| 32 × 16 | true | $f_{16,16}^{idxPred}$ (. ; $\theta_{16,16}$) wit h {no, 2, 1} | true | $f_{4,32}^{idxPred}$ (. ; $\theta_{4,32}$) wit h {no, 1, 1} | true | $f_{8,16}^{idxPred}$ (. ; $\theta_{8,16}$) w ith {yes, 1, 1} |
| 32 × 32 | true | $f_{16,16}^{idxPred}$ (. ; $\theta_{16,16}$) with {no, 2, 2} | true | $f_{8,16}^{idxPred}$ (. ; $\theta_{8,16}$) with {no, 2, 1} | true | $f_{8,16}^{idxPred}$ (. ; $\theta_{8,16}$) with {yes, 1, 2} |
| 64 × 64 | true | $f_{16,16}^{idxPred}$ (. ; $\theta_{16,16}$) with {no, 4, 4} | false | | false | |

As another example of this variant of downsampling and/or transposition combined with the variant of ISP split mode of VVC. In this combination, the table-based definition of 1501, 1551, 1503, and 1553 may be introduced in FIG. 16 and Table 9 using the example value $T$ = {4 × 4, 4 × 8, 8 × 4, 4 × 16, 16 × 4, 4 × 32, 32 × 4, 4 × 64, 64 × 4, 8 × 8}.

*Table 9: An example of definition of the parameters involved in the selection of the NN for prediction according to a variant embodiment.*

| widthY × heightY | IsSubst ByNN$^Y$ | NN predicting Y with {transpo, $\gamma$, $\delta$} | IsSubst $\mathrm{ByNN}_0^Z$ | NN predicting $Z_i^{(0)}$ with {transpo, $\gamma$, $\delta$} | IsSubst $\mathrm{ByNN}_1^Z$ | NN predicting $Z_i^{(1)}$ with {transpo, $\gamma$, $\delta$} |
|---|---|---|---|---|---|---|
| 4 × 4 | true | $f_{4,4}^{idxPred}$ (. ; $\theta_{4,4}$) with {no, 1, 1} | false | | false | |
| 4 × 8 | true | $f_{4,8}^{idxPred}$ (. ; $\theta_{4,8}$) with {yes, 1, 11 | false | | false | |
| 8 × 4 | true | $f_{4,8}^{idxPred}$ (. ; $\theta_{4,8}$) with {no, 1, 1} | false | | false | |
| 4 × 16 | true | $f_{4,16}^{idxPred}$ (. ; $\theta_{4,16}$) with {yes, 1, 11 | true | $f_{4,4}^{idxPred}$ (. ; $\theta_{4,4}$) with {no, 1, 11 | false | |
| 16 × 4 | true | $f_{4,16}^{idxPred}$ (. ; $\theta_{4,16}$) with {no, 1, 1} | false | | true | $f_{4,4}^{idxPred}$ (. ; $\theta_{4,4}$) with {no, 1, 11 |
| 4 × 32 | true | $f_{4,32}^{idxPred}$ (. ; $\theta_{4,32}$) with {yes, 1, 11 | true | $f_{4,8}^{idxPred}$ (. ; $\theta_{4,8}$) with {yes, 1, 11 | false | |
| 32 × 4 | true | $f_{4,32}^{idxPred}$ (. ; $\theta_{4,32}$) with {no, 1, 1} | false | | true | $f_{4,8}^{idxPred}$ (. ; $\theta_{4,8}$) with {no, 1, 1} |
| 4 × 64 | true | $f_{4,32}^{idxPred}$ (. ; $\theta_{4,32}$) with {yes, 1, 2} | true | $f_{4,16}^{idxPred}$ (. ; $\theta_{4,16}$) with {yes, 1, 11 | false | |

(continued)

| widthY × heightY | IsSubst ByNN$^{Y}$ | NN predicting Y with {transpo, $\gamma$, $\delta$} | IsSubst $\mathrm{ByNN}_0^{\mathrm{Z}}$ | NN predicting $Z_i^{(0)}$ with {transpo, $\gamma$, $\delta$} | IsSubst $\mathrm{ByNN}_1^{\mathrm{Z}}$ | NN predicting $Z_i^{(1)}$ with {transpo, $\gamma$, $\delta$} |
|---|---|---|---|---|---|---|
| 64 × 4 | true | $f_{4,\,32}^{\mathrm{idxPred}}$ (. ; $\theta_{4,32}$) with {no, 2, 1} | false | | true | $f_{4,\,16}^{\mathrm{idxPred}}$ (. ; $\theta_{4,16}$) with {no, 1, 1} |
| 8 × 8 | true | $f_{8,\,8}^{\mathrm{idxPred}}$ (. ; $\theta_{8\,8}$) with {no, 1, 1} | false | | false | |

As previously, in Table 8 and Table 9, several possible values of widthY × heightY are not shown for the sake of conciseness. Yet, for each of these missing values, isSubstitutedByNN$^{Y}$, $\mathrm{isSubstitutedByNN}_0^{\mathrm{Z}}$, and $\mathrm{isSubstitutedByNN}_1^{\mathrm{Z}}$ may be false.

In another variant of the second embodiment, for a given block, the size of this block and/or the ISP split types and/or the position of the current block within the current channel of the current frame and/or the design of the NN-based intra prediction may be involved in the decision of whether a given conventional intra prediction is replaced by the NN-based intra prediction. Moreover, the size of this block and/or the ISP split types and/or the position of the current block within the current channel of the current frame and/or the design of the NN-based intra prediction may be used in the selection of the NN for prediction. For instance, the method of FIG. 15 is adapted to this variant. In this case, 1501, 1551, 1503, and 1553 may also be fed with the position *(x,y)* of the pixel at the top-left of ***Y*** within the current channel of the current frame. For a given widthY × heightY block ***Y*,** 1501 may become as "isSubstitutedByNN$^{Y}$ = heightY × widthY ∈ *T* && isContextInBounds$^{Y}$". isContextInBounds$^{Y}$ = true may mean that the context of ***Y*** does not go out of the bounds of the current channel of the current frame. The value of isContextInBounds$^{Y}$ may depend on the position (*x*, *y*) of the pixel at the top-left of ***Y*** within the current channel of the current frame. 1551 may become " $\mathrm{isSubstitutedByNN}_{\mathrm{splitMode}}^{\mathrm{Z}} = \mathrm{heightZ_i} \times \mathrm{widthZ_i} \in T \;\&\&\; \mathrm{isContextInBounds}^{Z_i}$ where $i \in [\![0, t-1]\!]$ . isContextInBounds$^{Z_i}$ = true may mean that the context of the sub-partition $\boldsymbol{Z_i}$ of index *i* does not go out of the bounds of the current channel of the current frame. The value of isContextInBounds$^{Z_i}$ may depend on the position (*x, y*) of the pixel at the top-left of ***Y*** within the current channel of the current frame.

In another variant of the second embodiment, for a given block, the size of this block and/or the ISP split types and/or the position of the current block within the current channel of the current frame and/or the temporal ID of the current frame and/or the design of the NN-based intra prediction may be involved in the decision of whether a given conventional intra prediction is replaced by the NN-based intra prediction. Moreover, the size of this block and/or the ISP split types and/or the position of the current block within the current channel of the current frame and/or the temporal ID of the current frame and/or the design of the NN-based intra prediction may be involved in the selection of the NN for prediction. For instance, the method of FIG. 15 is adapted to this variant. In this case, 1501, 1551, 1503, and 1553 may also be fed with the temporal ID Tid of the current frame. For a given widthY × heightY block Y, 1501 may be as " isSubstitutedByNN$^{Y}$ = heightY × widthY ∈ *T* && isContextInBounds$^{Y}$ && Tid < *m*". isContextInBounds$^{Y}$ = true may mean that the context of ***Y*** does not go out of the bounds of the current channel of the current frame. The value of isContextInBounds$^{Y}$ may depend on the position (*x, y*) of the pixel at the top-left of ***Y*** within the current channel of the current frame. 1551 may become " $\mathrm{isSubstitutedByNN}_{\mathrm{splitMode}}^{\mathrm{Z}} =$ heightZ$_{i}$ × widthZ$_{i}$ ∈ *T* && isContextInBounds$^{Z_i}$ && Tid < m " where $i \in [\![0, t-1]\!]$ . isContextInBounds$^{Z_i}$ = true may mean that the context of the sub-partition $\boldsymbol{Z_i}$ of index *i* does not go out of the bounds of the current channel of the current frame. The value of isContextInBounds$^{Z_i}$ may depend on the position (*x, y*) of the pixel at the top-left of ***Y*** within the current channel of the current frame. For instance, m = 2. As another example, *m* = 3.

Another example of the combination of the different variants may be as follows. For a given widthY × heightY block ***Y***, 1501 may be as "isSubstitutedByNN$^{Y}$ = heightY × widthY ∈ *T* && isContextInBounds$^{Y}$ && Tid == 0 ". 1551 may become " $\mathrm{isSubstitutedByNN}_{\mathrm{splitMode}}^{\mathrm{Z}} =$ heightZ$_{i}$ × widthZ$_{i}$ ∈ *T* && isContextInBounds$^{Z_i}$ && Tid == 0" where

$i \in [\![0, t-1]\!]$. Tid == 0 being true may mean that the current frame corresponds to an intra frame.

Given the previous variants related to the size of the block, the type of ISP split, the NN design, the position of the block or the temporal ID of the current frame, it may be straightforward to extend to additional parameters well known by the skilled in the art, such as Quantization Parameters. In the case of conventional intra prediction modes replaced by NN-based intra prediction, for a given block, some parameters of this block and/or some parameters of the current frame and/or the design of the NN-based intra prediction may be involved in the decision of whether a given conventional intra prediction mode is replaced by the NN-based intra prediction. Moreover, some parameters of this block and/or some parameters of the current frame and/or the design of the NN-based intra prediction may be involved in the selection of the NN for prediction.

Although the substitution of an intra prediction mode by the NN-based intra prediction has been referring mainly to the substitution of a conventional intra prediction mode (e.g. PLANAR, DC, directional intra prediction mode) by the NN-based intra prediction up to now, the generalization to the substitution of any intra prediction mode by the NN-based intra prediction may also be straightforward. For instance, the present principles may be extended to any type of template-based intra prediction tools (such as TIMD or DIMD or TMRL or SGPM or EIP).

**Adaptation of described ISP split to NN based inference of transform indices and/or representation indices at the sub-partition level.**

In the latest development of VVC/ECM, for a given luma CB split via ISP, the definition of the intra prediction parameters and the transform parameters is at the Coding Unit (CU) level. For instance, the index of the intra prediction mode selected to predict this luma CB is at the CU level, shared among all the luma Transform Blocks (TBs) inside this luma CB. Similarly, if LFNST applies to this luma CB, the index of the LFNST set is defined at the CU level, shared among all the luma TBs inside this luma CB. Similarly, the same primary transform is used for coding all the luma TBs inside this luma CB.

However, for a given block split via ISP, for a NN inferring transform indices and/or representation mode indices (e.g. as in FIG. 6) during the prediction of a sub-partition of this given block, the intra prediction parameters and/or the transform parameters may be at the sub-partition level. This embodiment may apply equivalently at both the encoder and decoder sides of any hybrid block-based video codec.

For instance, in VVC/ECM, for a given CB split via ISP, for a NN inferring transform indices and/or representation mode indices during the prediction of a TB inside this CB, the intra prediction parameters and/or the transform parameters may be at the TB level.

For example, by combining the last example with the signaled NN-based intra prediction mode (for example in an embodiment applied to NNVC), for a given luma CB predicted by the NN-based intra prediction mode and split via ISP, for the luma TB of index *i* in this luma CB, following the NN-based intra prediction, this TB may own $\text{repIdx}^{Z_i}$, $\text{grpIdx}_1^{Z_i}$, and $\text{grpIdx}_2^{Z_i}$, $i \in [\![0, t-1]\!]$. Then, if LFNST applies, $\text{grpIdx}_1^{Z_i}$ and/or $\text{grpIdx}_2^{Z_i}$ may be used to define the LFNST set index for coding this TB, e.g. as in the EP application from the same inventors EP4169249 - ADAPTING THE TRANSFORM PROCESS TO NEURAL NETWORK-BASED INTRA PREDICTION MODE. Then, $\text{repIdx}^{Z_i}$ may be used for any need for representing the neural network prediction of this TB as a prediction of this TB via a conventional intra prediction mode, such as during a later derivation of the list of Most Probable Modes (MPMs) of a given luma CB, or during a later definition of the Direct Mode (DM) for a given pair of chroma CBs, or, in the case of ECM, if needed, for defining the primary transform inside Multiple Transform Set (MTS) for coding this TB, or, in the case of ECM, if needed, for defining the Non-Separable Primary Transform (NSPT) for coding this TB.

FIG 17 illustrates example of transform indices and/or representation mode indices set at the sub-partition level according to an embodiment. For instance, FIG. 17(a) may present a current 8 × 16 block predicted by the NN-based intra prediction. Following the prediction of the current 8 × 16 block, $\text{repIdx}^{Y}$, $\text{grpIdx}_1^{Y}$, and $\text{grpIdx}_2^{Y}$ may be set at the block level. FIG. 17 (b) may show the current 8 × 16 block predicted by the NN-based intra prediction and split vertically via ISP into 4 4 × 8 sub-partitions. Following the prediction of the 4 × 8 sub-partition of index *i* via the NN-based intra prediction, $\text{repIdx}^{Z_i}$, $\text{grpIdx}_1^{Z_i}$, and $\text{grpIdx}_2^{Z_i}$ may be set at the level of the sub-partition of index *i*, $i \in [\![0, 3]\!]$.

FIG 18 illustrates another example of transform indices and/or representation mode indices set at the sub-partition level according to an embodiment. For instance, FIG. 18 (a) may show the current 16 × 16 block predicted by the NN-based intra prediction. Following the prediction of the current 16 × 16 block, $\text{repIdx}^{Y}$, $\text{grpIdx}_1^{Y}$, and $\text{grpIdx}_2^{Y}$ may be set at the block level. FIG. 18 (b) may depict the current 16 × 16 block predicted by the NN-based intra prediction and split horizontally via ISP into 4 16 × 4 sub-partitions. Following the prediction of the 16 × 4 sub-partition of index *i* via the NN-based intra prediction, $repIdx^{Z_I}$, $grpIdx_1^{Z_I}$, and $grpIdx_2^{Z_I}$ may be set at the level of the sub-partition of index *i*, $i \in [\![0, 3]\!]$.

For instance, the transform indices and/or representation mode indices set at the sub-partition level may apply to the derivation of the list of MPMs of a given luma CB in ECM. FIG. 20 illustrates the derivation of the list of MPMs of a given block according to an embodiment. The beginning of the derivation of the list of MPMs of a given *w* × *h* luma CB can be summarized by the following 6 steps.

Firstly, starting from an empty list listMPMs of MPMs, PLANAR_IDX is appended to listMPMs.

Secondly, indices of intra prediction modes from luma CBs being neighbors of this given *w* × *h* luma CB are appended to listMPMs. FIG. 19 illustrates an example of the neighboring position for derivation of a MPM according to an embodiment. Here, *w* = 8 and *h* = 4 for the given luma CB of FIG.19. Precisely, for each of the positions 1901, 1902, 1903, 1904, and 1905 surrounding this given *w* × *h* luma CB 1900 of FIG. 19, the process of FIG. 20 applies. At 2000, this process begins. At 2001, getBlock(*x*, *y*) provides the luma CB **Y** overlapping the input position (*x*, *y*). At 2002, if **Y** exists and is already reconstructed, the process goes to 2003. Otherwise, the process ends. At 2003, if **Y** is coded in intra, the process moves on to 2006. Otherwise, the process advances to 2004. At 2004, if **Y** is coded in inter or via Intra Block Copy (IBC), the process goes to 2005. Otherwise, the process ends. At 2005, the index idxCandidate of the intra prediction mode of the block belonging to the previous frame and pointed by the motion vector at (*x*, *y*) is obtained. At 2006, the index idxCandidate of the intra prediction mode associated to **Y** is obtained. For instance, if an intra prediction mode in {PLANAR, DC, directional intra prediction modes} is selected to predict **Y,** idxCandidate becomes the index of this intra prediction mode. For instance, if DIMD is selected to predict **Y,** idxCandidate is the index of the first DIMD derived mode. For instance, if TIMD is selected to predict **Y** , idxCandidate = idxTimdFirst < DC_IDX + 1 ? idxTimdFirst: (idxTimdFirst >> 1) + 1, where idxTimdFirst denotes the index of the first TIMD derived mode. At 2007, if idxCandidate already exists in listMPMs, the process ends. Otherwise, the process moves on to 2008. At 2008, if idxCandidate is evaluated as "valid" according to criteria on the availability of the reference samples of 1900, the process goes to 2010. Otherwise, the process advances to 2009. At 2009, idxCandidate is appended to the list listReserved of indices of intra prediction modes to be later appended to listMPMs and the process ends. At 2010, idxCandidate is appended to listMPMs and the process ends.

Thirdly, if the index of the first intra prediction mode derived by DIMD applied to 1900 does not already exist in listMPMs, it is appended to listMPMs. If the index of the second intra prediction mode derived by DIMD applied to 1900 does not already exist in listMPMs, it is appended to listMPMs.

Fourthly, indices of intra prediction modes from luma CBs being non-adjacent to this given *w* × *h* luma CB are appended to listMPMs. Precisely, the process in FIG. 20 applies for each position belonging to a set of positions being non-adjacent to 1900.

Fifthly, a template-based reordering applies to listMPMs.

Sixthly, each index belonging to listReserved and not already existing in listMPMs is appended to listMPMs.

FIG. 21 illustrates a variant of the derivation of the list of MPMs of a given block according to an embodiment. For instance, for the derivation of the list of MPMs of a given luma CB in ECM, 2006 in FIG. 20 is illustrated on FIG. 21. At 2100, 2006 may begin. At 2101, if the NN-based intra prediction is used to predict **Y,** the process may move to 2102. Otherwise, idxCandidate may be equal to the index of the intra prediction mode of **Y.** For instance, if an intra prediction mode in {PLANAR, DC, directional intra prediction modes} is selected to predict **Y,** idxCandidate may be equal to the index of this intra prediction mode. For instance, if DIMD is selected to predict **Y,** idxCandidate may be equal to the index of the first DIMD derived mode. For instance, if TIMD is selected to predict **Y,** idxCandidate may be equal to the index of the first TIMD derived mode, optionally after converting it due to a potential difference in direction density between the directional intra prediction modes in TIMD and those inherited from VVC. For instance, idxCandidate = idxTimdFirst < DC_IDX + 1 ? idxTimdFirst: (idxTimdFirst ≫ 1) + 1, where idxTimdFirst may denote the index of the first TIMD derived mode. For instance, if TMP is selected to predict **Y,** idxCandidate may be equal to the index of the first derived mode obtained by applying DIMD to the prediction of **Y** via TMP. Then, the process may end.

At 2102, if the split mode splitMode of **Y** is equal to NOT _INTRA_SUBPARTITIONS, idxCandidate may be equal to the representation mode index $repIdx^{Y}$ inferred by the used NN during the prediction of **Y,** then the process may end. Otherwise, the process may go to 2103.

At 2103, getSubpartition(*x*, *y*) may return the luma TB ***Z*** overlapping the input position (*x, y*). ***Z*** may arise from the split of **Y** via ISP using the split mode splitMode. Then, idxCandidate may be equal to the representation mode index $repIdx^{Z}$ inferred by the used NN during the prediction of **Z.** Then, the process may end.

FIG. 22, FIG. 23, and FIG. 24 illustrate neighboring blocks for the derivation of the list of MPMs of a given block according to variant embodiments.

FIG. 22 illustrates a first example where a current 8 × 4 luma CB 2200 may be surrounded by the already reconstructed 16 × 4 luma CB 2201 and the already reconstructed 4 × 4 luma CB 2202. There may exist already reconstructed luma CB neither on the above-right side of 2200 nor on the bottom-left side of 2200. 2201 may be predicted by the directional intra prediction mode of index 34. 2202 may be predicted by a NN-based intra prediction, inferring the representation mode index $repIdx^{Y}$ during the prediction of 2202. Then, after the second step of the derivation of the list of MPMs of 2200, this list may be {PLANAR_IDX, $repIdx^{Y}$, 34}, assuming that $repIdx^{Y}$ is neither equal to PLANAR_IDX nor 34.

FIG. 23 illustrates a second example where a current 8 × 4 luma CB 2300 may be surrounded by the already reconstructed 16 × 4 luma CB 2301, the already reconstructed 4 × 4 luma CB 2302, and the already reconstructed 4 × 16 luma CB 2303. No luma CB may be already reconstructed on the above-right side of 2300. 2301 may be predicted by the NN-based intra prediction and split vertically into 4 4 × 4 luma TBs. $repIdx^{Zi}$ may denote the representation mode index inferred by the used NN during the prediction of the luma TB of index *i*, $i \in [\![0, 3]\!]$. 2302 may be predicted by DC. 2303 may be predicted by the NN-based intra prediction and split horizontally into 4 4 × 4 luma TBs. $repIdx^{\bar{Z}i}$ may denote the representation mode index inferred by the used NN during the prediction of the luma TB of index *i*, $i \in [\![0, 3]\!]$. Then, after the second step of the derivation of the list of MPMs of 2300, this list may be {PLANAR_IDX, DC_IDX, $repIdx^{Z3}$, $repIdx^{Z1}$, $repIdx^{\bar{Z}0}$}, assuming that $repIdx^{Z3}$ not in {PLANAR_IDX, DC_IDX, $repIdx^{Z1}$, $repIdx^{\bar{Z}0}$}, $repIdx^{Z1}$ not in {PLANAR_IDX, DC_IDX, $repIdx^{\bar{Z}0}$}, and $repIdx^{\bar{Z}0}$ not in {PLANAR_IDX, DC_IDX}.

FIG. 24 illustrates a third example where a current 4 × 8 luma CB 2400 may be surrounded by the already reconstructed 16 × 8 luma CB 2401, the already reconstructed 8 × 8 luma CB 2402, and the already reconstructed 8 × 16 luma CB 2403. 2401 may be predicted by the NN-based intra prediction and split vertically into 4 4 × 8 luma TBs. $repIdx^{Zi}$ may denote the representation mode index inferred by the used NN during the prediction of the luma TB of index *i*, $i \in [\![0, 3]\!]$, 2402 may be predicted by TIMD. The indices of the first and second derived TIMD modes may be 130 and 98. 2403 may be predicted by PLANAR and split horizontally into 4 8 × 4 luma TBs. Then, after the second step of the derivation of the list of MPMs of 2400, this list may be {PLANAR_IDX, $repIdx^{Z0}$, 66, $repIdx^{Z1}$}, assuming that $repIdx^{Z0}$ not in {PLANAR_IDX, 66, $repIdx^{Z0}$} and $repIdx^{Z0}$ not in {PLANAR_IDX, 66}.

According to yet other combination of variant embodiments, the variant for NN inferring transform indices and/or representation mode indices during the prediction of a TB inside a CB, may apply to the definition of the Direct Mode (DM). FIG. 25 illustrates the derivation of DM of a given block according to an embodiment. At 2500, the definition of the DM of a given pair of chroma CBs, each chroma CB having its top-left pixel at position (*x*, *y*) in its associated chroma channel, may begin. At 2501, getBlockLumaCollocated(*x*, *y*) may return the luma CB **Y** that belongs to the luma channel of the current frame and that is collocated with this given pair of chroma CBs. At 2502, if **Y** is predicted by the NN-based intra prediction, the process may advance to 2503. Otherwise, the DM may be equal to the index of the intra prediction mode **of Y.** For instance, if an intra prediction mode in {PLANAR, DC, directional intra prediction modes} is selected to predict **Y,** the DM may be equal to the index of this intra prediction mode. For instance, if DIMD is selected to predict **Y,** the DM may be equal to the index of the first DIMD derived mode. For instance, if TIMD is selected to predict **Y,** the DM may be equal to the index of the first TIMD derived mode, optionally after converting it due to a potential difference in direction density between the directional intra prediction modes in TIMD and those inherited from VVC. For instance, idxCandidate = idxTimdFirst < DC_IDX + 1 ? idxTimdFirst : (idxTimdFirst ≫ 1) + 1, where idxTimdFirst may denote the index of the first TIMD derived mode. For instance, if TMP is selected to predict **Y,** the DM may be equal to the index of the first derived mode obtained by applying DIMD to the prediction of **Y** via TMP. Then, the process may end. At 2503, if the split mode splitMode of **Y** is equal to NOT_INTRA_SUBPARTITIONS, the DM may be equal to the representation mode index $repIdx^{Y}$ inferred by the used NN during the prediction of **Y,** and the process may end. Otherwise, the process may move on to 2504. At 2504, getSubpartitionLumaCollocated(*x*, *y*) may return the luma TB ***Z*** that belongs to the luma channel of the current frame and that is collocated with this given pair of chroma CBs. ***Z*** may arise from the split of **Y** via ISP using the split mode splitMode. Then, the DM may be equal to the representation mode index $repIdx^{Z}$ inferred by the used NN during the prediction of ***Z.*** Then, the process may end.

FIG. 26, and FIG. 27 illustrate luma and chroma blocks for the derivation of the DM according to variant embodiments.

FIG. 26 illustrate a first example for the derivation of the DM according to variant embodiment. The current frame may be decoded in chroma format 4: 2: 0. The pixel at the top-left of the *w* × *h* blue chroma CB 2600 may be at *(x,y)* in the blue chroma channel of the current frame. The pixel at the top-left of the *w* × *h* red chroma CB 2601 may be at *(x,y)* in the red chroma channel of the current frame. As the position ((*x* « 1) + *w*, (*y* « 1) + *h*) in the luma channel of the current frame may be collocated with the position (x + (*w* » 1), *y* + (*h* » 1)) in each of the two chroma channels of the current frame, the $\dot{w} \times \dot{h}$ luma CB 2602 may be collocated with 2600 and 2601. 2602 may be predicted via the NN-based intra prediction and split vertically into 4 luma TBs. $repIdx^{Zi}$ may denote the representation mode index inferred by the used NN during the prediction of the luma TB of index *i*, $i \in [\![0, 3]\!]$. By applying the method of FIG. 25 to 2600 and 2601 of FIG. 26, the DM of 2600 and 2601 may be equal to $repIdx^{Z1}$.

FIG. 27 illustrate a second example for the derivation of the DM according to variant embodiment. The current frame may be decoded in chroma format 4: 4: 4. The pixel at the top-left of the $w \times h$ blue chroma CB 2700 may be at *(x,y)* in the blue chroma channel of the current frame. The pixel at the top-left of the $w \times h$ red chroma CB 2701 may be at $(x, y)$ in the red chroma channel of the current frame. As the position $(x + (w \gg 1), y + (h \gg 1))$ in the luma channel of the current frame may be collocated with the position $(x + (w \gg 1), y + (h \gg 1))$ in each of the two chroma channels of the current frame, the $\dot{w} \times \dot{h}$ luma CB 2702 may be collocated with 2700 and 2701. 2702 may be predicted via the NN-based intra prediction. $\text{repIdx}^Y$ may denote the representation mode index inferred by the used NN during the prediction of 2702. By applying the method of FIG. 25 to 2700 and 2701 of FIG. 27, the DM of 2700 and 2701 may be equal to $\text{repIdx}^Y$.

**NN-based intra prediction featuring truncated operation.**

In a variant embodiment, a NN $f_{\overline{h},\overline{w}}(.\,;\theta_{\overline{h},\overline{w}})$ dedicated to the prediction of blocks of size $\overline{w} \times \overline{h}$ may be used to predict a given block of size $w \times h$, $\overline{w} \geq w$ and $\overline{h} \geq h$, thanks to a truncation of some operations inside the NN $f_{\overline{h},\overline{w}}(.\,;\theta_{\overline{h},\overline{w}})$. FIG. 28 illustrates a method for NN-based intra prediction with truncation of some operations according to an embodiment. At 2800, the prediction of the $w \times h$ block $\boldsymbol{Y}$ via the NN-based intra prediction may start. At 2801, a "virtual" $\overline{w} \times \overline{h}$ block $\overline{\boldsymbol{Y}}$ having the same position $(x, y)$ in the current channel of the current frame as $\boldsymbol{Y}$ and at least one dimension enlarged with respect to $\boldsymbol{Y}$, i.e. $\overline{w} \geq w$ and $\overline{h} \geq h$, may be defined. Advantageously, a virtual block may allow defining a block whose size belong to a set of block size for which a the NN-based intra prediction mode exists for prediction. However, such truncated operations may apply to others processing. At 2802, the context $\boldsymbol{X}$ around the "virtual" $\overline{w} \times \overline{h}$ block $\overline{\boldsymbol{Y}}$ may be extracted, e.g. from the current channel of the current frame. At 2803, a preprocessing may be optionally applied to $\boldsymbol{X}$, yielding $\tilde{\boldsymbol{X}}$. At 2804, $f_{\overline{h},\overline{w}}(.\,;\theta_{\overline{h},\overline{w}})$ may be fed with $\tilde{\boldsymbol{X}}$, and optionally with other inputs. Then, the inference of $f_{\overline{h},\overline{w}}(.\,;\theta_{\overline{h},\overline{w}})$ may be run while truncating some operations, yielding $\tilde{\boldsymbol{Y}}$. At 2805, a postprocessing may be optionally applied to $\tilde{\boldsymbol{Y}}$, yielding the final $w \times h$ prediction $\hat{\boldsymbol{Y}}$ of $\boldsymbol{Y}$. At 2806, the prediction of the $w \times h$ block $\boldsymbol{Y}$ via the NN-based intra prediction may end.

According to a first variant, truncated operations apply in the last layer of the intra prediction NN. In this first variant, a NN $f_{\overline{h},\overline{w}}(.\,;\theta_{\overline{h},\overline{w}})$ whose last layer may feature an affine transform, optionally followed by a non-linear operation, and dedicated to the prediction of blocks of size $\overline{w} \times \overline{h}$ may be used to predict a given block of size $w \times h$, $\overline{w} \geq w$ and $\overline{h} \geq h$, thanks to the truncation of some operations in its last layer. For instance, if the last layer of $f_{\overline{h},\overline{w}}(.\,;\theta_{\overline{h},\overline{w}})$ performs $\sigma(\boldsymbol{pW} + \boldsymbol{b})$, $\boldsymbol{p} \in \mathbb{R}^k$ gathering the $k \in \mathbb{N}^*$ neurons fed into this last layer, $\boldsymbol{W} \in \mathbb{R}^{k \times \overline{h}\overline{w}}$ gathering the weights of this last layer, $\boldsymbol{b} \in \mathbb{R}^{\overline{h}\overline{w}}$ gathering the biases of this last layer, $\sigma$ denoting a non-linear operation (e.g. pointwise non-linear operation as ReLU or hyperbolic tangent or Leaky ReLU), the truncated operations may be expressed as $\tilde{\boldsymbol{Y}} = \sigma(\boldsymbol{pW}_{:,\Omega} + \boldsymbol{b}_{\Omega})$, $\tilde{\boldsymbol{Y}} \in \mathbb{R}^{hw}$ being the output of the truncated operations, $\Omega$ may denote a set of hw indices of columns in $\boldsymbol{W}$.

According to a second variant, truncated operations apply linear transform in the last layer of the intra prediction NN. In this second variant, a NN $f_{\overline{h},\overline{w}}(.\,;\theta_{\overline{h},\overline{w}})$ whose last layer may feature a linear transform and dedicated to the prediction of blocks of size $\overline{w} \times \overline{h}$ may be used to predict a given block of size $w \times h$, $\overline{w} \geq w$ and $\overline{h} \geq h$, thanks to the truncation of this linear transform in its last layer. For instance, if the last layer of $f_{\overline{h},\overline{w}}(.\,;\theta_{\overline{h},\overline{w}})$ performs $\boldsymbol{pW}$, $\boldsymbol{p} \in \mathbb{R}^k$ gathering the $k \in \mathbb{N}^*$ neurons fed into this last layer, $\boldsymbol{W} \in \mathbb{R}^{k \times \overline{h}\overline{w}}$ gathering the weights of this last layer, the truncated linear transform may be expressed as $\tilde{\boldsymbol{Y}} = \boldsymbol{pW}_{:,\Omega}$, $\tilde{\boldsymbol{Y}} \in \mathbb{R}^{hw}$ being the output of the truncated linear transform. $\Omega$ may denote a set of hw indices of columns in $\boldsymbol{W}$.

The second variant of truncated operations may apply to matrix-based intra prediction. FIG. 29 illustrates an example of neural network-based intra prediction process according to a particular embodiment. For example, FIG. 29 may present the prediction of a given $w \times h$ block $\boldsymbol{Y}$ using a matrix $\boldsymbol{W}$ of $\overline{hw}$ columns dedicated to the prediction of blocks of size $\overline{w} \times \overline{h}$, $\overline{w} > w$ and $\overline{h} \geq h$, via the truncation of the vector-matrix multiplication. Here, $h = 2$, $w = 8$, $\overline{h} = 4$, and $\overline{w} = 8$. At 2900, the "virtual" $\overline{w} \times \overline{h}$ block $\overline{\boldsymbol{Y}}$ with the same position $(x, y)$ in the current channel of the current frame as $\boldsymbol{Y}$ and at least one dimension enlarged with respect to $\boldsymbol{Y}$, i.e. $\overline{w} \geq w$ and $\overline{h} \geq h$, may be defined. At 2901, the context $\boldsymbol{X}$ of 4 rows of reconstructed pixels above the "virtual" $\overline{w} \times \overline{h}$ $\overline{\boldsymbol{Y}}$ and 4 columns of reconstructed pixels on the left side of $\overline{\boldsymbol{Y}}$ may be extracted. At 2902, a preprocessing may be applied to $\boldsymbol{X}$, yielding $\tilde{\boldsymbol{X}}$. Here, it may be assumed that this preprocessing contains at least a flattening of $\boldsymbol{X}$ into a vector. At 2903, $\tilde{\boldsymbol{Y}} = \tilde{\boldsymbol{X}}\boldsymbol{W}_{:,\Omega}$. $\Omega$ may denote a set of hw indices of columns in $\boldsymbol{W}$. At 2904, a postprocessing may be applied to $\tilde{\boldsymbol{Y}}$, yielding the final $w \times h$ prediction $\hat{\boldsymbol{Y}}$ of $\boldsymbol{Y}$. Here, the postprocessing may contain at least a reshaping of $\tilde{\boldsymbol{Y}}$ into a rectangle of height $h$ and width $w$.

The above example may apply equivalently for a context of $n_a$ rows of reconstructed pixels above $\overline{\boldsymbol{Y}}$ and $n_l$ columns of reconstructed pixels on the left side of $\overline{\boldsymbol{Y}}$. For instance, $n_a = n_l = 2$.

In the second variant of truncated operations, the definition of the truncation of the vector-matrix multiplication may depend on the definition of the preprocessing of the context and/or the definition of the postprocessing applied to the result of the truncated vector-matrix multiplication. FIG. 30 illustrates another example of neural network-based intra prediction process with truncation operations according to a particular embodiment. For instance, reusing the example in FIG. 29, the definition of Ω may depend on the "preprocessing" in 2902 and/or the "postprocessing" in 2904. For instance, as shown on FIG. 30, if the "preprocessing" 3002 contains at least a flattening row-wise of $\boldsymbol{X}$ into a vector and the "postprocessing" 3004 contains at least a reshaping row-wise of $\tilde{\boldsymbol{Y}}$ into a rectangle of height $h$ and width $w$, Ω may become $[\![0, hw-1]\!]$, i.e. the set of all the indices from 0 to $hw$ - 1 included. In the latest examples of FIG. 29 and FIG. 30 above, the vector-matrix multiplications may be defined as the multiplication of a row vector and a matrix. Yet, these embodiments may be straightforwardly generalized to any alternative definition of the vector-matrix multiplications. For instance, these embodiments may be easily adapted to the vector-matrix multiplications defined as the multiplication of a matrix and a column vector.

According to a third variant, the NN-based intra prediction featuring truncated operation(s) may be combined with the design of the signaled NN-based intra prediction mode including downsampling and/or transposition of the context. For instance, reusing the example in Table 4 and exploiting the option of predicting a given block of size $w \times h$ via $f_{\overline{h},\overline{w}}(. ; \theta_{\overline{h},\overline{w}})$ dedicated to the prediction of blocks of size $\overline{w} \times \overline{h}$ thanks to the truncation of some operations in $f_{\overline{h},\overline{w}}(. ; \theta_{\overline{h},\overline{w}})$ when $w \times h \in$ {1 × 16,16 × 1,1 × 32,32 × 1,2 × 32,32 × 2}, Table 4 may become Table 10. In the changed parts, a pair of square brackets may gather the values of $h$, $\overline{h}$, $w$, and $\overline{w}$ used for predicting the associated block via $f_{\overline{h},\overline{w}}(. ; \theta_{\overline{h},\overline{w}})$ dedicated to the prediction of blocks of size $\overline{w} \times \overline{h}$ thanks to the truncation of some operations inside $f_{\overline{h},\overline{w}}(. ; \theta_{\overline{h},\overline{w}})$. In the examples of table 4 and table 10:

T={4×4, 4×8, 4×16, 16×4, 4×32, 32×4, 8×8, 8×16, 16×8, 832, 32×8, 16×16, 16×32, 32×32, 64×64}

*Table 10: An example of definition of the parameters involved in the signaling of the split mode ISP and in the selection of the NN for prediction according to a variant embodiment.*

| widthY × heightY | NN predicting **Y** with {transpo, γ, δ} | isSplit Allowed$_0$ | NN predicting $\boldsymbol{Z}_i^{(0)}$ with {transpo, γ, δ} | isSplit Allowed$_1$ | NN predicting $\boldsymbol{Z}_i^{(1)}$ with {transpo, γ, δ} |
|---|---|---|---|---|---|
| 4 × 4 | $f_{4,4}(. ; \theta_{4,4})$ with {no, 1, 1} | false | | false | |
| 4 × 8 | $f_{4,8}(. ; \theta_{4,8})$ with {yes, 1, 11 | false | | false | |
| 8 × 4 | $f_{4,8}(. ; \theta_{4,8})$ with {no, 1,1} | false | | false | |
| 4 × 16 | $f_{4,16}(. ; \theta_{4,16})$ with {yes, 1, 1} | true | $f_{4,4}(. ; \theta_{4,4})$ with {no, 1, 11 | true | [$h = \overline{h}$ = 16, $w$ = 1, $\overline{w}$ = 4] $f_{4,16}(. ; \theta_{4,16})$ with {yes, 1, 1} |
| 16 × 4 | $f_{4,16}(. ; \theta_{4,16})$ with {no, 1,1} | true | [$h$ = 1, $\overline{h}$ = 4, $w = \overline{w}$ = 16] $f_{4,16}(. ; \theta_{4,16})$ with {no, 1, 1} | true | $f_{4,4}(. ; \theta_{4,4})$ with {no, 1, 11 |
| 4 × 32 | $f_{4,32}(. ; \theta_{4,32})$ with {yes, 1, 1} | true | $f_{4,8}(. ; \theta_{4,8})$ with {yes, 1, 11 | true | [$h = \overline{h}$ = 32, $w$ = 1, $\overline{w}$ = 4] $f_{4,32}(. ; \theta_{4,32})$ with {yes, 1, 1} |
| 32 × 4 | $f_{4,32}(. ; \theta_{4,32})$ with {no, 1, 11 | true | [$h$ = 1, $\overline{h}$ = 4, $w = \overline{w}$ = 32] $f_{4,32}(. ; \theta_{4,32})$ with {no, 1, 11 | true | $f_{4,8}(. ; \theta_{4,8})$ with {no, 1, 1} |
| 4 × 64 | | | | | |
| 64 × 4 | | | | | |
| 8 × 8 | $f_{8,8}(. ; \theta_{8,8})$ with {no, 1,1} | false | | false | |
| 8 × 16 | $f_{8,16}(. ; \theta_{8,16})$ with {yes, 1, 1} | true | $f_{4,8}(. ; \theta_{4,8})$ with {no, 1, 1} | false | |
| 16 × 8 | $f_{8,16}(. ; \theta_{8,16})$ w | false | | true | $f_{4,8}(. ; \theta_{4,8})$ with {yes, 1, 1} |
| 8 × 32 | $f_{8,16}(. ; \theta_{8,16})$ with {yes, 1, 2} | true | $f_{8,8}(. ; \theta_{8,8})$ with {no, 1, 1} | true | [$h = \overline{h}$ = 32, $w$ = 2, $\overline{w}$ = 4] $f_{4,32}(. ; \theta_{4,32})$ with {yes, 1, 1} |

(continued)

| widthY × heightY | NN predicting **Y** with {transpo, γ, δ} | isSplit Allowed$_0$ | NN predicting $\mathbf{Z}_i^{(0)}$ with {transpo, γ, δ} | isSplit Allowed$_1$ | NN predicting $\mathbf{Z}_i^{(1)}$ with {transpo, γ, δ} |
|---|---|---|---|---|---|
| 32 × 8 | $f_{8,16}(. ; \theta_{8,16})$ with {no, 2, 1} | true | [$h = 2, \overline{h} = 4, w = \overline{w} = 32$] $f_{4,32}(. ; \theta_{4,32})$ with {no, 1, 11 | true | f8,8 (. ; $\theta_{8,8}$) with {no, 1, 11 |
| ... | | | | | |
| 8 × 64 | | | | | |
| 64 × 8 | | | | | |
| 16 × 16 | $f_{16,16}(. ; \theta_{16,16})$ with {no, 1, 1} | true | $f_{4,16}(. ; \theta_{4,16})$ with {no, 1, 1} | true | $f_{4,16}(. ; \theta_{4,16})$ with {yes, 1, 1} |
| 16 × 32 | $f_{16,16}(. ; \theta_{16,16})$ with {no, 1, 2} | true | $f_{8,16}(. ; \theta_{8,16})$ with {no, 1, 11 | true | $f_{4,32}(. ; \theta_{4,32})$ with {yes, 1, 11 |
| 32 × 16 | $f_{16,16}(. ; \theta_{16,16})$ with {no, 2, 1} | true | $f_{4,32}(. ; \theta_{4,32})$ with {no, 1, 11 | true | $f_{8,16}(. ; \theta_{8,16})$ with {yes, 1, 1} |
| 32× 32 | $f_{16,16}(. ; \theta_{16,16})$ with {no, 2, 2} | true | $f_{8,16}(. ; \theta_{8,16})$ with {no, 2, 1} | true | $f_{8,16}(. ; \theta_{8,16})$ with {yes, 1, 2} |
| 64 × 64 | $f_{16,16}(. ; \theta_{16,16})$ with {no, 4, 4} | false | | false | |

As another example, reusing the example in Table 4 and exploiting the option of predicting a given block of size $w \times h$ via $f_{\overline{h},\overline{w}}(. ; \theta_{\overline{h},\overline{w}})$ dedicated to the prediction of blocks of size $\overline{w} \times \overline{h}$ thanks to the truncation of some operations in $f_{\overline{h},\overline{w}}(. ; \theta_{\overline{h},\overline{w}})$ when $w \times h \in \{1 \times 16, 16 \times 1, 1 \times 32, 32 \times 1, 2 \times 32, 32 \times 2\}$, Table 4 may become Table 11.

*Table 11: An example of definition of the parameters involved in the signaling of the split mode ISP and in the selection of the NN for prediction according to a variant embodiment.*

| widthY × heightY | NN predicting **Y** with {transposition, γ, δ} | isSplit Allowed$_0$ | NN predicting $\mathbf{Z}_i^{(0)}$ with {transposition, γ, δ} | isSplit Allowed$_1$ | NN predicting $\mathbf{Z}_i^{(1)}$ with {transposition, y, δ} |
|---|---|---|---|---|---|
| 4 × 4 | $f_{4,4}(. ; \theta_{4,4})$ with {no, 1, 1} | false | | false | |
| 4 × 8 | $f_{4,8}(. ; \theta_{4,8})$ with {yes, 1, 11 | false | | false | |
| 8 × 4 | $f_{4,8}(. ; \theta_{4,8})$ with {no, 1,1} | false | | false | |
| 4 × 16 | $f_{4,16}(. ; \theta_{4,16})$ with {yes, 1, 1} | true | $f_{4,4}(. ; \theta_{4,4})$ with {no, 1, 1} | true | [$h = \overline{h} = 16, w = 1, \overline{w} = 4$] $f_{4,16}(. ; \theta_{4,16})$ with {yes, 1, 11 |
| 16 × 4 | $f_{4,16}(. ; \theta_{4,16})$ with {no, 1,1} | true | [$h = 1, \overline{h} = 4, w = \overline{w} = 16$] $f_{4,16}(. ; \theta_{4,16})$ with {no, 1, 11 | true | $f_{4,4}(. ; \theta_{4,4})$ with {no, 1, 1} |
| 4 × 32 | $f_{4,32}(. ; \theta_{4,32})$ with {yes, 1, 1} | true | $f_{4,8}(. ; \theta_{4,8})$ with {yes, 1, 1} | true | [$h = \overline{h} = 32, w = 1, \overline{w} = 4$] $f_{4,32}(. ; \theta_{4,32})$ with {yes, 1, 11 |
| 32 × 4 | $f_{4,32}(. ; \theta_{4,32})$ with {no, 1,1} | true | [$h = 1, \overline{h} = 4, w = \overline{w} = 32$] $f_{4,32}(. ; \theta_{4,32})$ with {no, 1, 11 | true | $f_{4,8}(. ; \theta_{4,8})$ with {no, 1, 1} |
| 4 × 64 | | | | | |
| 64 × 4 | | | | | |

(continued)

| widthY × heightY | NN predicting **Y** with {transposition, $\gamma$, $\delta$} | isSplit Allowed$_0$ | NN predicting $\mathbf{Z}_i^{(0)}$ with {transposition, $\gamma$, $\delta$} | isSplit Allowed$_1$ | NN predicting $\mathbf{Z}_i^{(1)}$ with {transposition, y, $\delta$} |
|---|---|---|---|---|---|
| 8 × 8 | $f_{8,8}$ (. ; $\theta_{8,8}$) with {no, 1, 11 | false | | false | |
| 8 × 16 | $f_{8,16}$ (. ; $\theta_{8,16}$) with {yes, 1, 1} | true | $f_{4,8}$(. ; $\theta_{4,8}$) with {no, 1, 11 | false | |
| 16 × 8 | $f_{8,16}$ (. ; $\theta_{8,16}$) with {no, 1, 1} | false | | true | $f_{4,8}$(. ; $\theta_{4,8}$) with {yes, 1, 11 |
| 8 × 32 | $f_{8,16}$ (. ; $\theta_{8,16}$) with {yes, 1, 2} | true | $f_{8,8}$ (. ; $\theta_{8,8}$) with {no, 1, 11 | true | [$h = \bar{h} = 32$, $w = 2$, $\bar{w} = 8$] $f_{8,16}$ (. ; $\theta_{8,16}$) with {yes, 1, 2} |
| 32 × 8 | $f_{8,16}$ (. ; $\theta_{8,16}$) with {no, 2, 1} | true | [$h = 2$, $\bar{h} = 8$, $w = \bar{w} = 32$] $f_{8,16}$(. ; $\theta_{8,16}$) with {no, 2, 1} | true | $f_{8,8}$ (. ; $\theta_{8,8}$) with {no, 1, 1} |
| 8 × 64 | | | | | |
| | | | | | |
| 64 × 8 | | | | | |
| 16 × 16 | $f_{16,16}$ (. ; $\theta_{16,16}$) with {no, 1, 1} | true | $f_{4,16}$ (. ; $\theta_{4,16}$) with {no, 1, 1} | true | $f_{4,16}$ (. ; $\theta_{4,16}$) with {yes, 1, 1} |
| 16 × 32 | $f_{16,16}$ (. ; $\theta_{16,16}$) with {no, 1, 2} | true | $f_{8,16}$ (. ; $\theta_{8,16}$) with {no, 1, 1} | true | $f_{4,32}$(. ; $\theta_{4,32}$) with {yes, 1, 1} |
| 32 × 16 | $f_{16,16}$ (. ; $\theta_{16,16}$) with {no, 2, 1} | true | $f_{4,32}$(. ; $\theta_{4,32}$) with {no, 1, 1} | true | $f_{8,16}$ (. ; $\theta_{8,16}$) with {yes, 1, 1} |
| 32 × 32 | $f_{16,16}$ (. ; $\theta_{16,16}$) with {no, 2, 2} | true | $f_{8,16}$ (. ; $\theta_{8,16}$) with {no, 2, 1} | true | $f_{8,16}$ (. ; $\theta_{8,16}$) with {yes, 1, 2} |

Note that, in Table 10 and Table 11, several possible values of widthY × heightY are not displayed for conciseness. Yet, for each of these missing values, all the other cells in the same row would be empty as Y cannot be predicted by a NN in the NN-based intra prediction mode.

According to a third variant, the NN-based intra prediction featuring truncated operation(s) may be combined with the design of the NN-based intra prediction replacing conventional intra prediction modes including downsampling and/or transposition of the context. For instance, reusing the example in Table 8 along with Fig. 16 and exploiting the option of predicting a given block of size $w \times h$ via $f_{\bar{h},\bar{w}}(\,.\,;\theta_{\bar{h},\bar{w}})$ dedicated to the prediction of blocks of size $\bar{w} \times \bar{h}$ thanks to the truncation of some operations inside $f_{\bar{h},\bar{w}}(\,.\,;\theta_{\bar{h},\bar{w}})$ when $w \times h \in \{1 \times 16, 16 \times 1, 1 \times 32, 32 \times 1, 2 \times 32, 32 \times 2\}$, Table 8 may become Table 12. In the modified parts, a pair of square brackets may contain the values of $h$, $\bar{h}$, $w$, and $\bar{w}$ used for predicting the associated block via $f_{\bar{h},\bar{w}}(\,.\,;\theta_{\bar{h},\bar{w}})$ dedicated to the prediction of blocks of size $\bar{w} \times \bar{h}$ thanks to the truncation of some operations in $f_{\bar{h},\bar{w}}(\,.\,;\theta_{\bar{h},\bar{w}})$. In the example of table 12, $T = \{4 \times 4, 4 \times 8, 8 \times 4, 4 \times 16, 16 \times 4, 4 \times 32, 32 \times 4, 8 \times 8, 8 \times 16, 16 \times 8, 8 \times 32, 32 \times 8, 16 \times 16, 16 \times 32, 32 \times 16, 32 \times 32, 64 \times 64\}$

*Table 12: An example of definition of the parameters involved in the signaling of the split mode ISP and in the selection of the NN for prediction according to a variant embodiment.*

| widthY × heightY | isSubs ByNN$^{Y}$ | NN predicting Y with {transposition, $\gamma$, $\delta$} | isSubs $\mathrm{ByNN}_0^{Z}$ | NN predicting $Z_i^{(0)}$ with {transposition, $\gamma$, $\delta$} | isSubs $\mathrm{ByNN}_1^{Z}$ | NN predicting $Z_i^{(1)}$ with {transposition, $\gamma$, $\delta$} |
|---|---|---|---|---|---|---|
| 4 × 4 | true | $f_{4,4}^{idxPred}$ (. ; $\theta_{4,4}$) with {no, 1, 1} | false | | false | |

(continued)

| widthY × heightY | isSubs ByNN$^{Y}$ | NN predicting Y with {transposition, $\gamma$, $\delta$} | isSubs $\mathrm{ByNN}_0^{Z}$ | NN predicting $Z_i^{(0)}$ with {transposition, $\gamma$, $\delta$} | isSubs $\mathrm{ByNN}_1^{Z}$ | NN predicting $Z_i^{(1)}$ with {transposition, $\gamma$, $\delta$} |
|---|---|---|---|---|---|---|
| 4 × 8 | true | $f_{4,8}^{idxPred}(.\,;\theta_{4,8})$ with {yes, 1, 1} | false | | false | |
| 8 × 4 | true | $f_{4,8}^{idxPred}(.\,;\theta_{4,8})$ with {no, 1, 1} | false | | false | |
| 4 × 16 | true | $f_{4,16}^{idxPred}(.\,;\theta_{4,16})$ with {yes, 1, 1} | true | $f_{4,4}^{idxPred}(.\,;\theta_{4,4})$ with {no, 1,1} | true | $\begin{bmatrix} h = \bar{h} = 16, \\ w = 1, \bar{w} = 4 \end{bmatrix}$<br>$f_{4,16}^{idxPred}(.\,;\theta_{4,16})$ with {yes, 1, 1} |
| 16 × 4 | true | $f_{4,16}^{idxPred}(.\,;\theta_{4,16})$ wit h {no, 1, 1} | true | $\begin{bmatrix} h = 1, \bar{h} = 4, \\ w = \bar{w} = 16 \end{bmatrix}$<br>$f_{4,16}^{idxPred}(.\,;\theta_{4,16})$ with {no, 1, 11 | true | $f_{4,4}^{idxPred}(.\,;\theta_{4,4})$ with {no, 1, 1} |
| 4 × 32 | true | $f_{4,32}^{idxPred}(.\,;\theta_{4,32})$ with {yes, 1, 1} | true | $f_{4,8}^{idxPred}(.\,;\theta_{4,8})$ with {yes, 1, 1} | true | $\begin{bmatrix} h = \bar{h} = 32, \\ w = 1, \bar{w} = 4 \end{bmatrix}$<br>$f_{4,32}^{idxPred}(.\,;\theta_{4,32})$ with {yes, 1, 1} |
| 32 × 4 | true | $f_{4,32}^{idxPred}(.\,;\theta_{4,32})$ with {no, 1, 1} | true | $\begin{bmatrix} h = 1, \bar{h} = 4, \\ w = \bar{w} = 32 \end{bmatrix}$<br>$f_{4,32}^{idxPred}(.\,;\theta_{4,32})$ with {no, 1, 11 | true | $f_{4,8}^{idxPred}(.\,;\theta_{4,8})$ with {no, 1, 1} |
| ... | | | | | | |
| 4 × 64 | false | | false | | false | |
| 64 × 4 | false | | false | | false | |
| 8 × 8 | true | $f_{8,8}^{idxPred}(.\,;\theta_{8\ 8})$ with {no, 1, 1} | false | | false | |
| 8 × 16 | true | $f_{8,16}^{idxPred}(.\,;\theta_{8,16})$ ith {yes, 1, 1} | true | $f_{4,8}^{idxPred}(.\,;\theta_{4,8})$ with {no, 1, 1} | false | |
| 16 × 8 | true | $f_{8,16}^{idxPred}(.\,;\theta_{8,16})$ ith {no, 1, 1} | false | | true | $f_{4,8}^{idxPred}$ 14,8 $(.\,;\theta_{4,8})$ with {yes, 1, 1} |
| 8 × 32 | true | $f_{8,16}^{idxPred}(.\,;\theta_{8,16})$ ith {yes, 1, 2} | true | $f_{8,8}^{idxPred}(.\,;\theta_{8,8})$ with {no, 1, 1} | true | $\begin{bmatrix} h = \bar{h} = 32, \\ w = 2, \bar{w} = 4 \end{bmatrix}$<br>$f_{4,32}^{idxPred}(.\,;\theta_{4,32})$ with {yes, 1, 11 |
| 32 × 8 | true | $f_{8,16}^{idxPred}(.\,;\theta_{8,16})$ ith {no, 2, 1} | true | $\begin{bmatrix} h = 2, \bar{h} = 4, \\ w = \bar{w} = 32 \end{bmatrix}$<br>$f_{4,32}^{idxPred}(.\,;\theta_{4,32})$ with {no, 1, 1} | true | $f_{8,8}^{idxPred}(.\,;\theta_{8,8})$ with {no, 1, 1} |

(continued)

| widthY × heightY | isSubsByNN$^{Y}$ | NN predicting Y with {transposition, $\gamma$, $\delta$} | isSubsByNN$_0^Z$ | NN predicting $Z_i^{(0)}$ with {transposition, $\gamma$, $\delta$} | isSubsByNN$_1^Z$ | NN predicting $Z_i^{(1)}$ with {transposition, $\gamma$, $\delta$} |
|---|---|---|---|---|---|---|
| 8 × 64 | false | | false | | false | |
| 64 × 8 | false | | false | | false | |
| 16 × 16 | true | $f_{16,16}^{idxPred}(. ; \theta_{16,16})$ with {no, 1, 1} | true | $f_{4,16}^{idxPred}(. ; \theta_{4,16})$ with {no, 1, 1} | true | $f_{4,16}^{idxPred}(. ; \theta_{4,16})$ with {yes, 1, 1} |
| 16 × 32 | true | $f_{16,16}^{idxPred}(. ; \theta_{16,16})$ with {no, 1, 2} | true | $f_{8,16}^{idxPred}(. ; \theta_{8,16})$ with {no, 1, 1} | true | $f_{4,32}^{idxPred}(. ; \theta_{4,32})$ with {yes, 1, 1} |
| 32 × 16 | true | $f_{16,16}^{idxPred}(. ; \theta_{16,16})$ with {no, 2, 1} | true | $f_{4,32}^{idxPred}(. ; \theta_{4,32})$ with {no, 1, 1} | true | $f_{8,16}^{idxPred}(. ; \theta_{8,16})$ with {yes, 1, 1} |
| 32 × 32 | true | $f_{16,16}^{idxPred}(. ; \theta_{16,16})$ with {no, 2, 2} | true | $f_{8,16}^{idxPred}(. ; \theta_{8,16})$ with {no, 2, 1} | true | $f_{8,16}^{idxPred}(. ; \theta_{8,16})$ with {yes, 1, 2} |
| 64 × 64 | true | $f_{16,16}^{idxPred}(. ; \theta_{16,16})$ with {no, 4, 4} | false | | false | |

As another example, reusing the example in Table 8 and exploiting the option of predicting a given block of size $w \times h$ via $f_{\bar{h},\bar{w}}(. ; \theta_{\bar{h},\bar{w}})$ dedicated to the prediction of blocks of size $\bar{w} \times \bar{h}$ thanks to the truncation of some operations in $f_{\bar{h},\bar{w}}(. ; \theta_{\bar{h},\bar{w}})$ when $w \times h$ E {1 × 16,16 × 1,1 × 32, 32 × 1, 2 × 16,16 × 2, 2 × 32, 32 × 2}, Table 8 may become Table 13.

*Table 13: An example of definition of the parameters involved in the signaling of the split mode ISP and in the selection of the NN for prediction according to a variant embodiment.*

| widthY × heightY | isSubsByNN$^{Y}$ | NN predicting Y with {transposition, $\gamma$, $\delta$} | isSubsByNN$_0^Z$ | NN predicting $Z_i^{(0)}$ with {transposition, $\gamma$, $\delta$} | isSubsByNN$_1^Z$ | NN predicting $Z_i^{(1)}$ with {transposition , $\gamma$, $\delta$} |
|---|---|---|---|---|---|---|
| 4 × 4 | true | $f_{4,4}^{idxPred}(. ; \theta_{4,4})$ with {no, 1, 1} | false | | false | |
| 4 × 8 | true | $f_{4,8}^{idxPred}(. ; \theta_{4,8})$ with {yes, 1, 1} | false | | false | |
| 8 × 4 | true | $f_{4,8}^{idxPred}(. ; \theta_{4,8})$ with {no, 1, 1} | false | | false | |
| 4 × 16 | true | $f_{4,16}^{idxPred}(. ; \theta_{4,16})$ with {yes, 1, 1} | true | $f_{4,4}^{idxPred}(. ; \theta_{4,4})$ with {no, 1, 1} | true | $\begin{bmatrix} h = \bar{h} = 16, \\ w = 1, \bar{w} = 4 \end{bmatrix}$ $f_{4,16}^{idxPred}(. ; \theta_{4,16})$ with {yes, 1, 11 |
| 16 × 4 | true | $f_{4,16}^{idxPred}(. ; \theta_{4,16})$ with {no, 1, 1} | true | $\begin{bmatrix} h = 1, \bar{h} = 4, \\ w = \bar{w} = 16 \end{bmatrix}$ $f_{4,16}^{idxPred}(. ; \theta_{4,16})$ with {no, 1, 1} | true | $f_{4,4}^{idxPred}(. ; \theta_{4,4})$ with {no, 1, 1} |

(continued)

| widthY × heightY | isSubsByNN$^Y$ | NN predicting Y with {transposition, $\gamma$, $\delta$} | isSubs $\mathrm{ByNN}_0^Z$ | NN predicting $Z_i^{(0)}$ with {transposition, $\gamma$, $\delta$} | isSubs $\mathrm{ByNN}_1^Z$ | NN predicting $Z_i^{(1)}$ with {transposition , $\gamma$, $\delta$} |
|---|---|---|---|---|---|---|
| 4 × 32 | true | $f_{4,32}^{idxPred}(. ; \theta_{4,32})$ with {yes, 1, 1} | true | $f_{4,8}^{idxPred}(. ; \theta_{4,8})$ with {yes, 1, 1} | true | $\begin{bmatrix} h=\bar{h}=32, \\ w=1,\bar{w}=4 \end{bmatrix}$ $f_{4,32}^{idxPred}(. ; \theta_{4,32})$ with {yes, 1, 11 |
| 32 × 4 | true | $f_{4,32}^{idxPred}(. ; \theta_{4,32})$ with {no, 1, 1} | true | $\begin{bmatrix} h=1,\bar{h}=4, \\ w=\bar{w}=32 \end{bmatrix}$ $f_{4,32}^{idxPred}(. ; \theta_{4,32})$ with {no, 1, 1} | true | $f_{4,8}^{idxPred}$ 74,8 $(. ; \theta_{4,8})$ with {no, 1, 1} |
| ... | | | | | | |
| 4 × 64 | false | | false | | false | |
| 64 × 4 | false | | false | | false | |
| 8 × 8 | true | $f_{8,8}^{idxPred}(. ; \theta_{8\,8})$ with {no, 1, 1} | false | | false | |
| 8 × 16 | true | $f_{8,16}^{idxPred}(. ; \theta_{8,16})$ with {yes, 1, 1} | true | $f_{4,8}^{idxPred}(. ; \theta_{4,8})$ with {no, 1, 1} | true | $\begin{bmatrix} h=\bar{h}=16, \\ w=2,\bar{w}=4 \end{bmatrix}$ $f_{4,16}^{idxPred}(. ; \theta_{4,16})$ with {yes, 1, 1} |
| 16 × 8 | true | $f_{8,16}^{idxPred}(. ; \theta_{8,16})$ with {no, 1, 1} | true | $\begin{bmatrix} h=2,\bar{h}=4, \\ w=\bar{w}=16 \end{bmatrix}$ $f_{4,16}^{idxPred}(. ; \theta_{4,16})$ with {no, 1, 1} | true | $f_{4,8}^{idxPred}(. ; \theta_{4,8})$ with {yes, 1, 1} |
| 8 × 32 | true | $f_{8,16}^{idxPred}(. ; \theta_{8,16})$ with {yes, 1, 2} | true | $f_{8,8}^{idxPred}(. ; \theta_{8,8})$ with {no, 1, 1} | true | $\begin{bmatrix} h=\bar{h}=32, \\ w=2,\bar{w}=8 \end{bmatrix}$ $f_{8,16}^{idxPred}(. ; \theta_{8,16})$ with {yes, 1, 2} |
| 32 × 8 | true | $f_{8,16}^{idxPred}(. ; \theta_{8,16})$ with {no, 2, 1} | true | $\begin{bmatrix} h=2,\bar{h}=8, \\ w=\bar{w}=32 \end{bmatrix}$ $f_{8,16}^{idxPred}(. ; \theta_{8,16})$ with {no, 2, 1} | true | $f_{8,8}^{idxPred}(. ; \theta_{8,8})$ with {no, 1, 1} |
| 8 × 64 | false | | false | | false | |
| 64 × 8 | false | | false | | false | |
| 16 × 16 | true | $f_{16,16}^{idxPred}(. ; \theta_{16,16})$ with {no, 1, 1} | true | $f_{4,16}^{idxPred}(. ; \theta_{4,16})$ with {no, 1, 1} | true | $f_{4,16}^{idxPred}(. ; \theta_{4,16})$ with {yes, 1, 1} |
| 16 × 32 | true | $f_{16,16}^{idxPred}(. ; \theta_{16,16})$ with {no, 1, 2} | true | $f_{8,16}^{idxPred}(. ; \theta_{8,16})$ with {no, 1, 1} | true | $f_{4,32}^{idxPred}(. ; \theta_{4,32})$ with {yes, 1, 1} |
| 32 × 16 | true | $f_{16,16}^{idxPred}(. ; \theta_{16,16})$ with {no, 2, 1} | true | $f_{4,32}^{idxPred}(. ; \theta_{4,32})$ with {no, 1, 1} | true | $f_{8,16}^{idxPred}(. ; \theta_{8,16})$ with {yes, 1, 1} |

(continued)

| widthY $\times$ heightY | isSubsByNN$^{Y}$ | NN predicting Y with {transposition, $\gamma$, $\delta$} | isSubs $\text{ByNN}_0^Z$ | NN predicting $Z_i^{(0)}$ with {transposition, $\gamma$, $\delta$} | isSubs $\text{ByNN}_1^Z$ | NN predicting $Z_i^{(1)}$ with {transposition , $\gamma$, $\delta$} |
|---|---|---|---|---|---|---|
| ... | | | | | | |
| 32 $\times$ 32 | true | $f_{16,16}^{idxPred}(. ; \theta_{16,16})$ with {no, 2, 2} | true | $f_{8,16}^{idxPred}(. ; \theta_{8,16})$ with {no, 2, 1} | true | $f_{8,16}^{idxPred}(. ; \theta_{8,16})$ with {yes, 1, 2} |
| 64 $\times$ 64 | true | $f_{16,16}^{idxPred}(. ; \theta_{16,16})$ with {no, 4, 4} | false | | false | |

As previously mentioned, in Table 12 and Table 13, several possible values of widthY $\times$ heightY are not displayed for conciseness. Yet, for each of these missing values, isSubstitutedByNN$^{Y}$, $\text{isSubstitutedByNN}_0^Z$, and $\text{isSubstitutedByNN}_1^Z$ may be false.

**Generic embodiments for video encoding and decoding.**

Various embodiments previously described that may be used in combination or independently and may be implemented in a generic decoding or encoding method as follows.

FIG. 31 illustrates a method for decoding an image block according to an embodiment. The method 3100 of FIG. 31 may be implemented in an encoder of FIG. 2 or a decoder of FIG. 3. For instance, the method 3100 of FIG. 31 may implement the method of FIG 8A and FIG 8B according to the feature where a flag (NN_flag) indicating that the image block is coded with a NN-based intra prediction is signaled. For instance, the method 3100 of FIG. 31 may implement the method of FIG. 15 wherein an index indicates a current intra prediction mode among a plurality of intra prediction modes, the current intra prediction mode being substituted by a NN-based intra prediction mode. In 3110, an image block associated to an intra prediction mode is determined. The intra prediction mode implements a NN-based intra prediction. In 3120, an ISP split mode to apply for decoding the image block is obtained. The ISP split mode is adapted to fit the neural network-based intra prediction mode according to any of the variants described with FIG. 8A or FIG. 15. In 3130, the image block is partitioned into at least one partition (for instance, one partition if NOT_INTRA_SUBPARTITIONS is determined as on FIG. 4(a), or 4 partitions are determined if HOR_INTRA SUBPARTITIONS of FIG 4(b) or VER_INTRA_SUBPARTITIONS of FIG.4(c)) according to the ISP mode. Then, a NN-based intra prediction of the at least one partition is determined in 3140 using at least one neural network applied to a context comprising pixels adjacent to the at least one partition as described with any of the variants described with FIG. 8B or FIG. 15. Then, by adding a residue to the NN-based intra prediction of the at least one partition, at least one decoded partition is obtained 3150; wherein the at least one decoded partition is part of a decoded image block. The steps 3130, 3140, 3150 are iterated for all the partitions of the image block to obtaining a complete decode block. For instance, the variants of the downsampling, of the transposing or the truncating of NN-intra predictions may apply to this generic decoding method.

FIG. 32 illustrates a method for encoding an image block according to an embodiment. The method 3200 of FIG. 32 may be implemented in an encoder of FIG. 2. For instance, the method 3200 of FIG. 32 may implement the feature where a flag (NN_flag) indicating that the image block is coded with a NN-based intra prediction is signaled. For instance, the method 3200 of FIG. 32 may implement the method wherein an index indicates a current intra prediction mode being substituted by a NN-based intra prediction mode among a plurality of intra prediction modes. In 3210, an image block associated to an intra prediction mode is determined. The intra prediction mode implements a NN-based intra prediction. In 3220, an ISP split mode to apply for encoding the image block is obtained. The ISP split mode is adapted to fit the neural network-based intra prediction mode according to any of the variants described previously. In 3230, the image block is partitioned into at least one partition (for instance, one partition if NOT_INTRA_SUBPARTITIONS is determined as on FIG. 4(a), or 4 partitions are determined if HOR_INTRA SUBPARTITIONS of FIG 4(b) or VER_INTRA_SUBPARTITIONS of FIG.4(c) according to the ISP mode. Then, a NN-based intra prediction of the at least one partition is determined in 3240 using at least one neural network applied to a context comprising pixels adjacent to the at least one partition. Then, by subtracting the NN-based intra prediction of the at least one partition from the original value of the partition, a residue of the at least one partition is obtained, and the partition is encoded accordingly in 3250. Once the residue of the at least partition is obtained, the NN-based intra prediction of the at least one partition is no longer needed for encoding the image block per se. But, the NN may be still useful because, for example its inferred transform indices and its inferred representation index may be needed for further encoding the image block. The steps 3230, 3240, 3250 are iterated for all the partitions of the image block to obtaining a complete encoded block. For instance, the variants of the downsampling, of the transposing or the truncating of NN-intra predictions may apply to this generic decoding method.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

Various methods and other aspects described in this application can be used to modify modules, for example, the motion compensation module (270) of a video encoder 200 as shown in FIG. 2. Moreover, the present aspects are not limited to ECM and VVC, and can be applied, for example, to other standards and recommendations, and extensions of any such standards and recommendations. Unless indicated otherwise, or technically precluded, the aspects described in this application can be used individually or in combination.

Various numeric values are used in the present application. The specific values are for example purposes and the aspects described are not limited to these specific values.

Various implementations involve decoding. "Decoding," as used in this application, may encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application may encompass all or part of the processes performed, for example, on an input video sequence in order to produce an encoded bitstream.

Note that the syntax elements as used herein are descriptive terms. As such, they do not preclude the use of other syntax element names.

The implementations and aspects described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus, for example, a processor, which refers to processing devices in general, including, for example, a computer, a microprocessor, an integrated circuit, or a programmable logic device. Processors also include communication devices, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information may include one or more of, for example, estimating the information, calculating the information, predicting the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a quantization matrix for de-quantization. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

We describe a number of embodiments. Features of these embodiments can be provided alone or in any combination, across various claim categories and types. Further, embodiments can include one or more of the following features, devices, or aspects, alone or in any combination, across various claim categories and types:

## Claims

**1.** A method comprising:

determining an image block associated to an intra prediction mode;
obtaining an ISP split mode to apply for decoding the image block, the ISP split mode being adapted to a neural network-based intra prediction mode;
partitioning the image block into at least one partition according to the ISP mode;
determining (260) a NN-based intra prediction of the at least one partition using at least one neural network applied to a context comprising pixels adjacent to the at least one partition;
obtaining (250) a residue of the at least one partition; and
obtaining at least one decoded partition based on the intra prediction of the at least one partition and the residue of the at least one partition; wherein the at least one decoded partition is part of a decoded image block.

**2.** A method comprising:

determining an image block associated to an intra prediction mode;
obtaining an ISP split mode to apply for encoding the image block, the ISP split mode being adapted to a neural network-based intra prediction mode;
partitioning the image block into at least one partition according to the ISP mode;
determining (260) a NN-based intra prediction of the at least one partition using at least one neural network applied to a context comprising pixels adjacent to the at least one partition;
obtaining (250) a residue of the at least one partition based on the at least one partition and the intra prediction of the at least one partition; and
encoding the image block based on the residue of the at least one partition.

**3.** The method of claim 1 or 2, wherein determining an image block associated to an intra prediction mode comprises obtaining an index indicating a current intra prediction mode among a plurality of intra prediction modes, the current intra prediction mode being substituted with a NN-based intra prediction mode.

**4.** The method of claim 3, wherein determining a NN-based intra prediction of the at least one partition comprises:

obtaining a size of the at least one partition;
responsive to determining (1552, 1502) that the size of at least one partition belong to a set of block sizes for which a neural network exists for intra prediction, obtaining a NN-based intra prediction (1553, 1503) of the at least one partition using at least one neural network applied to a context comprising pixels adjacent to the at least one partition.

**5.** The method of any of claims 3 or 4, wherein determining a NN-based intra prediction of the at least one partition comprises:
obtaining a size of the at least one partition; and responsive to the size of at least one partition:

downsampling a context comprising pixels adjacent to the at least one partition such that a size of the down-sampled context belongs to a set of block sizes for which a neural network exists for intra prediction;
obtaining a downsampled NN-based intra prediction of the at least one partition using at least one neural network applied to the downsampled context;
upsampling the downsampled NN-based intra prediction of the at least one partition to obtain the NN-based intra prediction of the at least one partition.

**6.** The method of any of claims 3 to 5, wherein determining a NN-based intra prediction of the at least one partition comprises:
obtaining a size of the at least one partition; and responsive to the size of at least one partition:

transposing a context comprising pixels adjacent to the at least one partition such that a size of the transposed context belongs to a set of block sizes for which a neural network exists for intra prediction;
obtaining a transposed NN-based intra prediction of the at least one partition using at least one neural network applied to the transposed context;
transposing the transposed NN-based intra prediction of the at least one partition to obtain the NN-based intra prediction of the at least one partition.

**7.** The method of any of claims 3 to 6, wherein determining a NN-based intra prediction of the at least one partition comprises:

obtaining a position of the at least one partition;
responsive to determining that the position of the at least one partition defines a context that belongs to an input of a neural network for intra prediction, a context comprising pixels adjacent to the at least one partition, obtaining a NN-based intra prediction (1553, 1503) of the at least one partition using at least one neural network applied to the context.

**8.** The method of any of claims 3 to 5, wherein determining a NN-based intra prediction of the at least one partition comprises:
obtaining a size of the at least one partition; and responsive to the size of at least one partition:

obtaining a virtual block larger than the at least one partition, such that a size of the virtual block belongs to a set of block sizes for which a neural network exists for intra prediction;
obtaining a NN-based intra prediction of the at least one partition using at least one neural network applied to a context of the virtual block by truncating some neural-network operations, the context of the virtual block comprising pixels adjacent to the virtual block.

**9.** The method of claim 1 or 2, wherein determining an image block associated to an intra prediction mode comprises obtaining a flag (NN_flag) indicating that the image block is coded with a NN-based intra prediction.

**10.** The method of claim 9, wherein obtaining an ISP split mode (802, 803) comprises:

obtaining a size of the at least one partition responsive to an ISP split type belonging to a set of ISP split types;

responsive to determining that the size of the at least one partition belongs to a set of block sizes for which a neural network exists for intra prediction, determining that the ISP split type is allowed for the image block.

**11.** The method of claim 10, further comprising:
responsive to determining that more than one ISP split types are allowed, obtaining an index of the allowed ISP split type for the image block.

**12.** The method of any of claims 10 or 11, wherein the set of ISP split types comprises horizontal split, vertical split, generalized quadtree split.

**13.** The method of claim 10, wherein determining a NN-based intra prediction of the at least one partition comprises:

obtaining a size of the at least one partition responsive to an allowed ISP split type for the image block;
obtaining a NN-based intra prediction (853) of the at least one partition using at least one neural network applied to a context comprising pixels adjacent to the at least one partition.

**14.** The method of claim 13, wherein determining a NN-based intra prediction of the at least one partition further comprises obtaining a flag indicating that the at least of partition of image block is coded with a NN-based intra prediction

**15.** An apparatus comprising one or more processors, wherein the one or more processors are configured to implement the method according to any of claims 1 to 14.

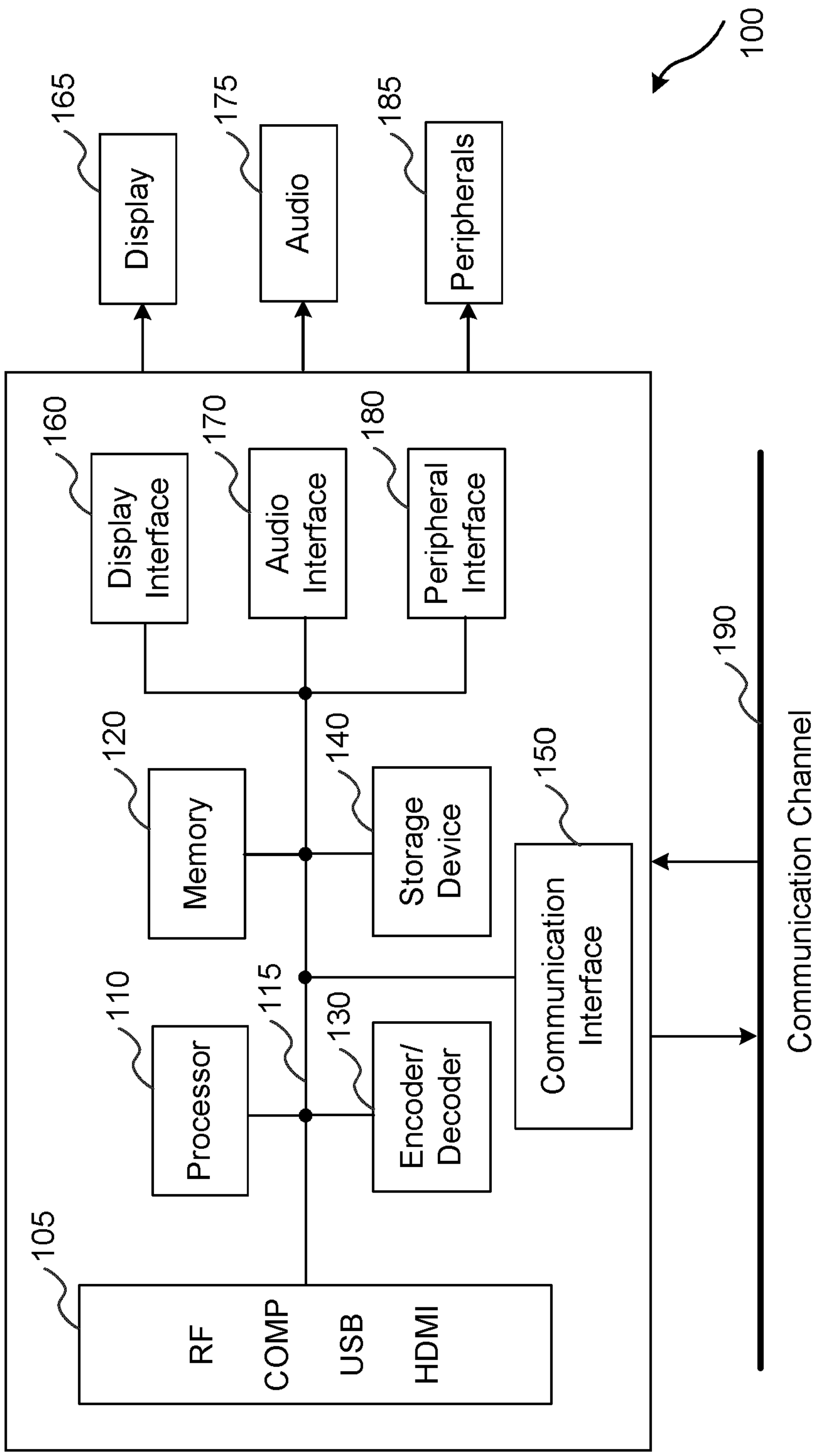
100
165
Display
175
Audio
185
Peripherals
160
Display Interface
170
Audio Interface
180
Peripheral Interface
120
Memory
140
Storage Device
150
Communication Interface
190
Communication Channel
110
Processor
115
130
Encoder/ Decoder
105
RF
COMP
USB
HDMI

FIG. 1

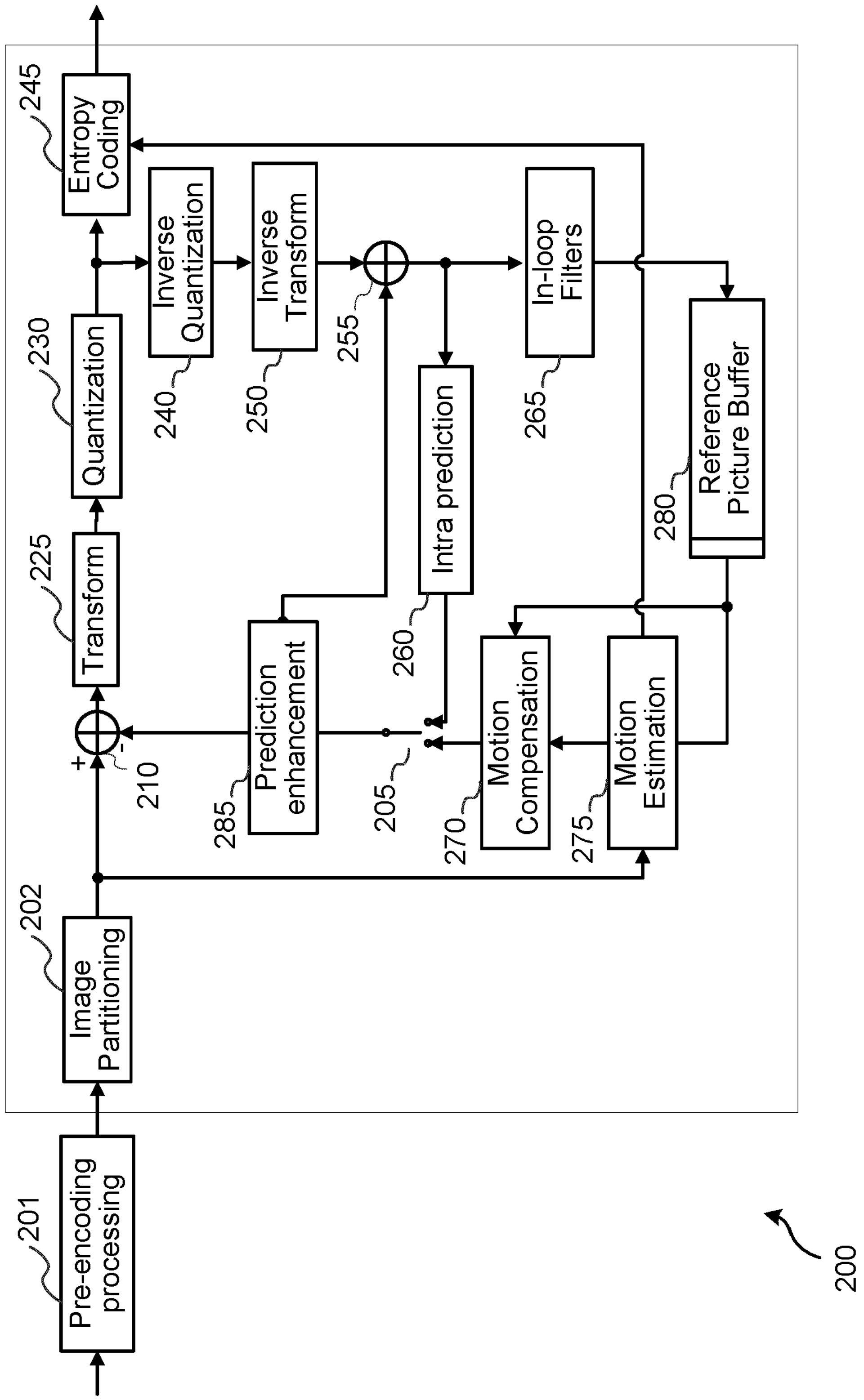
Pre-encoding processing
201
Image Partitioning
202
Transform
225
Quantization
230
Entropy Coding
245
Inverse Quantization
240
Inverse Transform
250
255
In-loop Filters
265
Intra prediction
260
Prediction enhancement
285
+
-
210
205
Motion Compensation
270
Motion Estimation
275
Reference Picture Buffer
280
200

FIG. 2

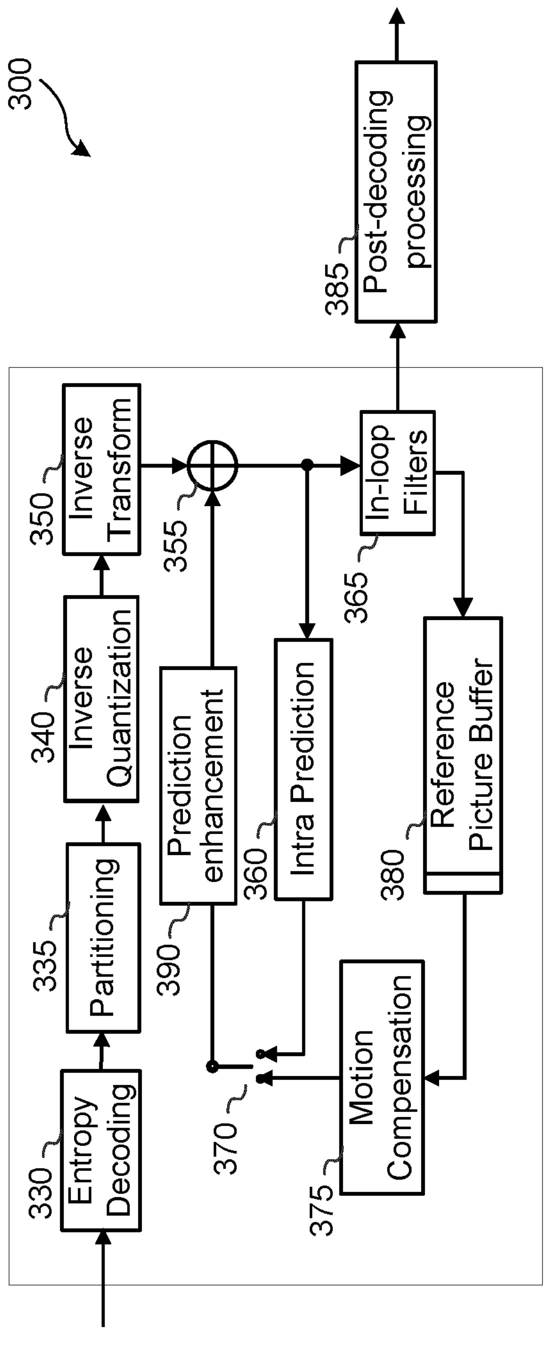
300
330 Entropy Decoding
335 Partitioning
340 Inverse Quantization
350 Inverse Transform
355
390 Prediction enhancement
360 Intra Prediction
370
375 Motion Compensation
365 In-loop Filters
380 Reference Picture Buffer
385 Post-decoding processing

FIG. 3

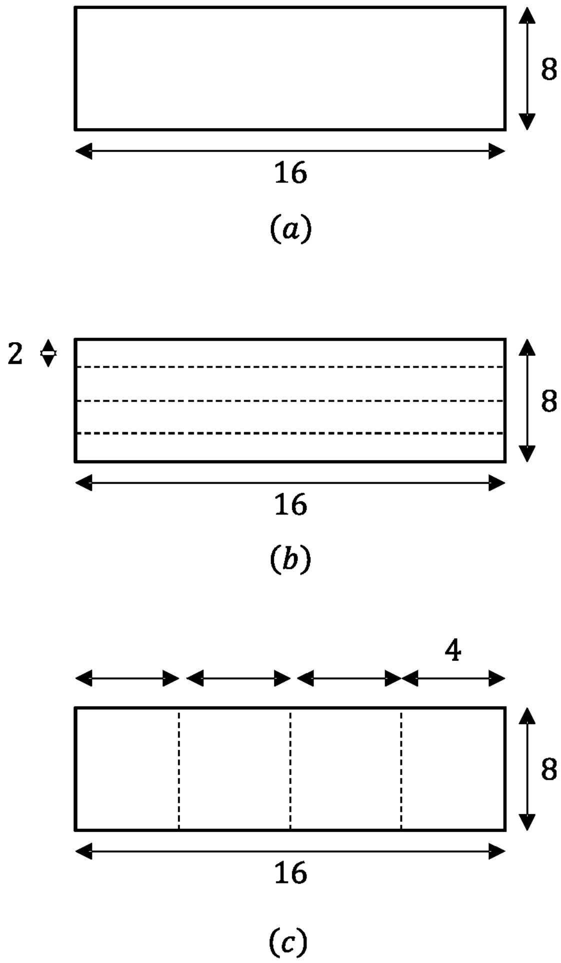


FIG. 4

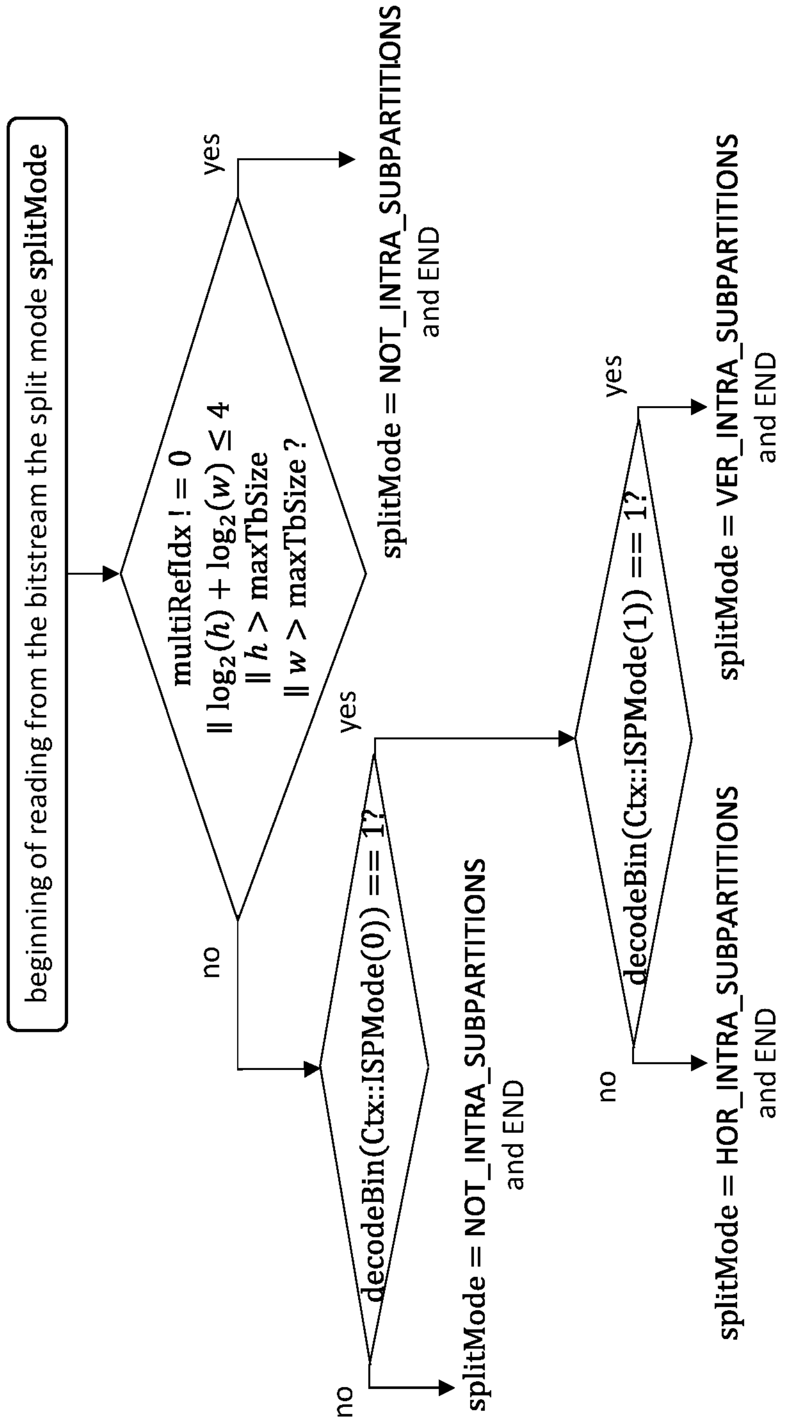
beginning of reading from the bitstream the split mode splitMode
multiRefIdx ! = 0
|| $\log_2(h) + \log_2(w) \leq 4$
|| $h >$ maxTbSize
|| $w >$ maxTbSize ?
yes
no
splitMode = NOT_INTRA_SUBPARTITIONS and END
decodeBin(Ctx::ISPMode(0)) == 1?
yes
no
splitMode = NOT_INTRA_SUBPARTITIONS and END
decodeBin(Ctx::ISPMode(1)) == 1?
yes
no
splitMode = VER_INTRA_SUBPARTITIONS and END
splitMode = HOR_INTRA_SUBPARTITIONS and END

FIG. 5

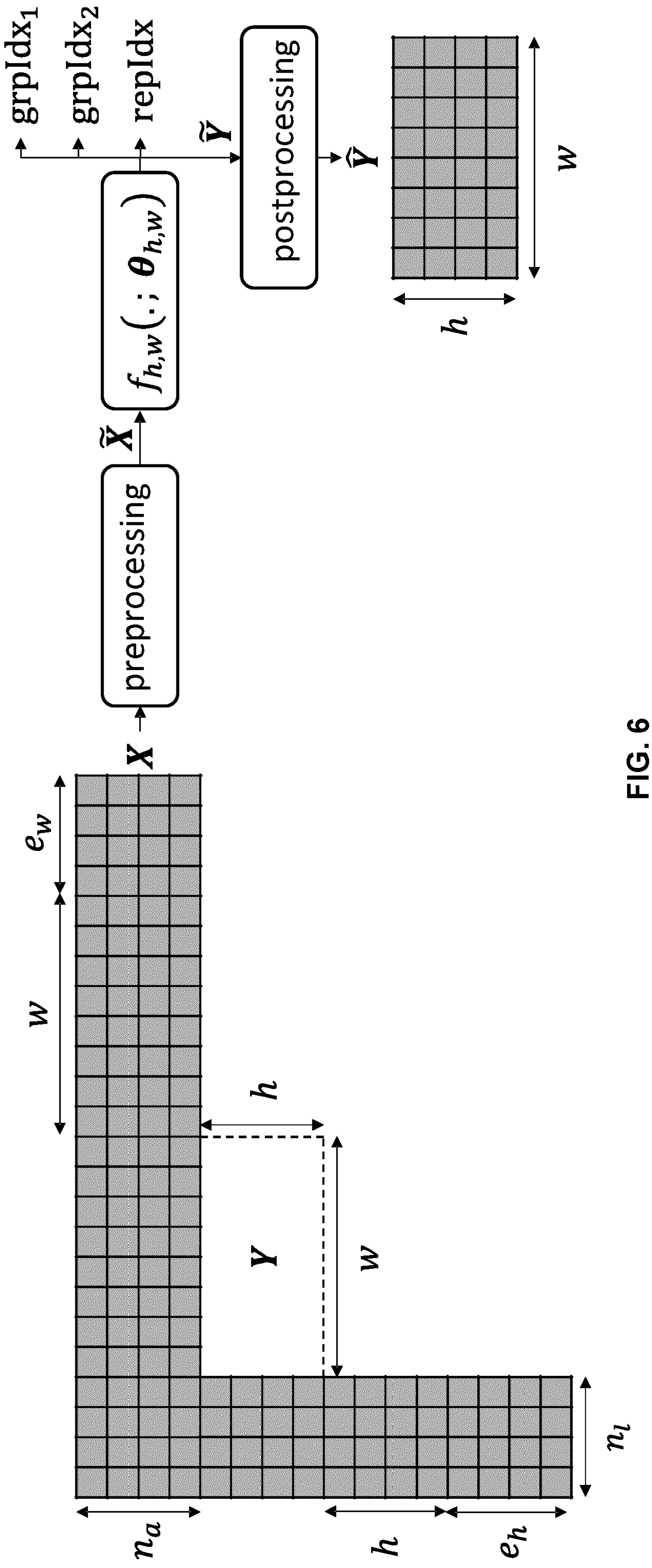

$\mathrm{grpIdx}_1$
$\mathrm{grpIdx}_2$
repIdx
$\widetilde{\boldsymbol{Y}}$
postprocessing
$\widehat{\boldsymbol{Y}}$
$f_{h,w}(\cdot\,;\,\boldsymbol{\theta}_{h,w})$
$\widetilde{\boldsymbol{X}}$
preprocessing
$\boldsymbol{X}$
$e_w$
$w$
$h$
$\boldsymbol{Y}$
$n_a$
$e_h$
$n_l$


FIG. 6

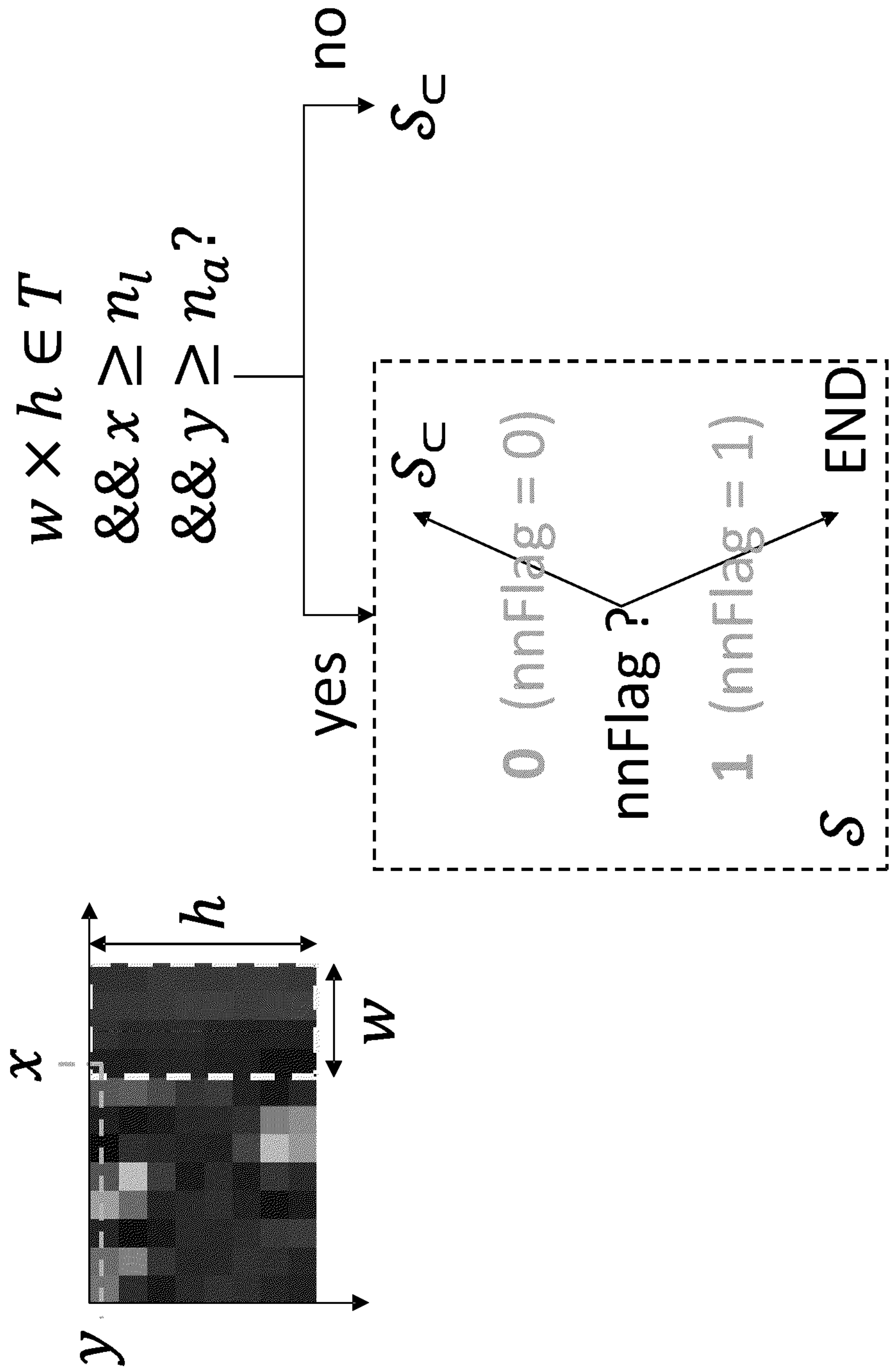


FIG. 7

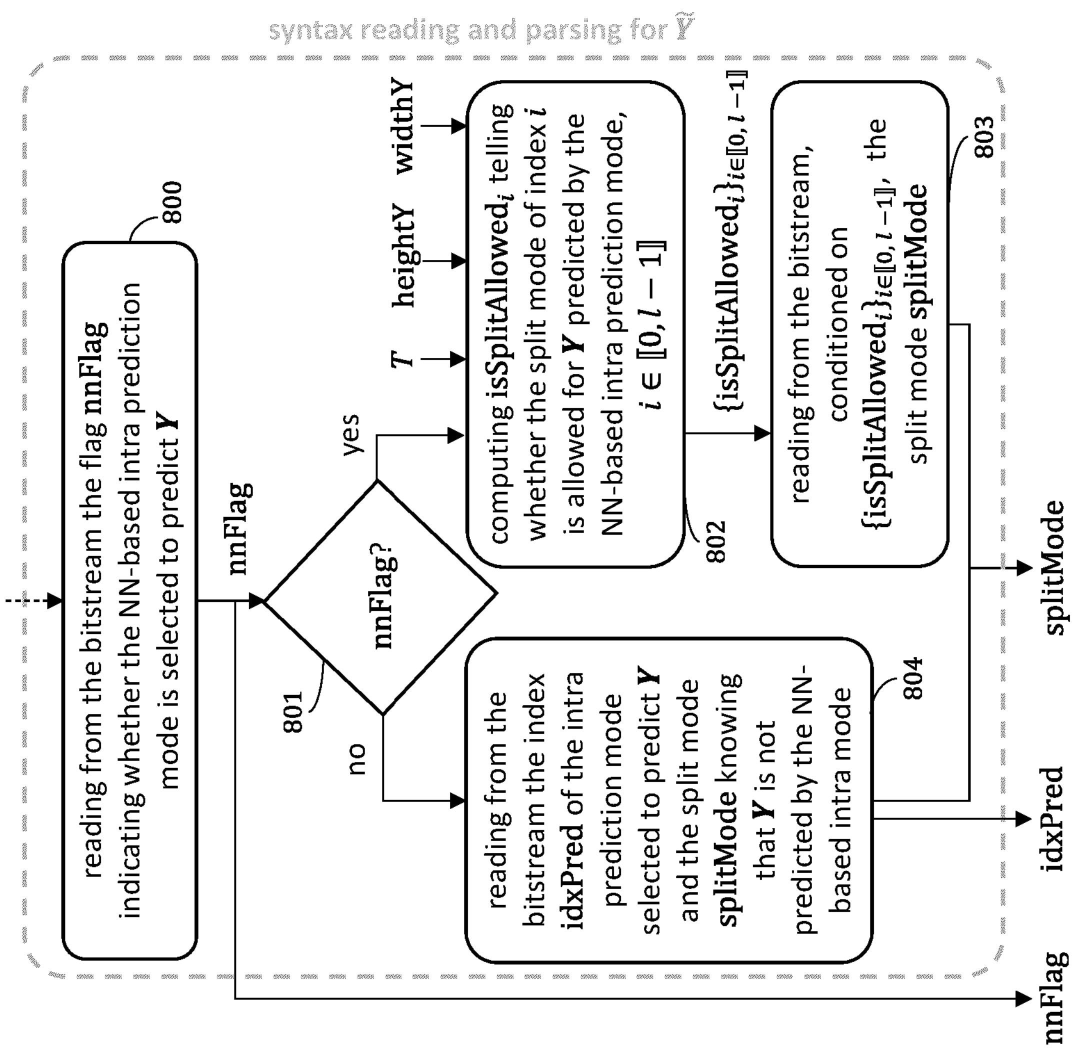

syntax reading and parsing for $\tilde{Y}$
reading from the bitstream the flag nnFlag indicating whether the NN-based intra prediction mode is selected to predict $\boldsymbol{Y}$
800
nnFlag
nnFlag?
801
yes
no
$\boldsymbol{T}$
heightY
widthY
computing $\mathbf{isSplitAllowed}_i$ telling whether the split mode of index $\boldsymbol{i}$ is allowed for $\boldsymbol{Y}$ predicted by the NN-based intra prediction mode, $i \in [\![0, l-1]\!]$
802
$\{\mathbf{isSplitAllowed}_i\}_{i \in [\![0, l-1]\!]}$
reading from the bitstream, conditioned on $\{\mathbf{isSplitAllowed}_i\}_{i \in [\![0, l-1]\!]}$, the split mode splitMode
803
reading from the bitstream the index idxPred of the intra prediction mode selected to predict $\boldsymbol{Y}$ and the split mode splitMode knowing that $\boldsymbol{Y}$ is not predicted by the NN-based intra mode
804
nnFlag
idxPred
splitMode


FIG. 8A

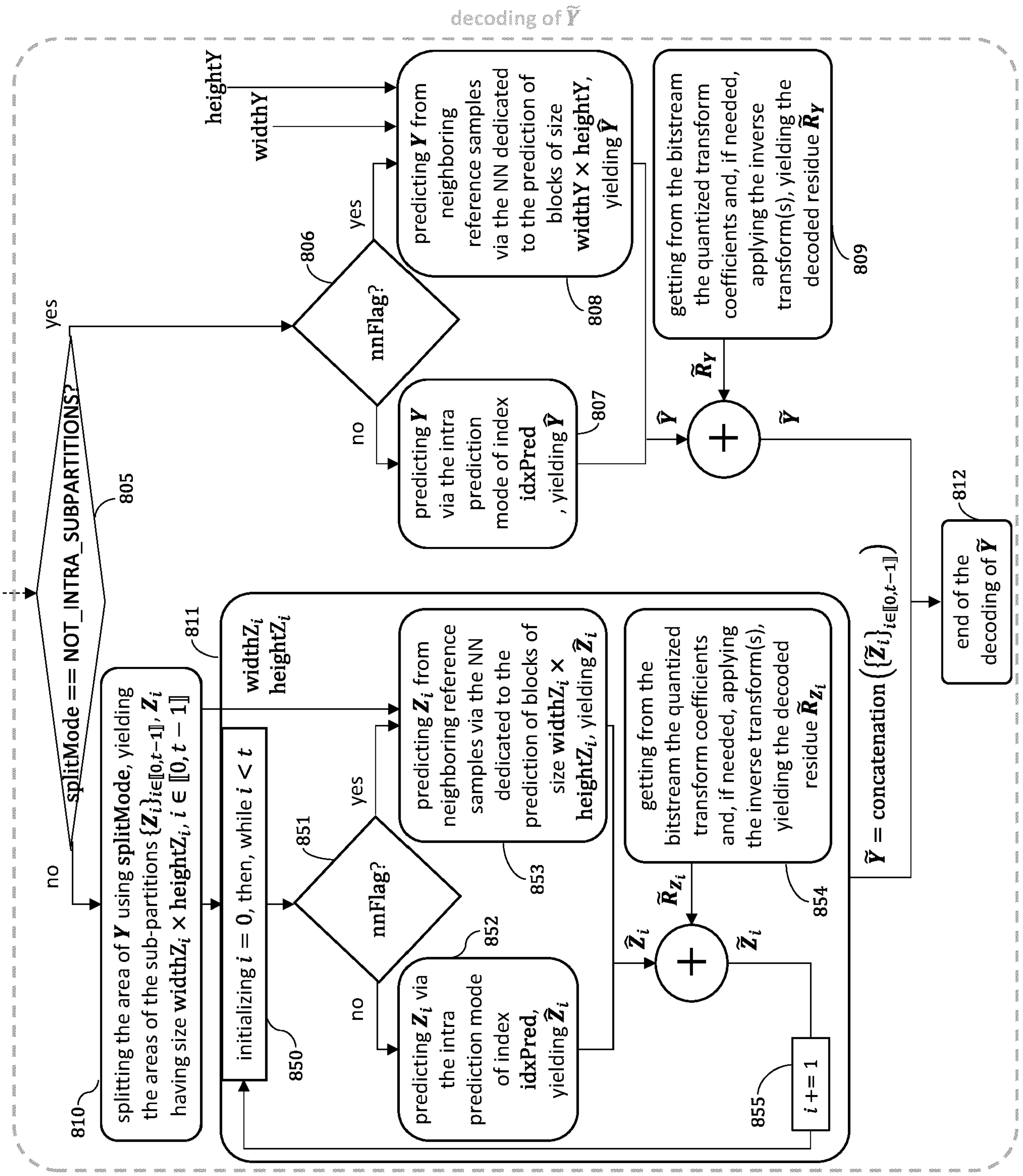
decoding of $\tilde{Y}$
splitMode == NOT_INTRA_SUBPARTITIONS?
805
yes
no
nnFlag?
806
yes
no
heightY
widthY
predicting $Y$ from neighboring reference samples via the NN dedicated to the prediction of blocks of size widthY × heightY, yielding $\hat{Y}$
808
predicting $Y$ via the intra prediction mode of index idxPred, yielding $\hat{Y}$
807
getting from the bitstream the quantized transform coefficients and, if needed, applying the inverse transform(s), yielding the decoded residue $\tilde{R}_Y$
809
$\tilde{R}_Y$
$\hat{Y}$
$\tilde{Y}$
810
splitting the area of $Y$ using splitMode, yielding the areas of the sub-partitions $\{Z_i\}_{i\in[\![0,t-1]\!]}$, $Z_i$ having size widthZ$_i$ × heightZ$_i$, $i \in [\![0, t-1]\!]$
811
widthZ$_i$
heightZ$_i$
initializing $i = 0$, then, while $i < t$
850
nnFlag?
851
yes
no
predicting $Z_i$ from neighboring reference samples via the NN dedicated to the prediction of blocks of size widthZ$_i$ × heightZ$_i$, yielding $\hat{Z}_i$
853
predicting $Z_i$ via the intra prediction mode of index idxPred, yielding $\hat{Z}_i$
852
getting from the bitstream the quantized transform coefficients and, if needed, applying the inverse transform(s), yielding the decoded residue $\tilde{R}_{Z_i}$
854
$\tilde{R}_{Z_i}$
$\hat{Z}_i$
$\tilde{Z}_i$
$i$ += 1
855
$\tilde{Y}$ = concatenation$\left(\{\tilde{Z}_i\}_{i\in[\![0,t-1]\!]}\right)$
end of the decoding of $\tilde{Y}$
812

FIG. 8B

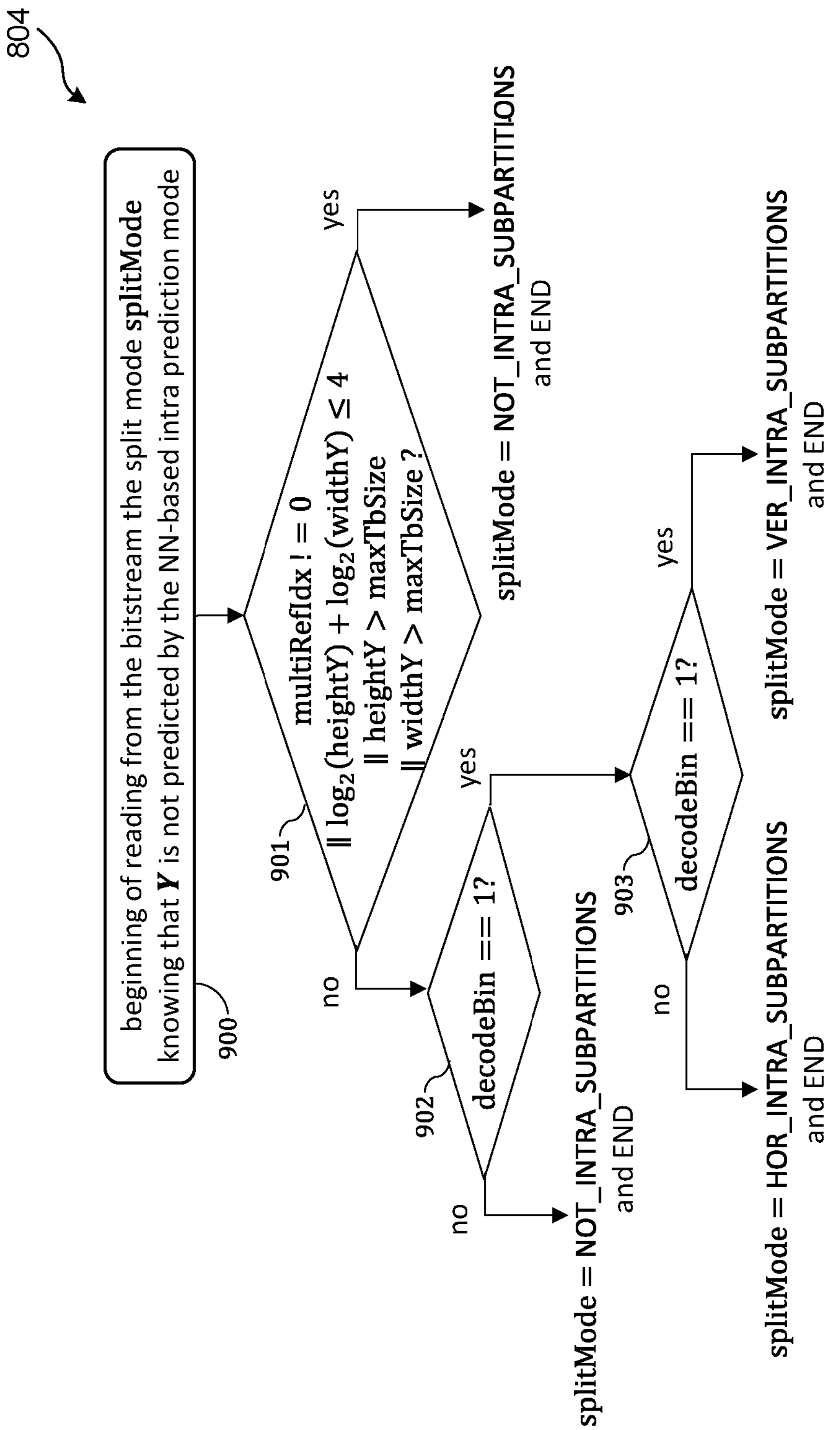
804
900
beginning of reading from the bitstream the split mode splitMode knowing that Y is not predicted by the NN-based intra prediction mode
901
multiRefIdx ! = 0
|| $\log_2$(heightY) + $\log_2$(widthY) ≤ 4
|| heightY > maxTbSize
|| widthY > maxTbSize ?
yes
splitMode = NOT_INTRA_SUBPARTITIONS
and END
no
902
decodeBin == 1?
no
splitMode = NOT_INTRA_SUBPARTITIONS
and END
yes
903
decodeBin == 1?
yes
splitMode = VER_INTRA_SUBPARTITIONS
and END
no
splitMode = HOR_INTRA_SUBPARTITIONS
and END

FIG. 9

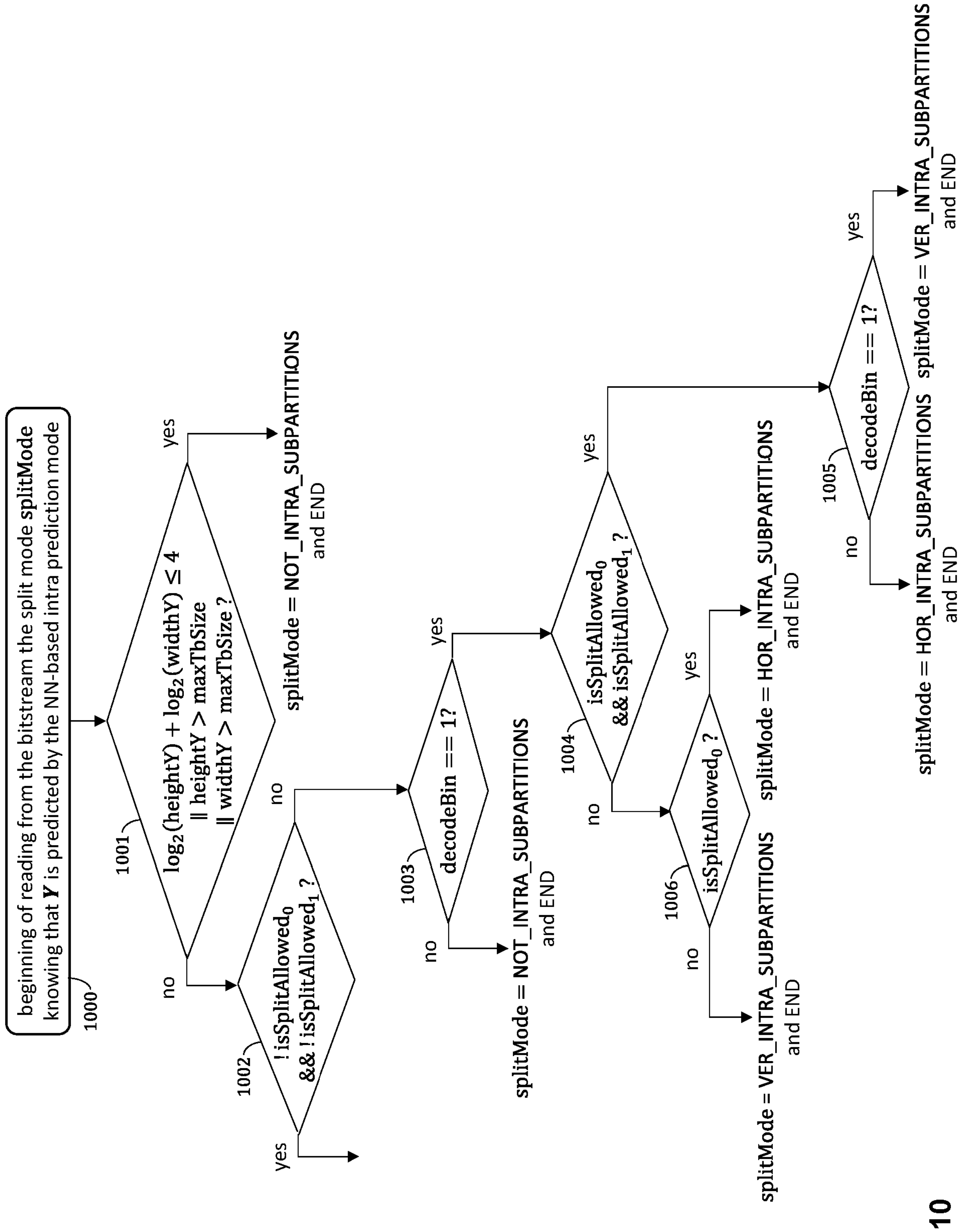
beginning of reading from the bitstream the split mode splitMode knowing that $\boldsymbol{Y}$ is predicted by the NN-based intra prediction mode
1000
1001
$\log_2(\text{heightY}) + \log_2(\text{widthY}) \leq 4$ ‖ heightY > maxTbSize ‖ widthY > maxTbSize ?
yes
no
splitMode = NOT_INTRA_SUBPARTITIONS and END
1002
! $\text{isSplitAllowed}_0$ && ! $\text{isSplitAllowed}_1$ ?
yes
no
1003
decodeBin == 1?
no
yes
splitMode = NOT_INTRA_SUBPARTITIONS and END
1004
$\text{isSplitAllowed}_0$ && $\text{isSplitAllowed}_1$ ?
yes
no
1005
decodeBin == 1?
yes
no
splitMode = VER_INTRA_SUBPARTITIONS and END
splitMode = HOR_INTRA_SUBPARTITIONS and END
1006
$\text{isSplitAllowed}_0$ ?
yes
no
splitMode = HOR_INTRA_SUBPARTITIONS and END
splitMode = VER_INTRA_SUBPARTITIONS and END

FIG. 10

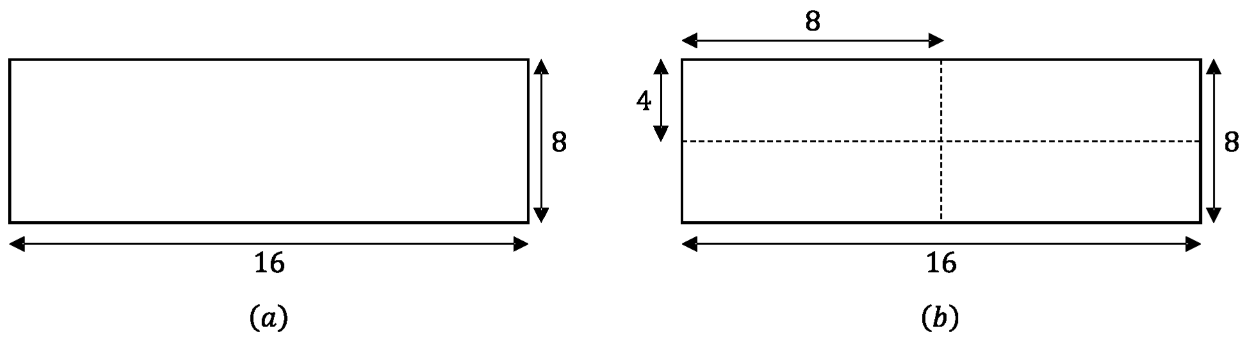


FIG. 11

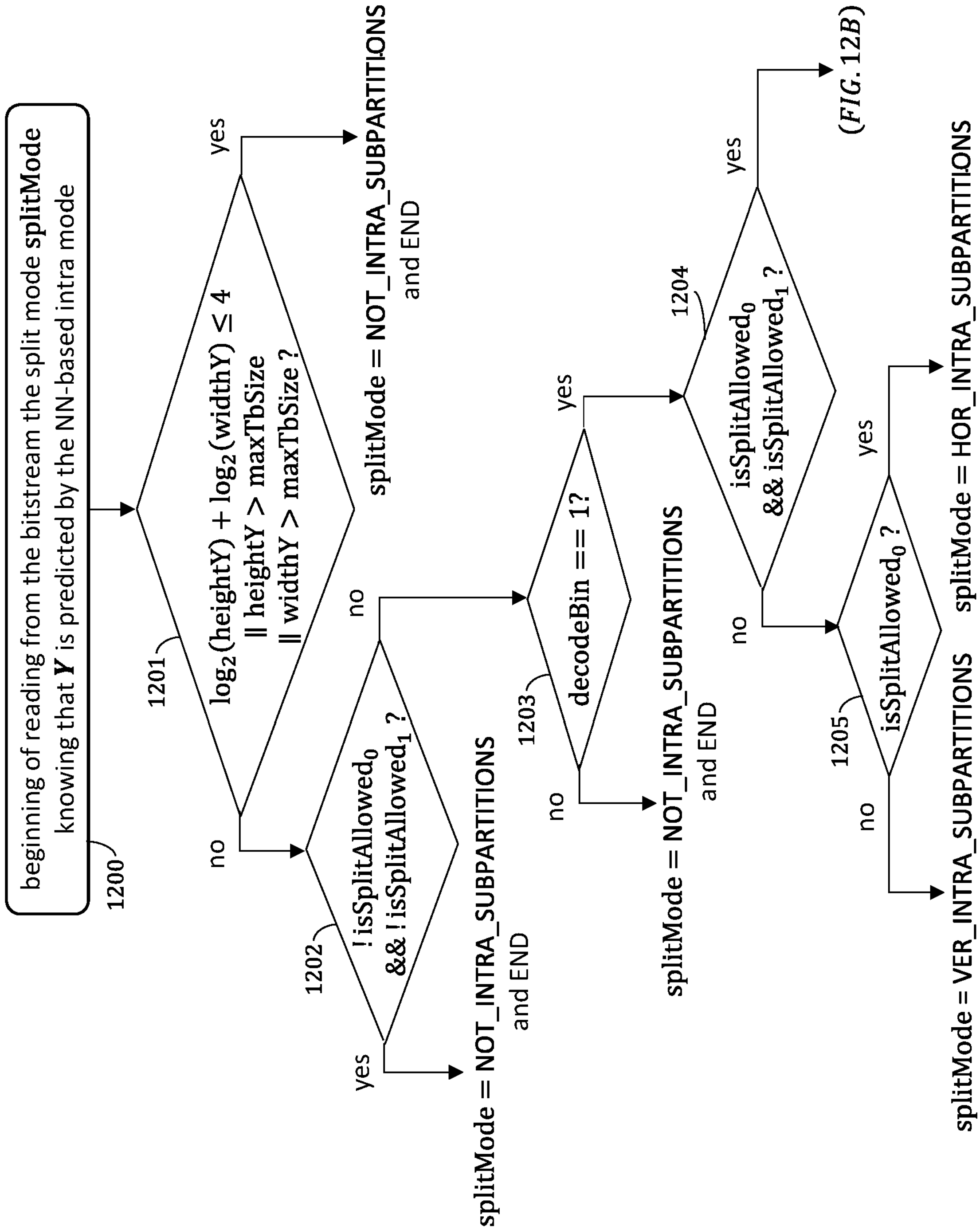
beginning of reading from the bitstream the split mode splitMode knowing that Y is predicted by the NN-based intra mode
1200
1201
log2(heightY) + log2(widthY) ≤ 4
|| heightY > maxTbSize
|| widthY > maxTbSize ?
yes
no
splitMode = NOT_INTRA_SUBPARTITIONS and END
1202
! isSplitAllowed0
&& ! isSplitAllowed1 ?
yes
no
splitMode = NOT_INTRA_SUBPARTITIONS and END
1203
decodeBin == 1?
yes
no
splitMode = NOT_INTRA_SUBPARTITIONS and END
1204
isSplitAllowed0
&& isSplitAllowed1 ?
yes
no
(FIG. 12B)
1205
isSplitAllowed0 ?
yes
no
splitMode = HOR_INTRA_SUBPARTITIONS and END
splitMode = VER_INTRA_SUBPARTITIONS and END

FIG. 12A

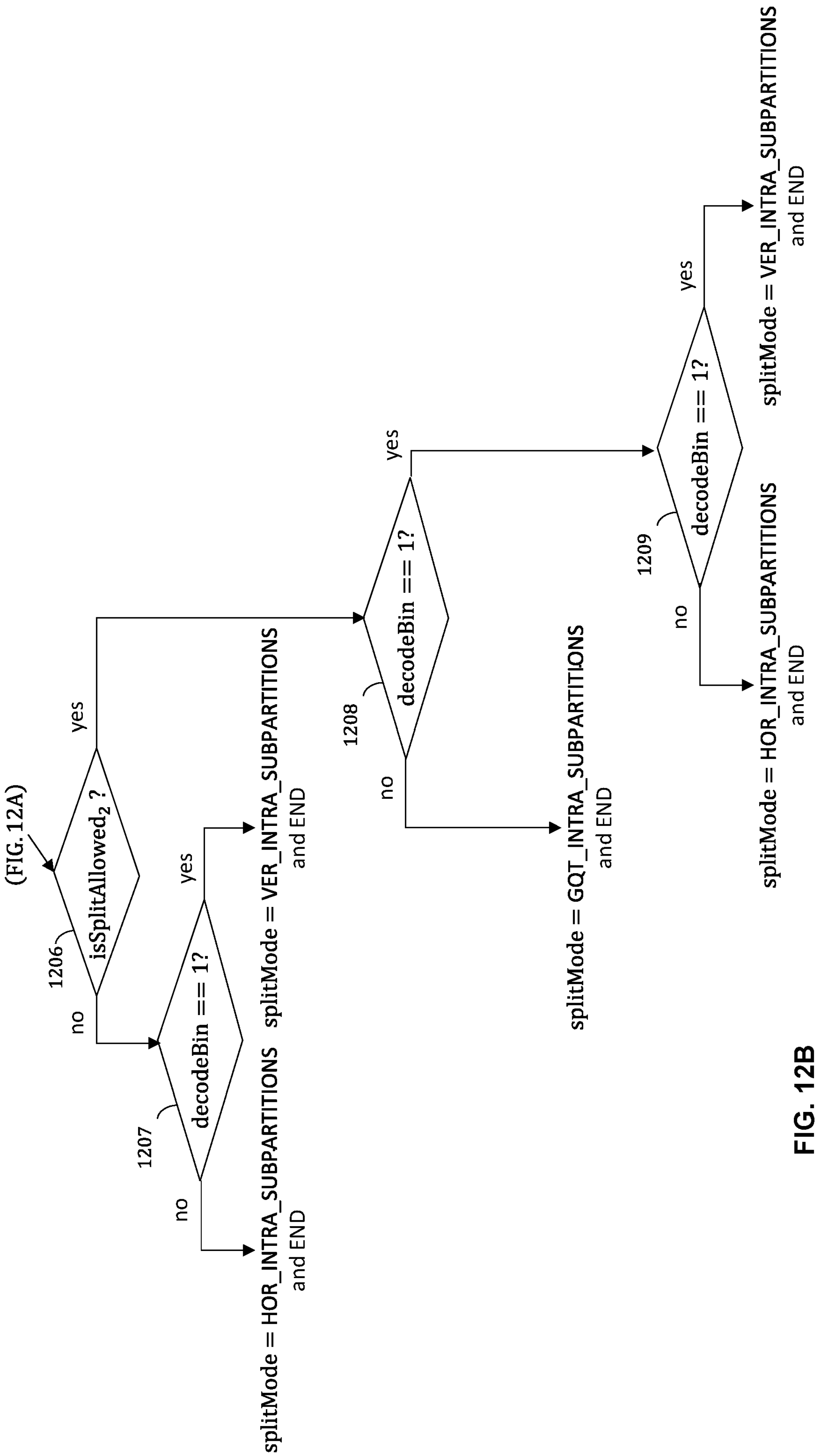
(FIG. 12A)
1206
isSplitAllowed$_2$ ?
no
yes
1207
decodeBin == 1?
no
yes
splitMode = HOR_INTRA_SUBPARTITIONS and END
splitMode = VER_INTRA_SUBPARTITIONS and END
1208
decodeBin == 1?
no
yes
splitMode = GQT_INTRA_SUBPARTITIONS and END
1209
decodeBin == 1?
no
yes
splitMode = HOR_INTRA_SUBPARTITIONS and END
splitMode = VER_INTRA_SUBPARTITIONS and END

FIG. 12B

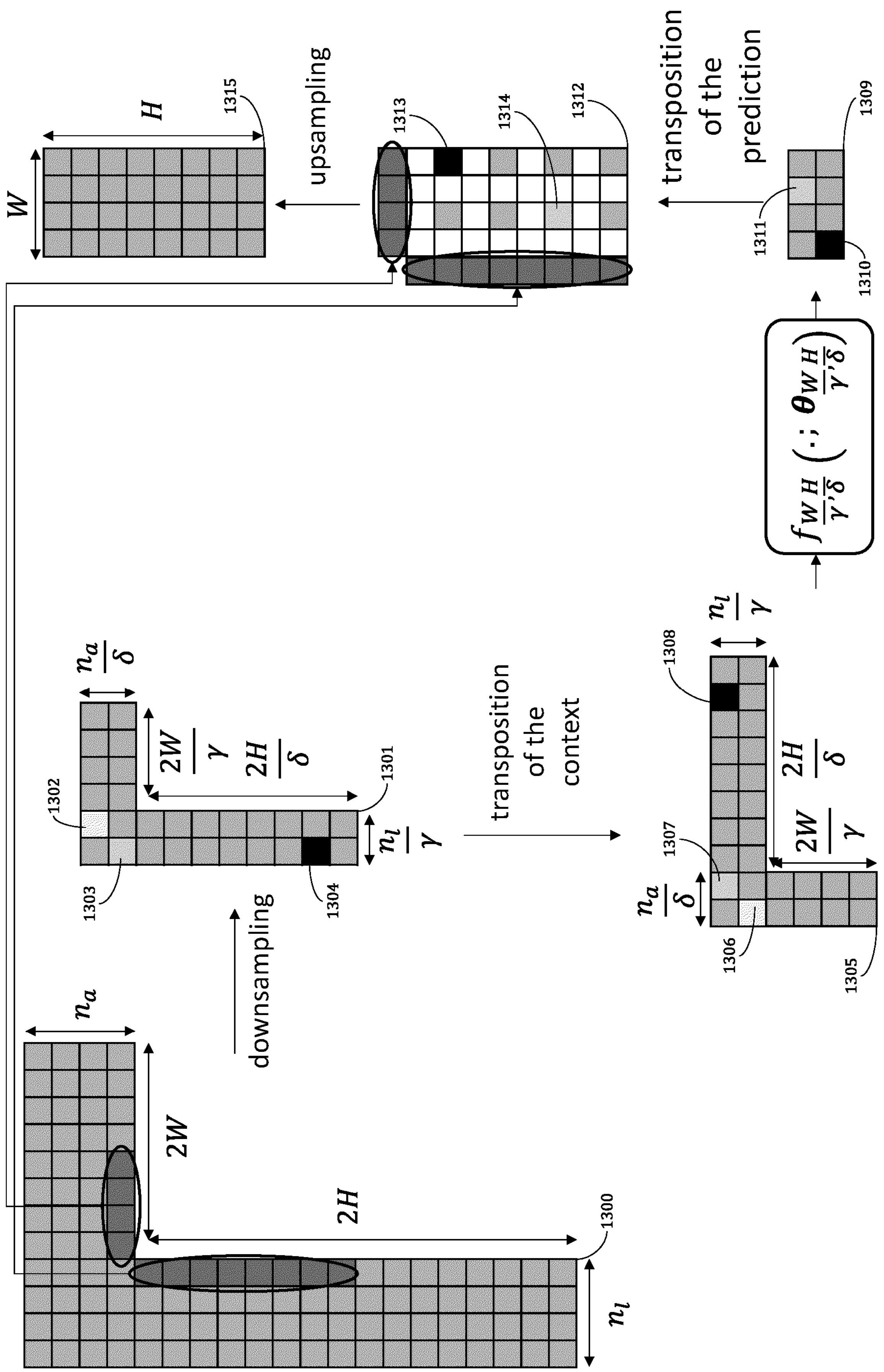
1300
1301
1302
1303
1304
1305
1306
1307
1308
1309
1310
1311
1312
1313
1314
1315
downsampling
upsampling
transposition of the context
transposition of the prediction
$n_a$
$n_l$
$2W$
$2H$
$W$
$H$
$\frac{n_a}{\delta}$
$\frac{n_l}{\gamma}$
$\frac{2W}{\gamma}$
$\frac{2H}{\delta}$
$f_{\frac{W}{\gamma},\frac{H}{\delta}}\left(\cdot;\boldsymbol{\theta}_{\frac{W}{\gamma},\frac{H}{\delta}}\right)$

FIG. 13

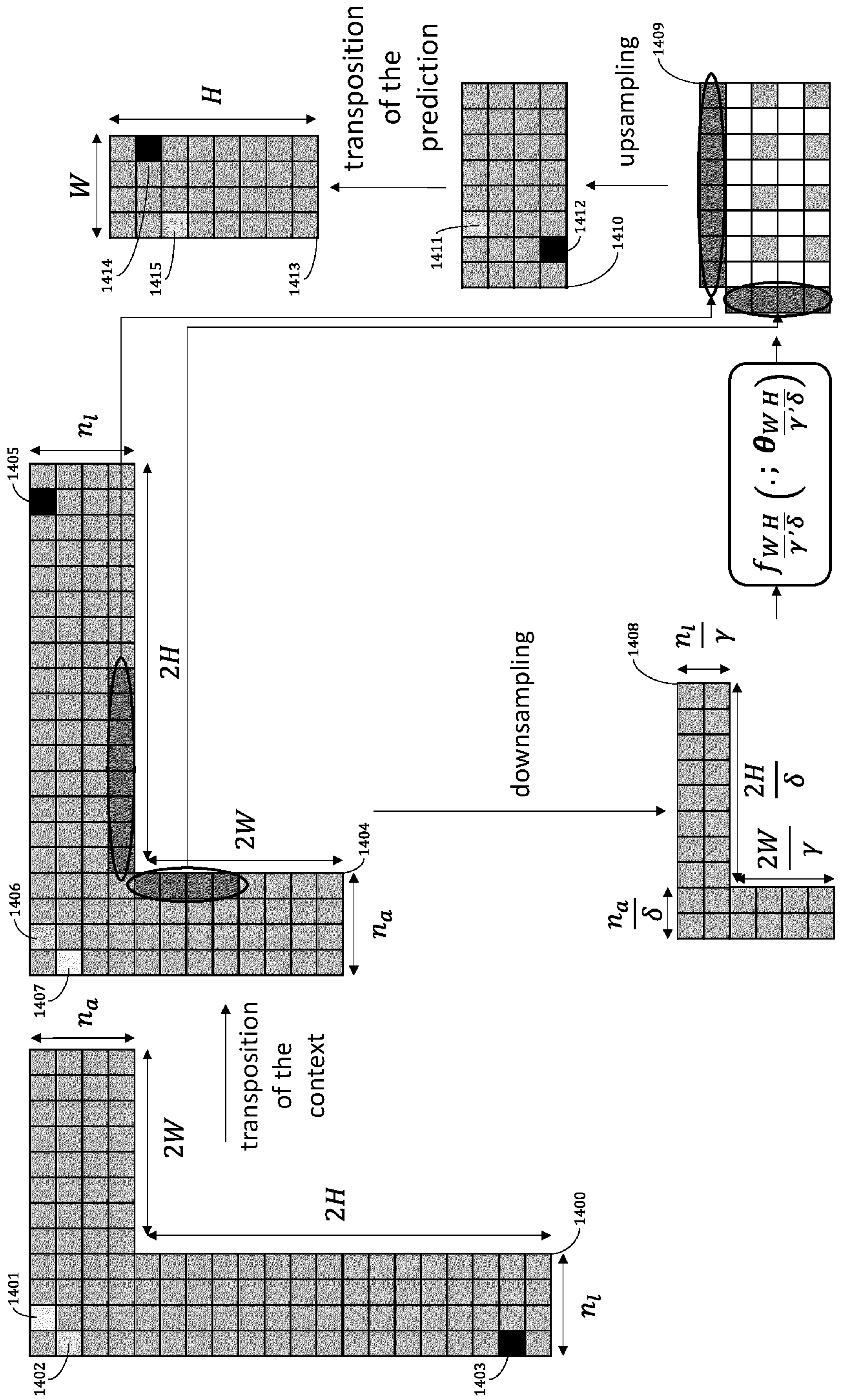
transposition
of the
prediction
upsampling
transposition
of the
context
downsampling
$W$
$H$
$2W$
$2H$
$n_a$
$n_l$
$\frac{n_l}{\gamma}$
$\frac{n_a}{\delta}$
$\frac{2W}{\gamma}$
$\frac{2H}{\delta}$
$f_{\frac{W}{\gamma},\frac{H}{\delta}}\left(\cdot;\boldsymbol{\theta}_{\frac{W}{\gamma},\frac{H}{\delta}}\right)$
1400
1401
1402
1403
1404
1405
1406
1407
1408
1409
1410
1411
1412
1413
1414
1415

FIG. 14

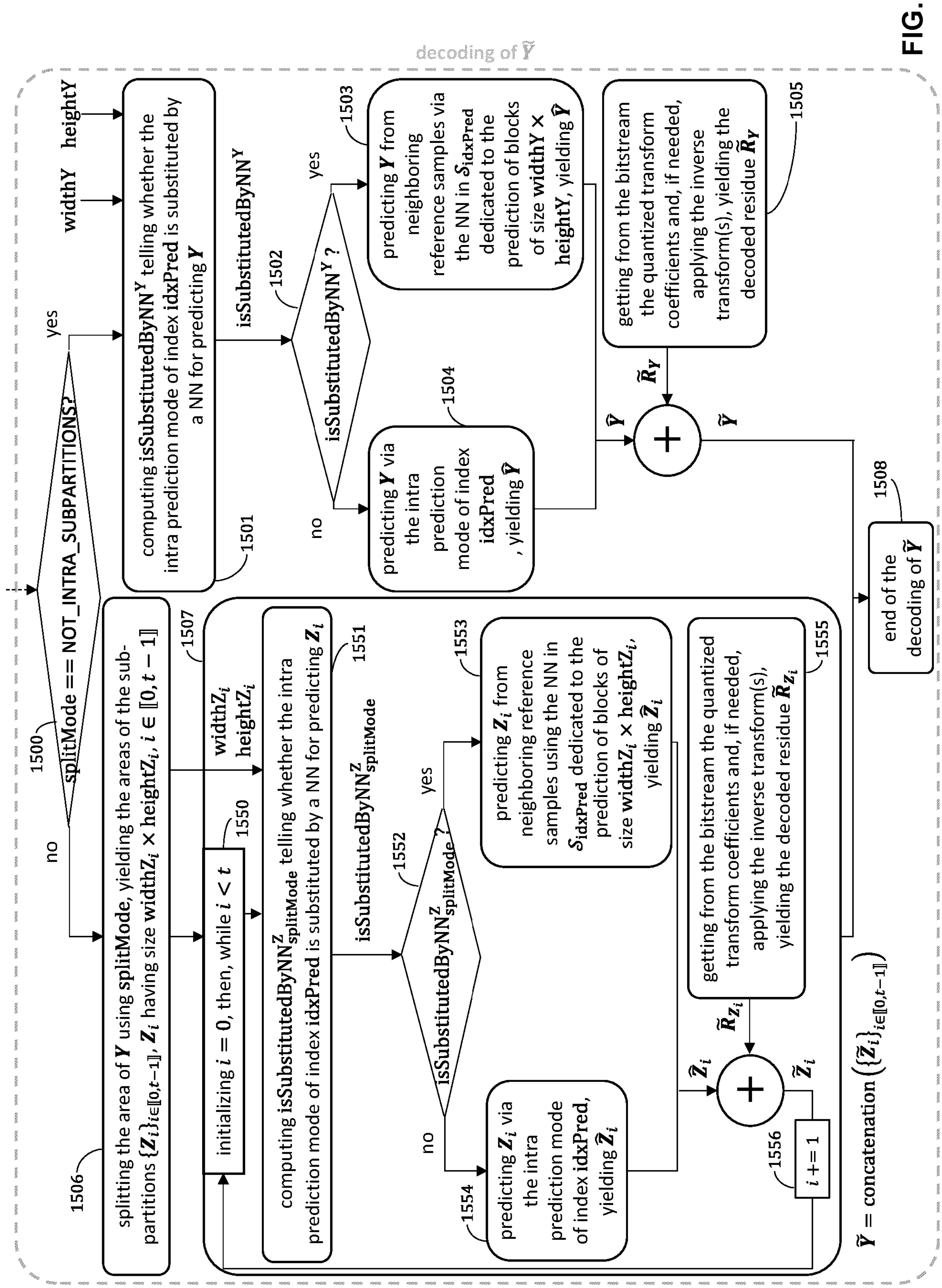

decoding of $\tilde{Y}$
widthY heightY
1500
splitMode == NOT_INTRA_SUBPARTIONS?
yes
no
1501
computing isSubstitutedByNN$^Y$ telling whether the intra prediction mode of index idxPred is substituted by a NN for predicting $Y$
isSubstitutedByNN$^Y$
1502
isSubstitutedByNN$^Y$ ?
yes
no
1503
predicting $Y$ from neighboring reference samples via the NN in $\mathcal{S}_{idxPred}$ dedicated to the prediction of blocks of size widthY × heightY, yielding $\hat{Y}$
1504
predicting $Y$ via the intra prediction mode of index idxPred , yielding $\hat{Y}$
1505
getting from the bitstream the quantized transform coefficients and, if needed, applying the inverse transform(s), yielding the decoded residue $\tilde{R}_Y$
$\hat{Y}$
$\tilde{R}_Y$
$\tilde{Y}$
1508
end of the decoding of $\tilde{Y}$
1506
splitting the area of $Y$ using splitMode, yielding the areas of the sub-partitions $\{Z_i\}_{i\in[\![0,t-1]\!]}$, $Z_i$ having size width$Z_i$ × height$Z_i$, $i \in [\![0, t-1]\!]$
1507
width$Z_i$
height$Z_i$
1550
initializing $i = 0$, then, while $i < t$
1551
computing isSubstitutedByNN$^Z_{splitMode}$ telling whether the intra prediction mode of index idxPred is substituted by a NN for predicting $Z_i$
isSubstitutedByNN$^Z_{splitMode}$
1552
isSubstitutedByNN$^Z_{splitMode}$ ?
yes
no
1553
predicting $Z_i$ from neighboring reference samples using the NN in $\mathcal{S}_{idxPred}$ dedicated to the prediction of blocks of size width$Z_i$ × height$Z_i$, yielding $\hat{Z}_i$
1554
predicting $Z_i$ via the intra prediction mode of index idxPred, yielding $\hat{Z}_i$
1555
getting from the bitstream the quantized transform coefficients and, if needed, applying the inverse transform(s), yielding the decoded residue $\tilde{R}_{Z_i}$
$\hat{Z}_i$
$\tilde{R}_{Z_i}$
$\tilde{Z}_i$
1556
$i += 1$
$\tilde{Y}$ = concatenation$\left(\{\tilde{Z}_i\}_{i\in[\![0,t-1]\!]}\right)$


FIG. 15

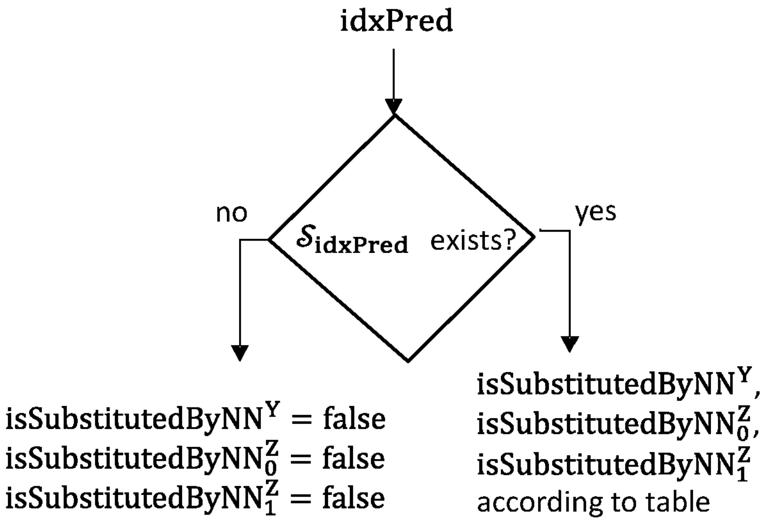


FIG. 16

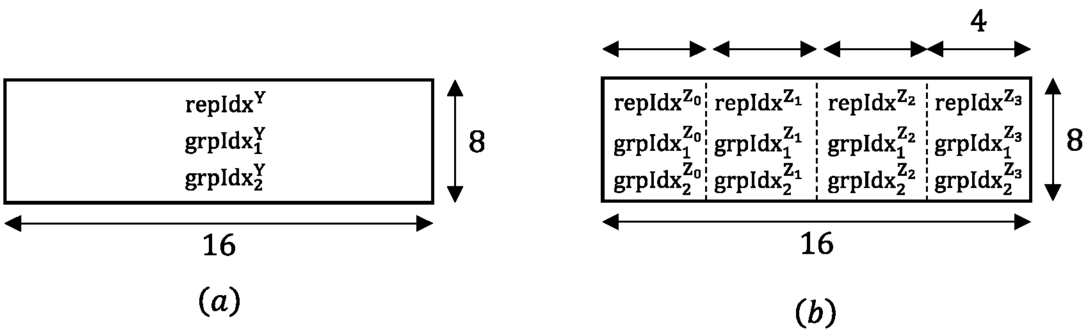


FIG. 17

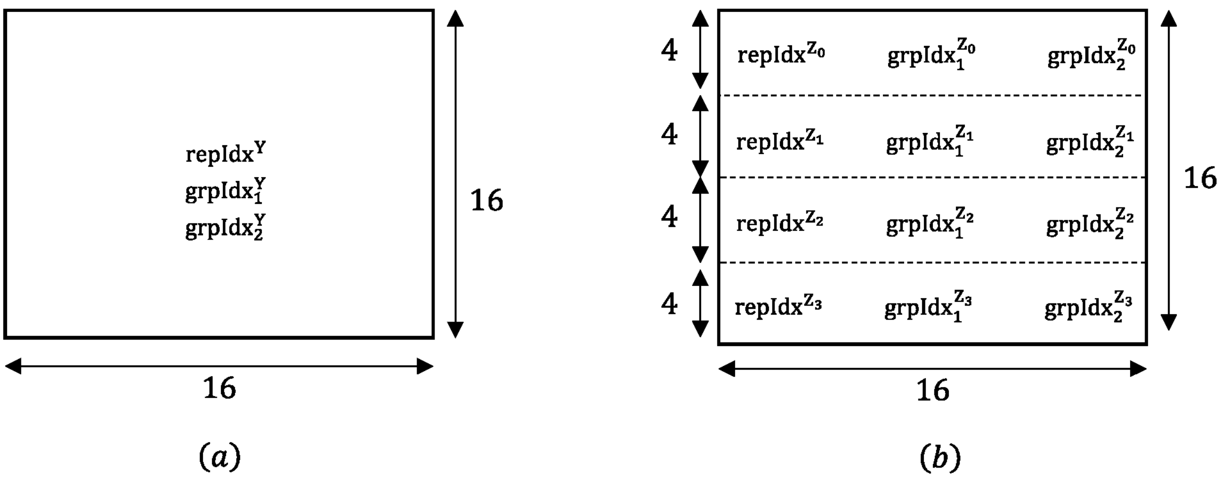


FIG. 18

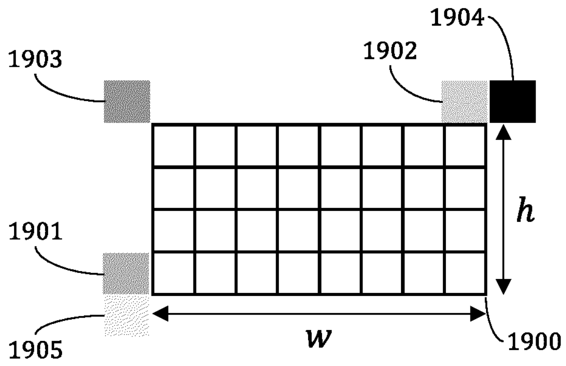
1904
1903
1902
1901
h
1905
w
1900

FIG. 19

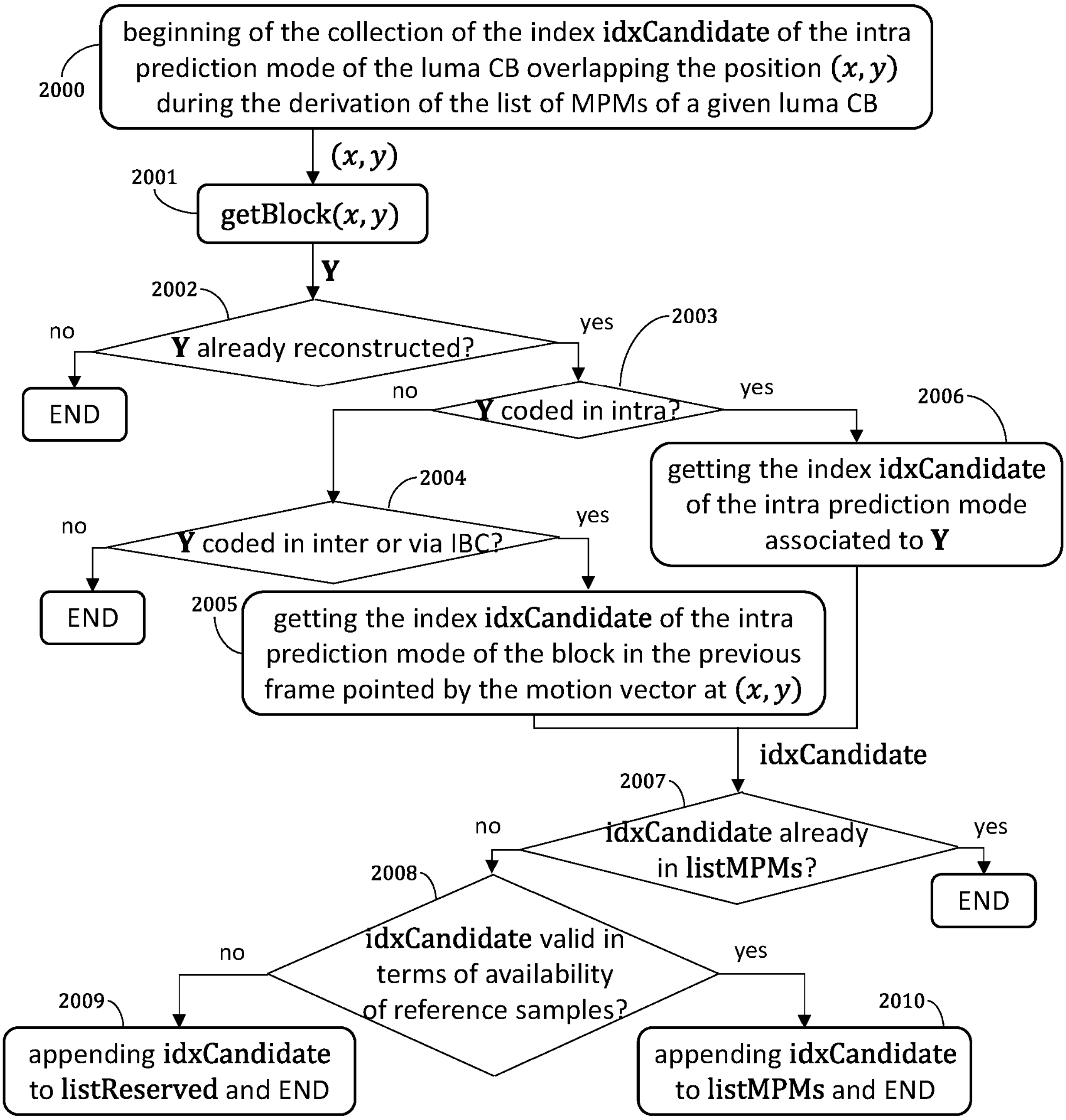
beginning of the collection of the index idxCandidate of the intra prediction mode of the luma CB overlapping the position (x, y) during the derivation of the list of MPMs of a given luma CB
2000
(x, y)
2001
getBlock(x, y)
Y
2002
Y already reconstructed?
no
END
yes
2003
Y coded in intra?
no
yes
2006
getting the index idxCandidate of the intra prediction mode associated to Y
2004
Y coded in inter or via IBC?
no
END
yes
2005
getting the index idxCandidate of the intra prediction mode of the block in the previous frame pointed by the motion vector at (x, y)
idxCandidate
2007
idxCandidate already in listMPMs?
no
yes
END
2008
idxCandidate valid in terms of availability of reference samples?
no
yes
2009
appending idxCandidate to listReserved and END
2010
appending idxCandidate to listMPMs and END

FIG. 20

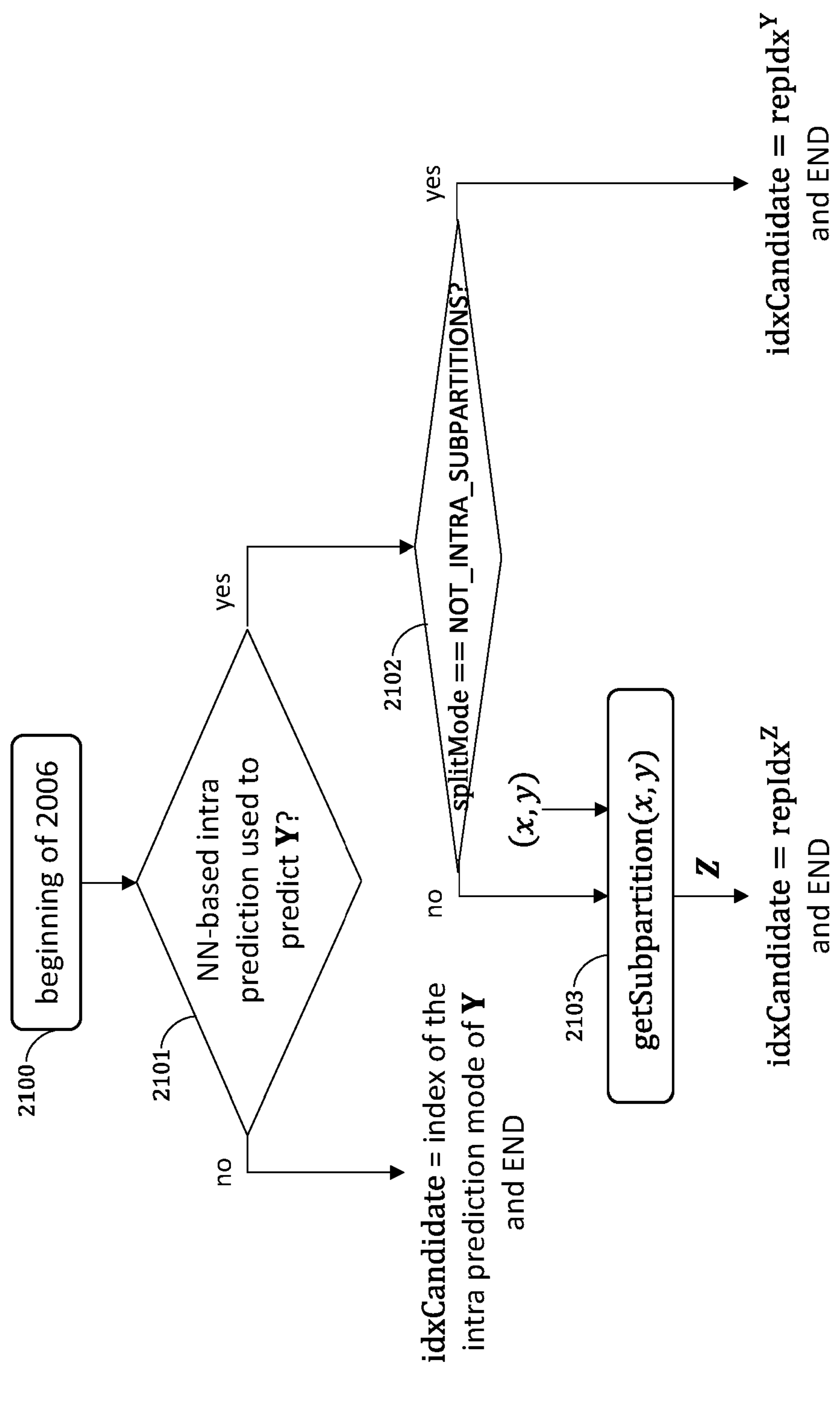
2100
beginning of 2006
2101
NN-based intra prediction used to predict Y?
no
yes
idxCandidate = index of the intra prediction mode of Y and END
2102
splitMode == NOT_INTRA_SUBPARTITIONS?
no
yes
idxCandidate = repIdx^Y and END
(x, y)
2103
getSubpartition(x, y)
Z
idxCandidate = repIdx^Z and END

FIG. 21

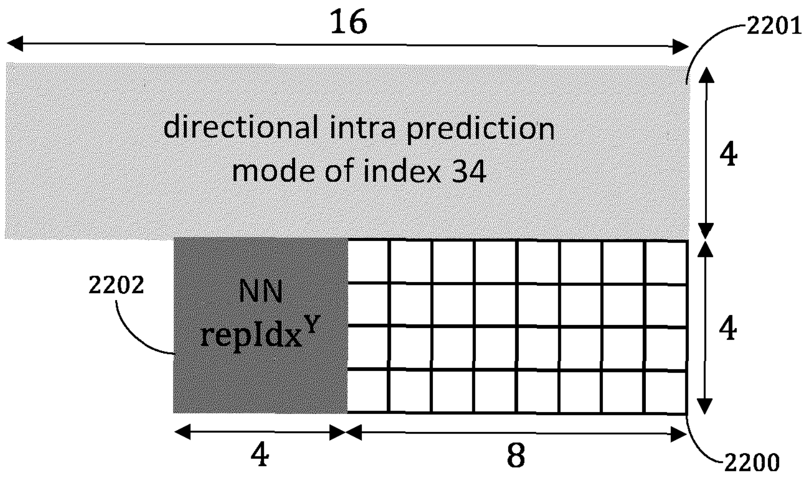
16
2201
directional intra prediction
mode of index 34
4
2202
NN
repIdx^Y
4
4
8
2200

FIG. 22

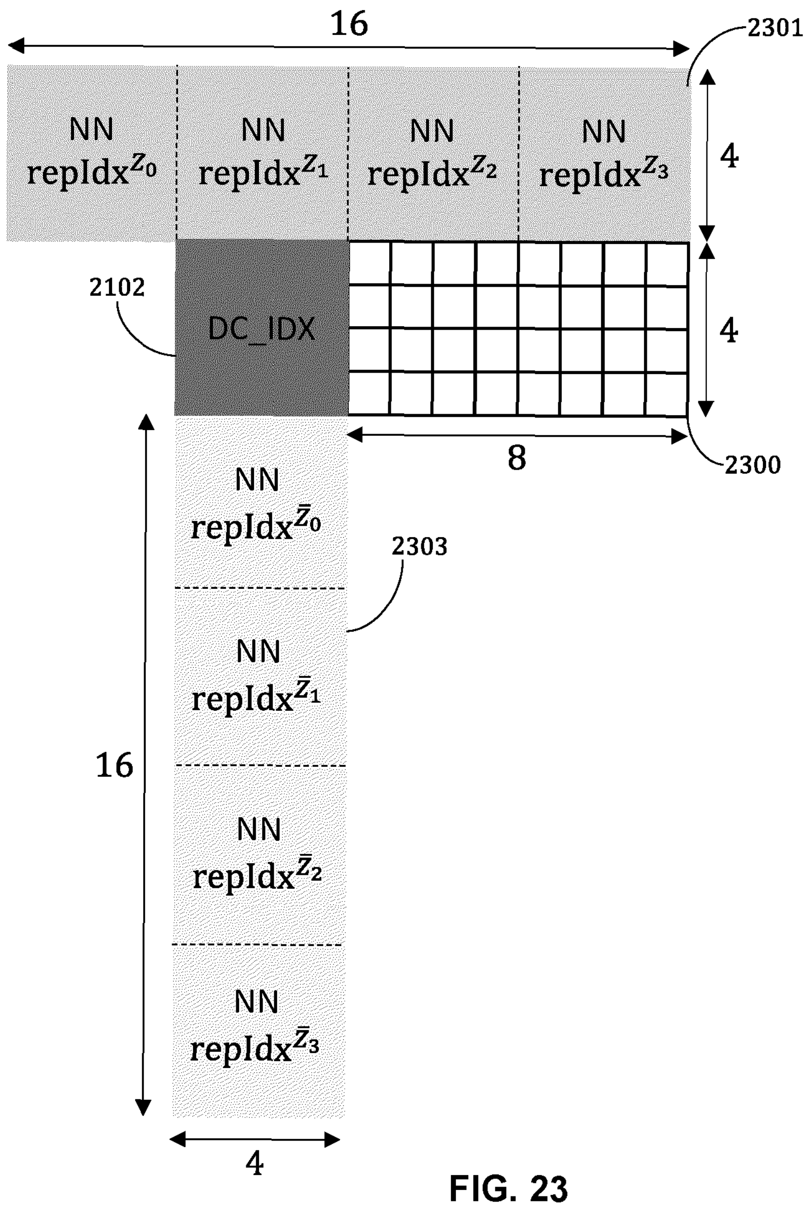
16
2301
NN
repIdx^Z0
NN
repIdx^Z1
NN
repIdx^Z2
NN
repIdx^Z3
4
2102
DC_IDX
4
8
2300
NN
repIdx^Z̄0
2303
NN
repIdx^Z̄1
16
NN
repIdx^Z̄2
NN
repIdx^Z̄3
4

FIG. 23

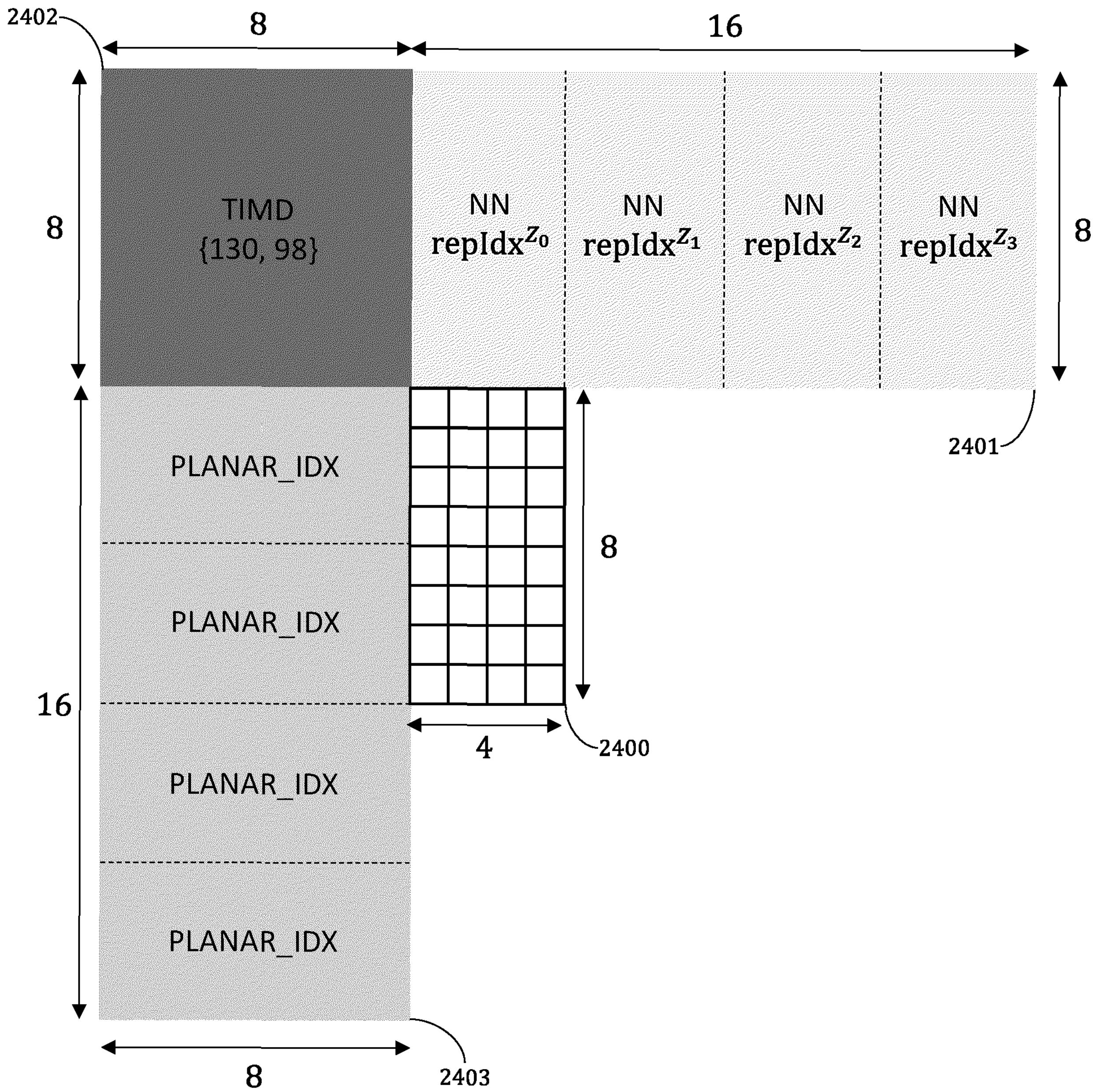
2402
8
16
8
TIMD
{130, 98}
NN
repIdx$^{Z_0}$
NN
repIdx$^{Z_1}$
NN
repIdx$^{Z_2}$
NN
repIdx$^{Z_3}$
8
2401
PLANAR_IDX
PLANAR_IDX
PLANAR_IDX
PLANAR_IDX
16
8
4
2400
8
2403

FIG. 24

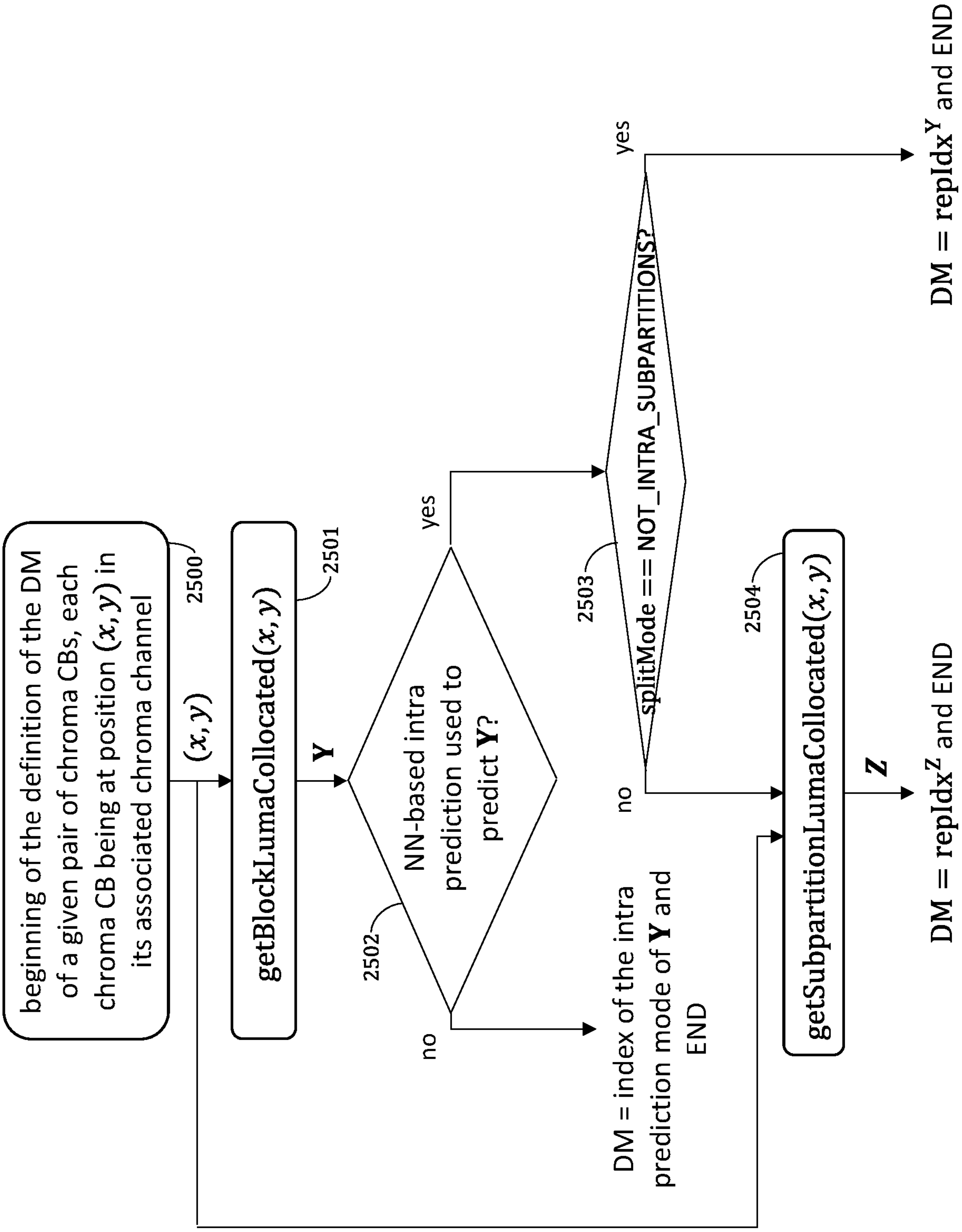
beginning of the definition of the DM of a given pair of chroma CBs, each chroma CB being at position $(x, y)$ in its associated chroma channel
2500
$(x, y)$
getBlockLumaCollocated$(x, y)$
2501
$\mathbf{Y}$
NN-based intra prediction used to predict $\mathbf{Y}$?
2502
no
yes
DM = index of the intra prediction mode of $\mathbf{Y}$ and END
splitMode == NOT_INTRA_SUBPARTITIONS?
2503
yes
no
DM = $\mathbf{repIdx^Y}$ and END
getSubpartitionLumaCollocated$(x, y)$
2504
$\boldsymbol{Z}$
DM = $\mathbf{repIdx^Z}$ and END

FIG. 25

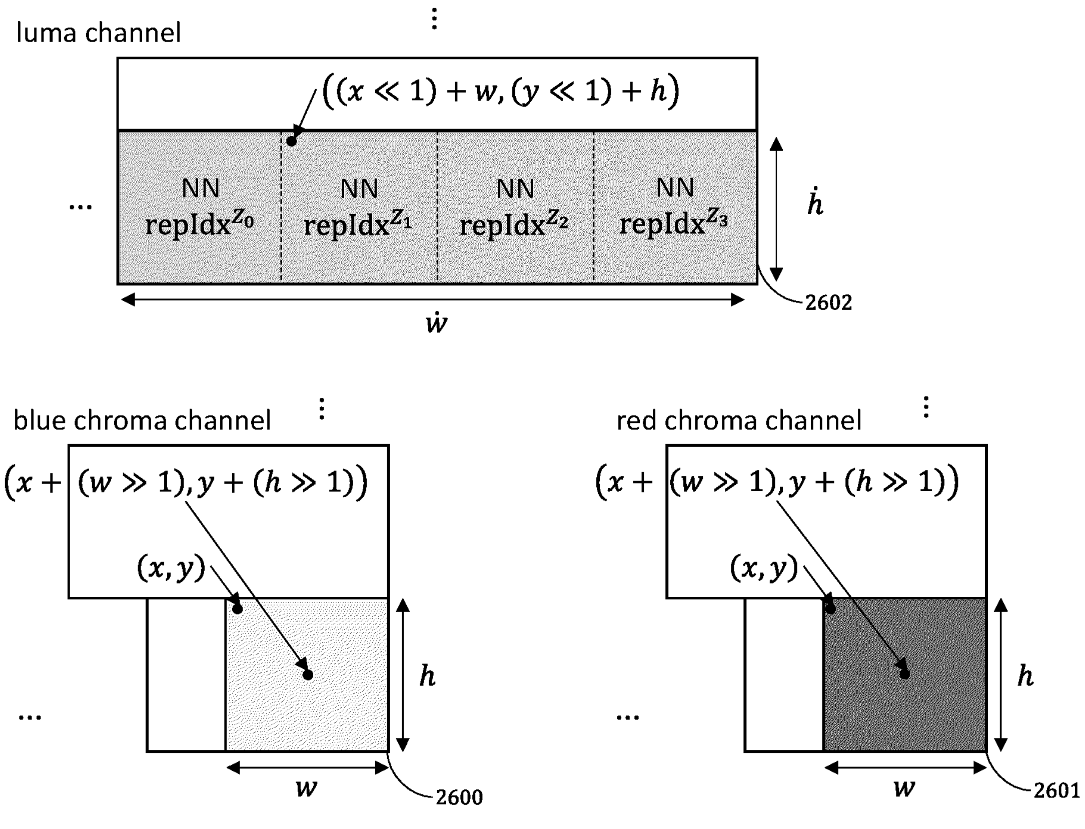
luma channel
((x ≪ 1) + w, (y ≪ 1) + h)
NN repIdx^Z0
NN repIdx^Z1
NN repIdx^Z2
NN repIdx^Z3
ḣ
ẇ
2602
blue chroma channel
(x + (w ≫ 1), y + (h ≫ 1))
(x, y)
h
w
2600
red chroma channel
(x + (w ≫ 1), y + (h ≫ 1))
(x, y)
h
w
2601

FIG. 26

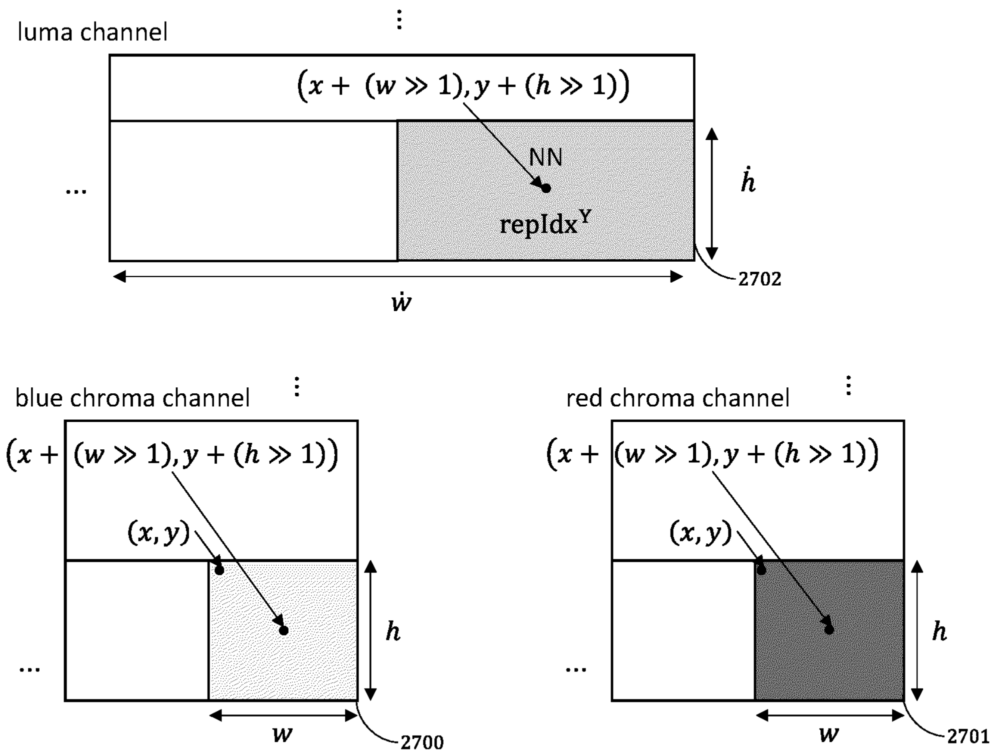
luma channel
(x + (w ≫ 1), y + (h ≫ 1))
NN
repIdx^Y
ḣ
ẇ
2702
blue chroma channel
(x + (w ≫ 1), y + (h ≫ 1))
(x, y)
h
w
2700
red chroma channel
(x + (w ≫ 1), y + (h ≫ 1))
(x, y)
h
w
2701

FIG. 27

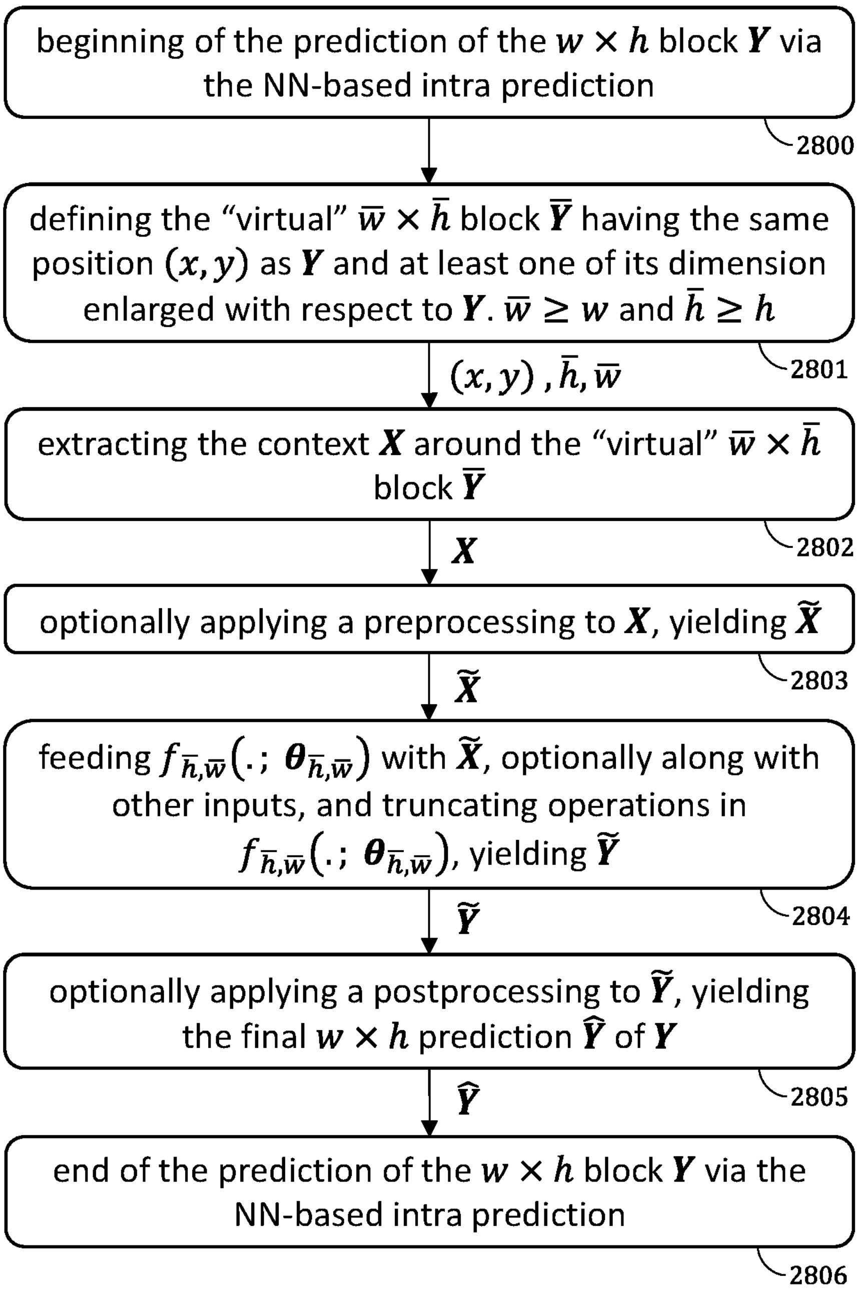
beginning of the prediction of the $w \times h$ block $\boldsymbol{Y}$ via the NN-based intra prediction
2800
defining the "virtual" $\bar{w} \times \bar{h}$ block $\bar{\boldsymbol{Y}}$ having the same position $(x, y)$ as $\boldsymbol{Y}$ and at least one of its dimension enlarged with respect to $\boldsymbol{Y}$. $\bar{w} \geq w$ and $\bar{h} \geq h$
2801
$(x, y)$ , $\bar{h}, \bar{w}$
extracting the context $\boldsymbol{X}$ around the "virtual" $\bar{w} \times \bar{h}$ block $\bar{\boldsymbol{Y}}$
2802
$\boldsymbol{X}$
optionally applying a preprocessing to $\boldsymbol{X}$, yielding $\widetilde{\boldsymbol{X}}$
2803
$\widetilde{\boldsymbol{X}}$
feeding $f_{\bar{h},\bar{w}}(.;\ \boldsymbol{\theta}_{\bar{h},\bar{w}})$ with $\widetilde{\boldsymbol{X}}$, optionally along with other inputs, and truncating operations in $f_{\bar{h},\bar{w}}(.;\ \boldsymbol{\theta}_{\bar{h},\bar{w}})$, yielding $\widetilde{\boldsymbol{Y}}$
2804
$\widetilde{\boldsymbol{Y}}$
optionally applying a postprocessing to $\widetilde{\boldsymbol{Y}}$, yielding the final $w \times h$ prediction $\widehat{\boldsymbol{Y}}$ of $\boldsymbol{Y}$
2805
$\widehat{\boldsymbol{Y}}$
end of the prediction of the $w \times h$ block $\boldsymbol{Y}$ via the NN-based intra prediction
2806

FIG. 28

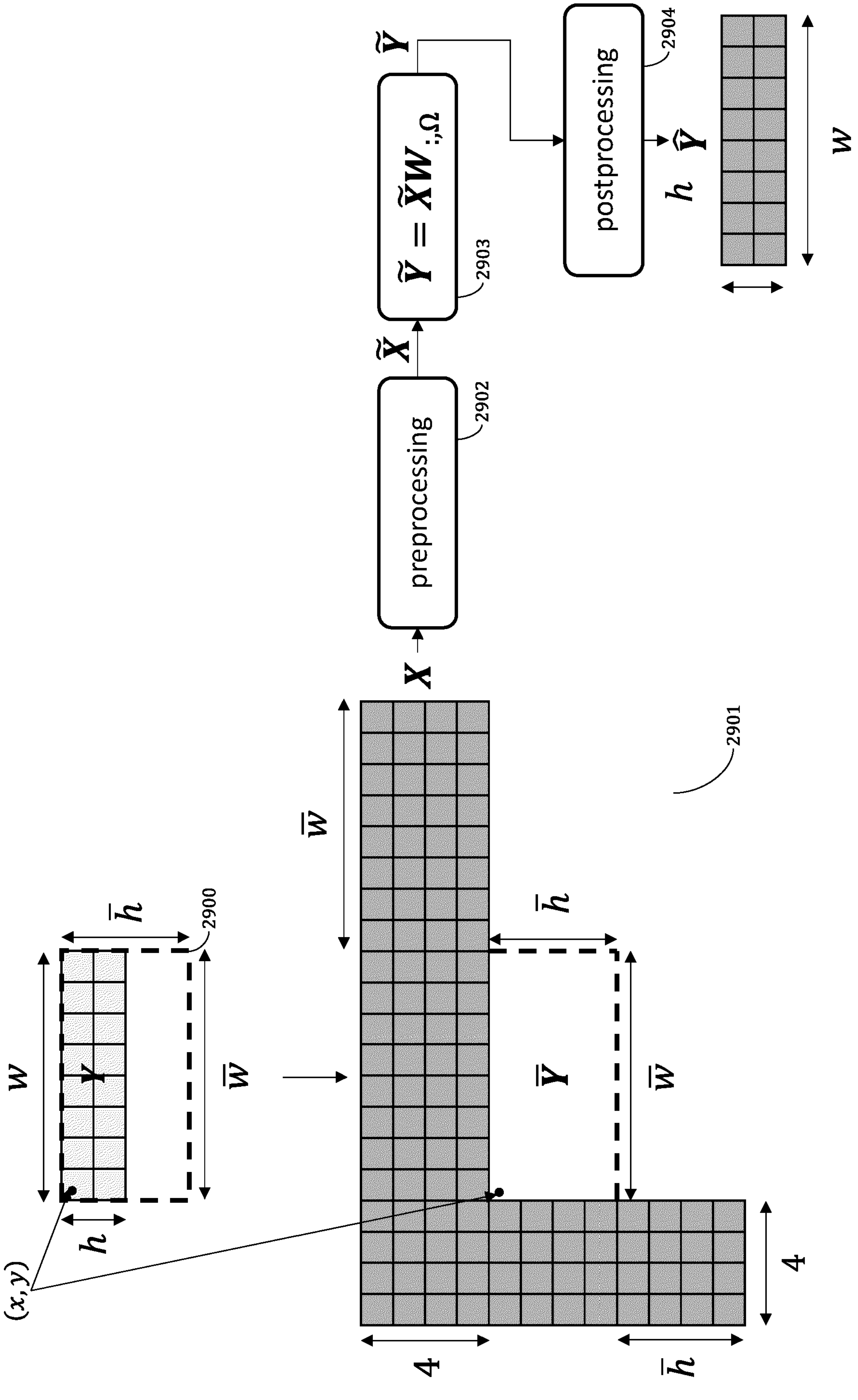


FIG. 29

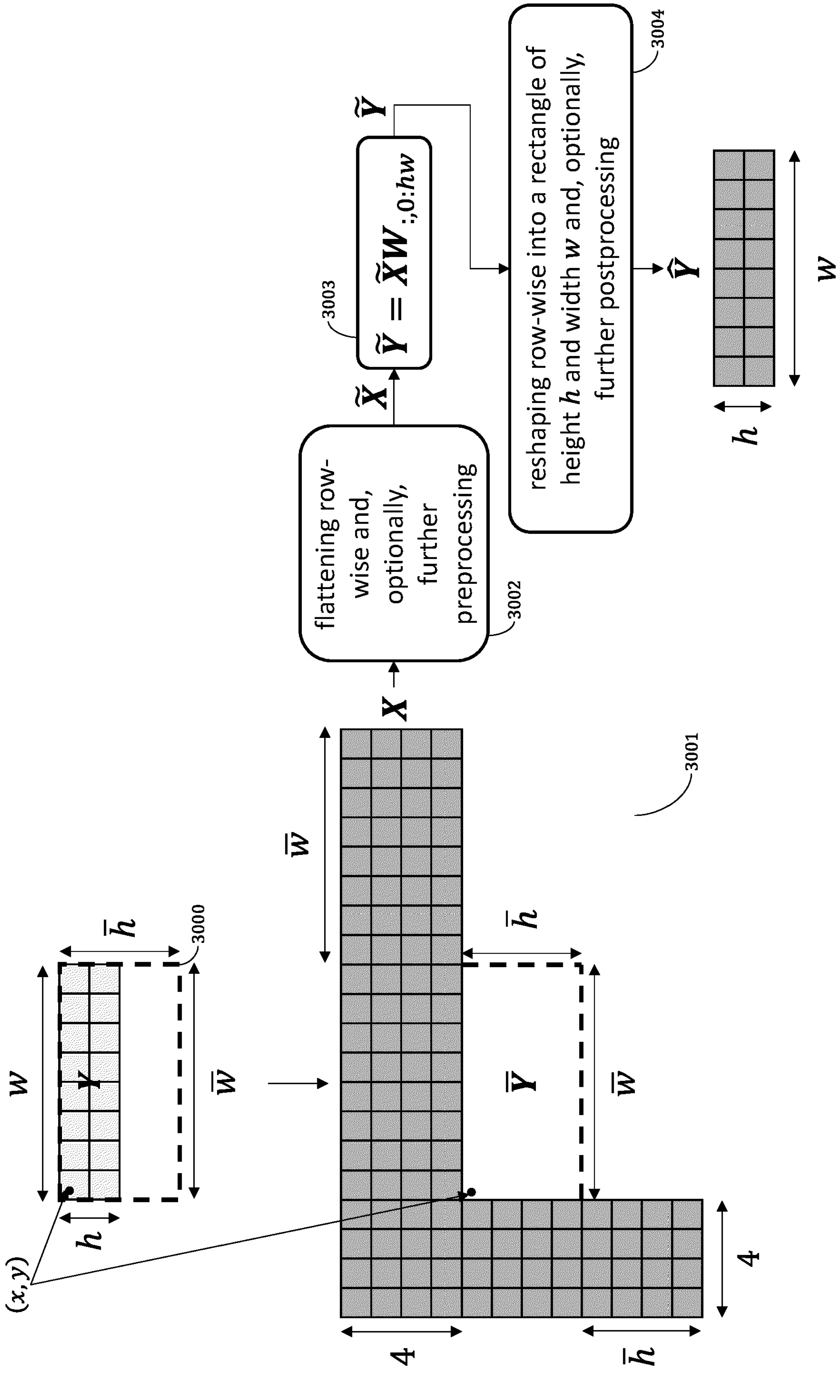
(x, y)
h
w
Y
h̄
w̄
3000
4
Ȳ
X
3001
flattening row-wise and, optionally, further preprocessing
3002
X̃
Ỹ = X̃W:,0:hw
3003
Ỹ
reshaping row-wise into a rectangle of height h and width w and, optionally, further postprocessing
3004
Ŷ

FIG. 30

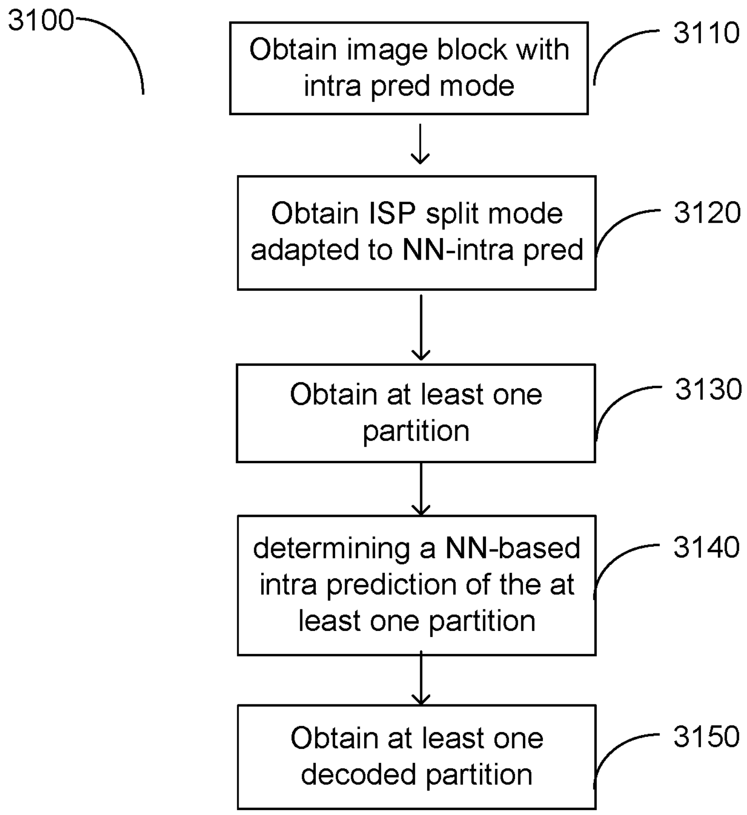
3100
Obtain image block with intra pred mode
3110
Obtain ISP split mode adapted to NN-intra pred
3120
Obtain at least one partition
3130
determining a NN-based intra prediction of the at least one partition
3140
Obtain at least one decoded partition
3150

FIG. 31

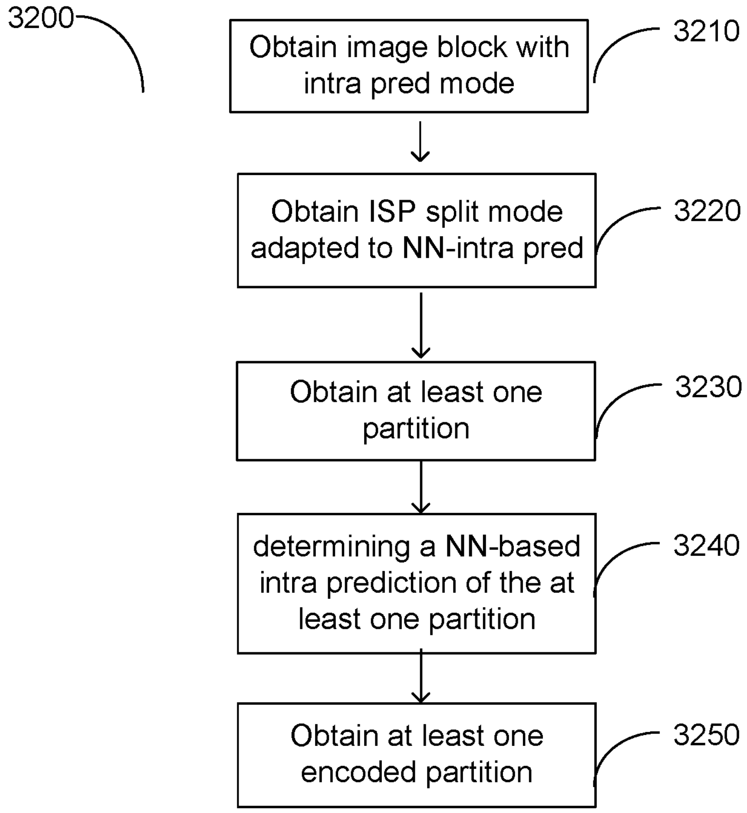
3200
Obtain image block with intra pred mode
3210
Obtain ISP split mode adapted to NN-intra pred
3220
Obtain at least one partition
3230
determining a NN-based intra prediction of the at least one partition
3240
Obtain at least one encoded partition
3250

FIG. 32

Europäisches Patentamt
European Patent Office
Office européen des brevets

# EUROPEAN SEARCH REPORT

Application Number
EP 24 30 5570

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/095387 A1 (DUMAS THIERRY [FR] ET AL) 30 March 2023 (2023-03-30) | 1-7, 9-11, 13-15 | INV. H04N19/11 H04N19/119 H04N19/176 H04N19/593 H04N19/70 |
| Y | * figures 17, 22, 25A, 27A * * paragraph [0058] * * paragraph [0076] - paragraph [0090] * * paragraph [0109] - paragraph [0115] * * paragraph [0133] - paragraph [0134] * ----- | 8,12 | |
| Y | WO 2022/200130 A1 (INTERDIGITAL VC HOLDINGS FRANCE SAS [FR]) 29 September 2022 (2022-09-29) * paragraph [0086] * ----- | 8 | |
| Y | WO 2020/221213 A1 (BEIJING BYTEDANCE NETWORK TECH CO LTD [CN]; BYTEDANCE INC [US]) 5 November 2020 (2020-11-05) * bullet point 9.d.iii.1 on page 31 * ----- | 12 | |

TECHNICAL FIELDS SEARCHED (IPC)

H04N

The present search report has been drawn up for all claims

1

| Place of search | Date of completion of the search | Examiner |
|---|---|---|
| Munich | 18 September 2024 | Regidor Arenales, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 30 5570

This annex lists the patent family members relating to the patent documents cited in the above-mentioned European search report. The members are as contained in the European Patent Office EDP file on
The European Patent Office is in no way liable for these particulars which are merely given for the purpose of information.

18-09-2024

| Patent document cited in search report | Publication date | Patent family member(s) | Publication date |
|---|---|---|---|
| US 2023095387 A1 | 30-03-2023 | CN 115104301 A | 23-09-2022 |
| | | EP 4107945 A1 | 28-12-2022 |
| | | KR 20220137964 A | 12-10-2022 |
| | | US 2023095387 A1 | 30-03-2023 |
| | | WO 2021165018 A1 | 26-08-2021 |
| WO 2022200130 A1 | 29-09-2022 | BR 112023019178 A2 | 17-10-2023 |
| | | CN 117546468 A | 09-02-2024 |
| | | EP 4315861 A1 | 07-02-2024 |
| | | KR 20230158506 A | 20-11-2023 |
| | | US 2024163443 A1 | 16-05-2024 |
| | | WO 2022200130 A1 | 29-09-2022 |
| WO 2020221213 A1 | 05-11-2020 | CN 113728631 A | 30-11-2021 |
| | | WO 2020221213 A1 | 05-11-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 4169249 A